# EUROPEAN PATENT APPLICATION

(11) **EP 4 692 688 A1**
(43) Date of publication of application: **11.02.2026**
(21) Application number: 24780049.3
(22) Date of filing: 22.03.2024
(51) Int. Cl.: F25B 49/02, C09K 5/04, F04B 49/10, F25B 1/00, H02M 7/48

(54) **CONTROL METHOD, CONTROL DEVICE, REFRIGERATION CYCLE DEVICE, AND PROGRAM**

(30) Priority: 31.03.2023 JP 2023059410; 31.03.2023 JP 2023059435; 19.10.2023 JP 2023180485
(71) Applicant: Panasonic Intellectual Property Management Co., Ltd., Kadoma-shi, Osaka 571-0057 (JP)
(72) Inventor: TSUNOYAMA, Hironori, Kadoma-shi, Osaka 571-0057 (JP); HAYASHI, Naoki, Kadoma-shi, Osaka 571-0057 (JP); NAGAO, Nobuaki, Kadoma-shi, Osaka 571-0057 (JP); HASHIMOTO, Takahiko, Kadoma-shi, Osaka 571-0057 (JP); HIWATA, Akira, Kadoma-shi, Osaka 571-0057 (JP); MURAKAMI, Hikaru, Kadoma-shi, Osaka 571-0057 (JP)
(74) Representative: Eisenführ Speiser
(86) International application number: PCT/JP2024/011446
(87) International publication number: WO 2024/203931

(57) **Abstract**

Provided are a control method, a control device, a refrigeration cycle device, and a program which enable improvement of accuracy of detection of a disproportionation reaction of a working medium and improvement of suppression of the disproportionation reaction. A control method for a refrigeration cycle circuit allowing circulation of a working medium 20 containing a refrigerant component capable of undergoing a disproportionation reaction includes interrupting or limiting an operation of the refrigeration cycle circuit in response to detecting a sign of the disproportionation reaction based on at least one of a first state regarding a drive circuit 31 for driving a compressor 4 of the refrigeration cycle circuit or a second state regarding the working medium 20.

## Description

### TECHNICAL FIELD

The present disclosure relates to control methods, control devices, refrigeration cycle devices, and programs.

### BACKGROUND ART

Conventionally, R410A has been widely used as a working medium (heat medium, refrigerant) for refrigeration cycle devices. However, the global warming potential (GWP) of R410A is as high as 2090. Therefore, from the viewpoint of preventing global warming, research and development of working media with smaller GWPs has been conducted. Patent Document 1 discloses 1,1,2-trifluoroethylene (HFO1123) as a working medium with a smaller GWP than R410A. Patent Document 2 discloses 1,2-difluoroethylene (HFO1132) as a working medium with a smaller GWP than R410A.

HFO1123 and HFO1132 have a smaller GWP than R410A, but are therefore less stable than R410A. For example, the generation of radicals may cause a disproportionation reaction of HFO1123 or HFO1132, resulting in the conversion of HFO1123 and HFO1132 to other compounds.

Patent document 3 discloses "The disproportionation reaction occurs under an excessively high-temperature and high-pressure atmosphere (in a compressor, in particular), triggered by a starting point when higher energy is added to the refrigerant, or when an excessive collision between refrigerant molecules and electrons occurs due to electric discharge caused by a layer short or the like."

Patent document 3 discloses "The present disclosure suppresses the occurrence of a disproportionation reaction by preventing addition of high energy to the refrigerant in the compressor or by preventing an excessive collision between refrigerant molecules and electrons in the discharge space. As a result, the present disclosure provides a more reliable refrigeration cycle device including a working medium that contains an ethylene-based fluorohydrocarbon having a double bond."

The refrigeration cycle device disclosed in patent document 3 has a protective device that interrupts the supply of power to the compressor and/or reduces the rotational speed of the compressor when at least one of the following cases occurs: when the current value of the input current of the electric motor of the compressor exceeds a first predetermined value that is set to be three times or more the maximum current value during normal operation other than the startup of the compressor; when the current value of the input current of the electric motor of the compressor exceeds a second predetermined value that is set to be two times or more the current value during the startup of the compressor; and when the number of discharge electrons in the discharge space, which is calculated based on the amount of change in the current value of the input current of the electric motor of the compressor, exceeds a third predetermined value that is set to be 1.0 × 10¹⁹ electrons / second or more.

### PRIOR ART DOCUMENTS

### PATENT DOCUMENTS

Patent Document 1: WO 2012/157764 A1
Patent Document 2: WO 2012/157765 A1
Patent Document 3: WO 2019/172008 A1

### SUMMARY OF THE INVENTION

### PROBLEMS TO BE SOLVED BY THE INVENTION

The refrigeration cycle device disclosed in patent document 1 detects a sign of a disproportionation reaction by using a current value of an input current of an electric motor of a compressor, and suppresses the disproportionation reaction by performing at least one of interrupting the supply of electric power to the compressor and reducing the rotational speed of the compressor by a protective device.

The present disclosure provides a control method, a control device, a refrigeration cycle device, and a program which enable improvement of accuracy of detection of a disproportionation reaction of a working medium and improvement of suppression of the disproportionation reaction.

### SOLUTIONS TO THE PROBLEMS

A control method according to one aspect of the present disclosure is a control method for a refrigeration cycle circuit allowing circulation of a working medium containing a refrigerant component capable of undergoing a disproportionation reaction, includes interrupting or limiting an operation of the refrigeration cycle circuit in response to detecting a sign of the disproportionation reaction based on at least one of a first state regarding a drive circuit for driving a compressor of the refrigeration cycle circuit or a second state regarding the working medium.

A control device according to one aspect of the present disclosure is a control device for controlling a refrigeration cycle circuit allowing circulation of a working medium containing a refrigerant component capable of undergoing a disproportionation reaction, includes: a drive circuit configured to drive a compressor of the refrigeration cycle circuit; and a control circuit configured to interrupt or limit an operation of the refrigeration cycle circuit in response to detecting a sign of the disproportionation reaction based on at least one of a first state regarding a drive circuit for driving the compressor of the refrigeration cycle circuit or a second state regarding the working medium.

A refrigeration cycle device according to one aspect of the present disclosure includes: the control device; and the refrigeration cycle circuit.

A program according to one aspect of the present disclosure is a program executable by a computer system included in a control device for controlling a refrigeration cycle circuit allowing circulation of a working medium containing a refrigerant component capable of undergoing a disproportionation reaction, the program enabling the computer system to perform a process of interrupting or limiting an operation of the refrigeration cycle circuit in response to detecting a sign of the disproportionation reaction based on at least one of a first state regarding a drive circuit for driving a compressor of the refrigeration cycle circuit or a second state regarding the working medium.

### EFFECTS OF THE INVENTION

Aspects of the present disclosure enable improvement of accuracy of detection of a disproportionation reaction of a working medium and improvement of suppression of the disproportionation reaction.

### BRIEF DESCRIPTION OF THE DRAWINGS

Fig. 1 is a block diagram of a refrigeration cycle device according to embodiment 1.
Fig. 2 is a schematic view of a compressor and a control device, of the refrigeration cycle device according to embodiment 1.
Fig. 3 is a waveform chart of a voltage of a smoothing circuit of a drive circuit of the control device according to embodiment 1.
Fig. 4 is a part of a flowchart of an operation of the control device according to embodiment 1.
Fig. 5 is another part of the flowchart of the operation of the control device according to embodiment 1.
Fig. 6 is another part of the flowchart of the operation of the control device according to embodiment 1.
Fig. 7 is another part of the flowchart of the operation of the control device according to embodiment 1.
Fig. 8 is another part of the flowchart of the operation of the control device according to embodiment 1.
Fig. 9 is another part of the flowchart of the operation of the control device according to embodiment 1.
Fig. 10 is a schematic view of a compressor and a control device, of a refrigeration cycle device according to embodiment 2.
Fig. 11 is a schematic view of an electric motor of the compressor according to embodiment 2.
Fig. 12 is an explanatory view of results of an experiment for verifying whether or not a disproportionation reaction occurs.
Fig. 13 is a part of a flowchart of an operation of the control device according to embodiment 2.
Fig. 14 is another part of the flowchart of the operation of the control device according to embodiment 2.
Fig. 15 is another part of the flowchart of the operation of the control device according to embodiment 2.
Fig. 16 is a part of a flowchart of an operation of the control device according to embodiment 3.
Fig. 17 is another part of the flowchart of the operation of the control device according to embodiment 3.
Fig. 18 is another part of the flowchart of the operation of the control device according to embodiment 3.
Fig. 19 is a part of a flowchart of an operation of the control device according to embodiment 4.
Fig. 20 is another part of the flowchart of the operation of the control device according to embodiment 4.
Fig. 21 is another part of the flowchart of the operation of the control device according to embodiment 4.
Fig. 22 is another part of the flowchart of the operation of the control device according to embodiment 4.
Fig. 23 is another part of the flowchart of the operation of the control device according to embodiment 4.
Fig. 24 is another part of the flowchart of the operation of the control device according to embodiment 4.
Fig. 25 is another part of the flowchart of the operation of the control device according to embodiment 4.
Fig. 26 is another part of the flowchart of the operation of the control device according to embodiment 4.
Fig. 27 is a block diagram of a refrigeration cycle device according to embodiment 5.
Fig. 28 is a schematic view of a compressor and a control device, of the refrigeration cycle device according to embodiment 5.
Fig. 29 is a schematic view of an inside of the compressor of the refrigeration cycle device according to embodiment 5.
Fig. 30 is a schematic view of a light detection circuit according to embodiment 5.
Fig. 31 is a part of a flowchart of an operation of the control device according to embodiment 5.
Fig. 32 is another part of the flowchart of the operation of the control device according to embodiment 5.
Fig. 33 is another part of the flowchart of the operation of the control device according to embodiment 5.
Fig. 34 is another part of the flowchart of the operation of the control device according to embodiment 5.
Fig. 35 is another part of the flowchart of the operation of the control device according to embodiment 5.
Fig. 36 is another part of the flowchart of the operation of the control device according to embodiment 5.
Fig. 37 is a block diagram of a refrigeration cycle device according to embodiment 6.
Fig. 38 is a schematic view of a compressor and a control device, of the refrigeration cycle device according to embodiment 6.
Fig. 39 is a schematic view of a light detection circuit according to embodiment 6.
Fig. 40 is a schematic view of a compressor and a control device, of a refrigeration cycle device according to embodiment 7.
Fig. 41 is a schematic view of a light detection circuit according to embodiment 7.
Fig. 42 is a block diagram of a refrigeration cycle device according to embodiment 8.
Fig. 43 is a schematic view of a compressor and a control device, of the refrigeration cycle device according to embodiment 8.
Fig. 44 is a graph of examples of wavelength changes of absorbance of a dye.
Fig. 45 is a schematic view of a light detection circuit according to embodiment 8.
Fig. 46 is a schematic view of a compressor and a control device, of a refrigeration cycle device according to embodiment 9.

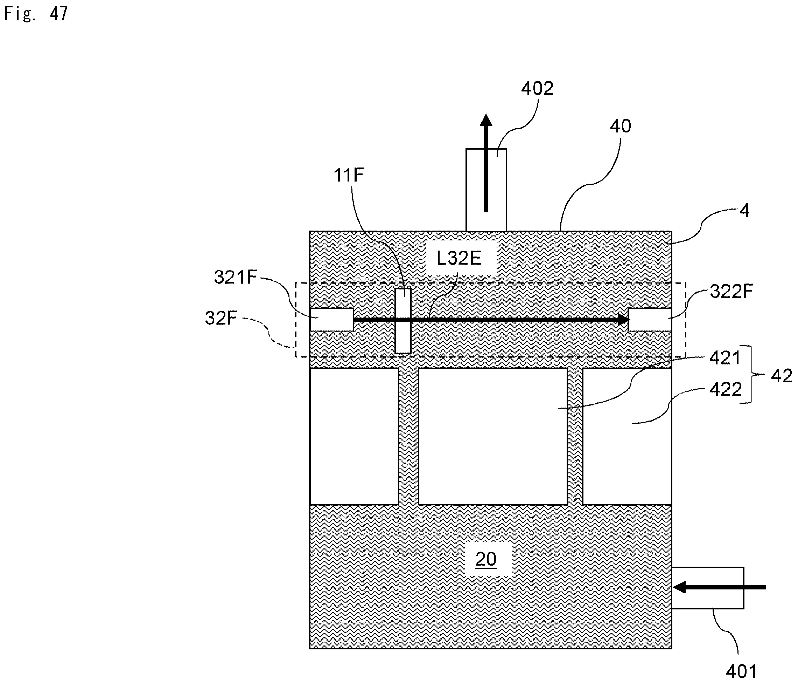

Fig. 47 is a schematic view of a light detection circuit according to embodiment 9.
Fig. 48 is a schematic view of a compressor and a control device, of a refrigeration cycle device according to embodiment 10.
Fig. 49 is a schematic view of a control device according to a variation.
Fig. 50 is a schematic view of a compressor and a control device, of a refrigeration cycle device according to another variation.

### DETAILED DESCRIPTION

### [1. EMBODIMENTS]

Hereinafter, embodiments of the present disclosure will be described with reference to the drawings where appropriate. However, the following embodiments are merely examples for explaining the present disclosure, and are not intended to limit the present disclosure to the following content (e.g., shapes, dimensions, arrangement and the like, of components). Positional relationships such as up, down, left, and right are based on the positional relationships shown in the drawings, unless otherwise specified. Each figure described in the following embodiments is a schematic diagram, and the ratios of size and thickness of each component in each figure do not necessarily reflect the actual dimensional ratios. Furthermore, the dimensional ratios of each element are not limited to the ratios shown in the drawings.

In the following description, if it is necessary to distinguish a plurality of components from each other, prefixes, such as, "first", "second", or the like are attached to names of such components. However, if these components can be distinguished from each other by reference signs attached to those components, such prefixes, such as, "first", "second", or the like, may be omitted in consideration of readability of texts.

Note that, in the following description, if it is necessary to distinguish a plurality of components from each other, suffixes, such as, "-1", "-2", or the like are attached to reference signs of such components. if there is no need to distinguish such components from each other, such suffixes, such as, "-1", "-2", or the like, may be omitted in consideration of readability of texts.

### [1.1 EMBODIMENT 1]

### [1.1.1 CONFIGURATIONS]

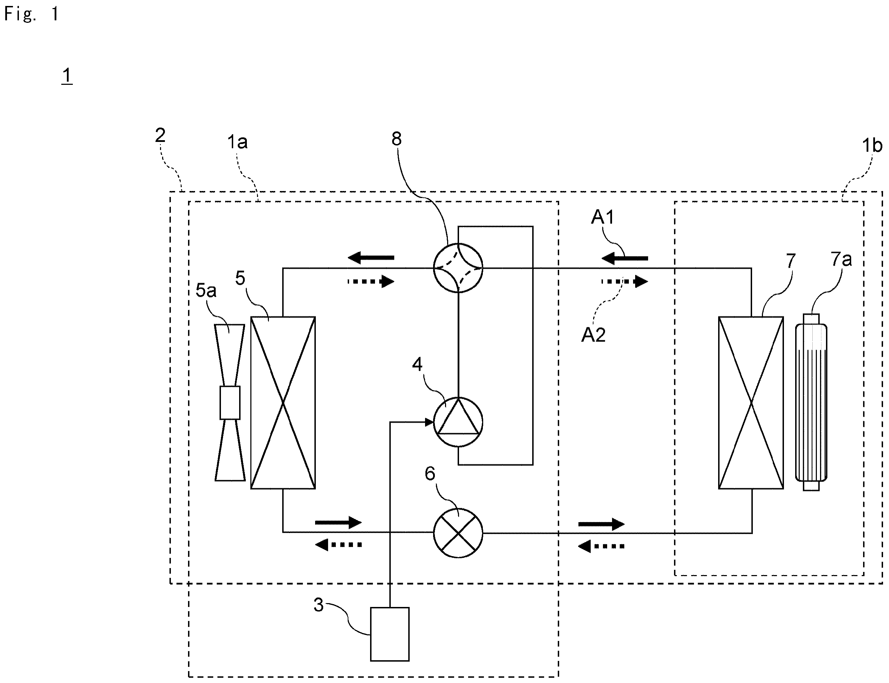

Fig. 1 is a block diagram of a refrigeration cycle device 1 according to the present embodiment. The refrigeration cycle device 1 constitutes an air conditioner enabling a cooling operation and a heating operation, for example. The refrigeration cycle device 1 includes a refrigeration cycle circuit 2 and a control device 3.

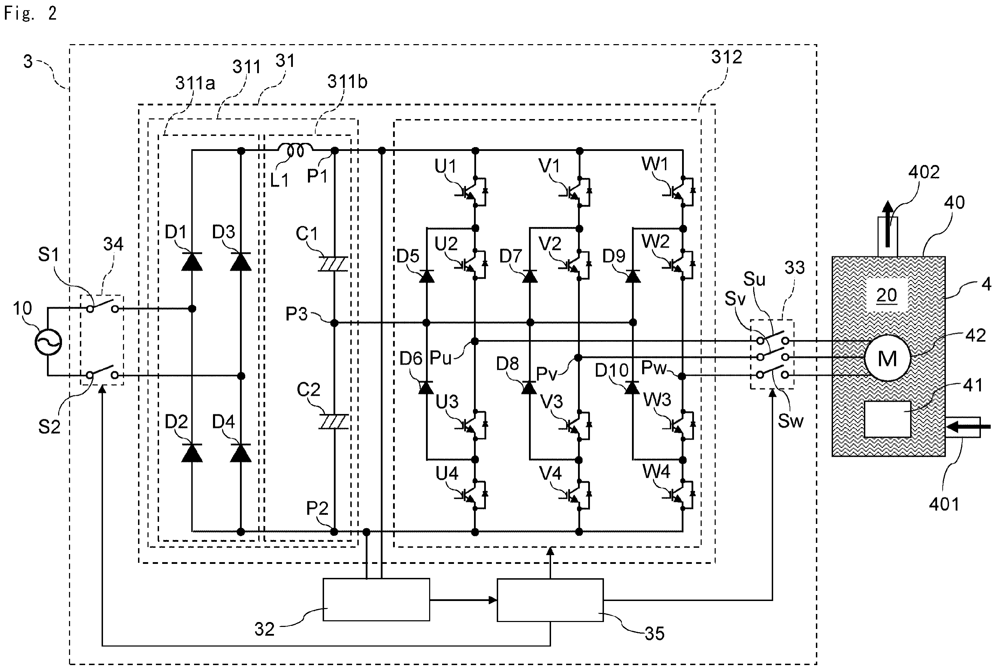

The refrigeration cycle circuit 2 constitutes a fluidic pathway where a working medium 20 (see Fig. 2) circulates. In the present embodiment, the working medium 20 contains ethylene-based fluoroolefin as a refrigerant component. The ethylene-based fluoroolefin may be ethylene-based fluoroolefin likely to undergo a disproportionation reaction. Examples of the ethylene-based fluoroolefin likely to undergo a disproportionation reaction may include 1,1,2-trifluoroethylene (HFO1123), trans-1,2-difluoroethylene (HFO1132(E)), cis-1,2-difluoroethylene (HFO-1132(Z)), 1,1-difluoroethylene (HFO-1132a), tetrafluoroethylene (CF₂=CF₂, FO1114), or monofluoroethylene (HFO-1141). This means that the working medium 20 contains refrigerant component capable of undergoing a disproportionation reaction.

The working medium 20 may include a plurality of types of refrigerant components. The working medium 20 may contain ethylene-based fluoroolefin as a main refrigerant component, and additionally contain one or more chemical compounds other than ethylene-based fluoroolefin as one or more auxiliary refrigerant components. Examples of the auxiliary refrigerant components may include hydrofluorocarbons (HFC), hydrofluoroolefins (HFO), saturated hydrocarbons, and carbon dioxide. Examples of hydrofluorocarbons (HFC) may include difluoromethane, difluoroethane, trifluoroethane, tetrafluoroethane, pentafluoroethane, pentafluoropropane, and heptafluorocyclopentane. Examples of hydrofluoroolefins (HFO) may include monofluoropropene, trifluoropropene, tetrafluoropropene, pentafluoropropene, and hexafluorobutene. Examples of saturated hydrocarbons may include ethane, n-propane, cyclopropane, n-butane, cyclobutane, isobutane (2-methylpropane), methylcyclopropane, n-pentane, isopentane (2-methylbutane), neopentane (2,2-dimethylpropane), and methylcyclobutane.

The working medium 20 may further contain a disproportionation inhibitor for suppressing a disproportionation reaction of the ethylene-based fluoroolefin. Examples of the disproportionation inhibitor may include a saturated hydrocarbon or a haloalkane. Examples of saturated hydrocarbons may include ethane, n-propane, cyclopropane, n-butane, cyclobutane, isobutane (2-methylpropane), methylcyclopropane, n-pentane, isopentane (2-methylbutane), neopentane (2,2-dimethylpropane), and methylcyclobutane. In the above examples, n-propane is preferred. Examples of haloalkanes may include haloalkanes having one or two carbon atoms. Examples of haloalkanes having one carbon atom (i.e., halomethanes) may include (mono)iodomethane (CH₃I), diiodomethane (CH₂I₂), dibromomethane (CH₂Br₂), bromomethane (CH₃Br), dichloromethane (CH₂Cl₂), chloroiodomethane (CH₂ClI), dibromochloromethane (CHBr₂Cl), tetraiodomethane (Cl₄), carbon tetrabromide (CBr₄), bromotrichloromethane (CBrCl₃), dibromodichloromethane (CBr₂Cl₂), tribromofluoromethane (CBr₃F), fluorodiiodomethane (CHFl₂), difluorodiiodomethane (CF₂I₂), dibromodifluoromethane (CBr₂F₂), trifluoroiodomethane (CF₃I), and difluoroiodomethane (CHF₂I). Examples of haloalkanes with two carbon atoms (i.e. haloethanes) may include 1,1,1-trifluoro-2-iodoethane (CF₃CH₂I), monoiodoethane (CH₃CH₂I), monobromoethane (CH₃CH₂Br), and 1,1,1-triiodoethane (CH₃Cl₃). The working medium 20 may contain one or more types of haloalkanes having 1 or 2 carbon atoms. In other words, the haloalkanes having 1 or 2 carbon atoms may be used alone or in combination of two or more types.

Here, an experiment was conducted to verify the occurrence of a disproportionation reaction using a working medium containing 1,1,2-trifluoroethylene (HFO-1123). In the disproportionation reaction experiment, a sealed, pressure-resistant container (stainless steel sealed container, internal volume: 50 mL) was equipped with a pressure sensor (GC61, manufactured by Nagano Keiki Co., Ltd.) for measuring the internal pressure of the pressure-resistant container, a thermocouple (PL Thermocouple Grand PL-18-K-A 4-T, manufactured by Conax Technologies) for measuring the internal temperature of the pressure-resistant container, and a discharge device for generating discharge inside the pressure-resistant container. Furthermore, a gas cylinder of 1,1,2-trifluoroethylene was connected so that the pressure could be adjusted. In addition, a mantle heater was installed to heat the entire pressure-resistant container, and a ribbon heater (Flexible Ribbon Heater 1 m, 200 W, manufactured by Tokyo Research Institute Co., Ltd.) was installed to heat the piping section as well. In this way, the experimental system for the disproportionation reaction was constructed.

TABLE 1 below shows the occurrence or non-occurrence of a disproportionation reaction when using as the working medium: pure 1,1,2-trifluoroethylene (Examples 1 and 2); a mixed gas adjusted so that the content of 1,1,2-trifluoroethylene is 80 mass% and that of n-propane is 20 mass% (Example 3); a mixed gas adjusted so that the content of 1,1,2-trifluoroethylene is 91.5 mass%, n-propane is 7.5 mass%, and difluoroiodomethane is 1.0 mass% (Example 4); and a mixed gas adjusted so that the content of 1,1,2-trifluoroethylene is 69.5 mass%, difluoromethane is 22 mass%, n-propane is 7.5 mass%, and difluoroiodomethane is 1.0 mass% (Example 5). The pressure was adjusted to 2 MPa for Examples 1 and 2, and to 6 MPa for Examples 3 to 5. The accumulated energy in TABLE 1 is the electrostatic energy accumulated in the capacitor section installed inside the discharge device. The number of discharge occurrences is the number of times that discharge has been generated at fixed intervals under the given conditions, and if a disproportionation reaction was observed after that number of times, "Yes" is indicated under "Occurrence of Disproportionation Reaction"; if no disproportionation reaction was observed, "No" is indicated.

**[TABLE 1]**

| | Gas-type | GWP | Accumulated Energy [J] | Number of discharge occurrences | occurrence or non-occurrence of disproportionation reaction |
|---|---|---|---|---|---|
| Example 1 | HFO1123 (100 mass%) | <10 | 0.5 | > 15 | No |
| Example 2 | HFO1123 (100 mass%) | <10 | 1.1 | > 2 | Yes |
| Example 3 | HFO1123/n-propane = 80/20 mass% | <10 | 1.5 | > 60 | No |
| Example 4 | HFO1123/n-propane/difluoroiodomethane = 91.5/7.5/1.0 mass% | <10 | 1.5 | > 12 | No |
| Example 5 | HFO1123/difluoromethane/n-propane/difluoroiodomethane = 69.5/22/7.5/1.0 mass% | <150 | 1.5 | > 50 | No |

From TABLE 1, in Example 1, no disproportionation reaction was observed. Therefore, it was confirmed that the possibility of a disproportionation reaction occurring during a minor discharge with accumulated energy of less than 0.5 J is extremely low. In addition, from TABLE 1, a disproportionation reaction was observed in Example 2. Therefore, it was confirmed that when the accumulated energy is large, there is a high possibility that a disproportionation reaction will occur after two consecutive discharge occurrences. TABLE 1 shows that the larger the accumulated energy-that is, the greater the energy expended in the discharge-the higher the likelihood of a disproportionation reaction occurring. This indicates that, in order to suppress the disproportionation reaction, it is preferable to keep the system in a state of minor discharge, that is, to detect early and suppress the disproportionation reaction.

From TABLE 1, in Example 3, no disproportionation reaction was observed in the working medium of the mixed gas containing n-propane as a disproportionation inhibitor. Example 3 used a larger accumulated energy compared to Example 2, where disproportionation was observed in pure 1,1,2-trifluoroethylene. Therefore, even when the accumulated energy is increased by the presence of a disproportionation inhibitor such as n-propane in the working medium, the possibility of a disproportionation reaction occurring during minor discharge remains extremely low. This indicates that, in a working medium of a mixed gas containing a disproportionation inhibitor, it is preferable to keep the system in a state of minor discharge, that is, to detect early and suppress the disproportionation reaction.

From TABLE 1, in Example 4, no disproportionation reaction was observed in the working medium of a mixed gas containing n-propane and difluoroiodomethane as disproportionation inhibitors. Example 4 used a larger accumulated energy compared to Example 2, where disproportionation was observed in pure 1,1,2-trifluoroethylene. Therefore, even when the accumulated energy is increased by the presence of disproportionation inhibitors such as n-propane and difluoroiodomethane in the working medium-that is, when two or more inhibitors are present-the possibility of a disproportionation reaction occurring during minor discharge remains extremely low. This indicates that, in a working medium of a mixed gas containing two or more disproportionation inhibitors, it is preferable to keep the system in a state of minor discharge, that is, to detect early and suppress the disproportionation reaction.

From TABLE 1, in Example 5, no disproportionation reaction was observed in the working medium of a mixed gas containing n-propane, difluoromethane as a different disproportionation inhibitor, and difluoroiodomethane as an auxiliary refrigerant component. Example 5 used a larger accumulated energy compared to Example 2, where disproportionation was observed in pure 1,1,2-trifluoroethylene. Therefore, even when the accumulated energy is increased by the presence of two or more disproportionation inhibitors and the working medium includes one or more auxiliary refrigerant components that do not cause disproportionation, the possibility of a disproportionation reaction occurring during minor discharge remains extremely low. This indicates that, in a working medium of a mixed gas containing two or more disproportionation inhibitors and at least one auxiliary refrigerant, it is preferable to keep the system in a state of minor discharge, that is, to detect early and suppress the disproportionation reaction.

The present inventors thoroughly studied the mechanism of the disproportionation reaction and found that, for ethylene-based fluoroolefins, decomposition proceeds via an almost common reaction pathway, the generated radical species are the same and only their composition varies, and their thermal decomposition temperatures are nearly the same. In other words, even with ethylene-based fluoroolefins other than 1,1,2-trifluoroethylene, a small amount of radicals are generated in minor discharges; however, disproportionation reaction does not occur if only such small-scale, intermittent discharges take place several times. The disproportionation reaction proceeds only when a large amount of radicals is generated through a discharge of substantial energy.

The refrigeration cycle circuit 2 includes a compressor 4, a first heat exchanger 5, an expansion valve 6, a second heat exchanger 7, and a four-way valve 8.

The refrigeration cycle device 1 includes an outdoor unit 1a and an indoor unit 1b. The outdoor unit 1a includes the control device 3, the compressor 4, the first heat exchanger 5, the expansion valve 6, and the four-way valve 8. The outdoor unit 1a further includes a first air blower 5a for facilitating heat exchange at the first heat exchanger 5. The indoor unit 1b includes the second heat exchanger 7. The indoor unit 1b further includes a second air blower 7a for facilitating heat exchange at the second heat exchanger 7.

In the refrigeration cycle circuit 2, the compressor 4 compresses the working medium to increase a pressure of the working medium. The compressor 4 would be described in detail later. The first heat exchanger 5 and the second heat exchanger 7 enable heat exchange between the working medium circulating in the refrigeration cycle circuit 2 and external air (e.g., the outdoor air or the indoor air). The expansion valve 6 regulates the pressure (evaporation pressure) of the working medium and regulates a flow volume of the working medium. The four-way valve 8 switches a direction of the working medium circulating in the refrigeration cycle circuit 2 between a first direction corresponding to the cooling operation and a second direction corresponding to the heating operation.

In the present embodiment, as shown by a solid arrow A1 in Fig. 1, the first direction is a direction in which the working medium circulates in the refrigeration cycle circuit 2 in the order of the compressor 4, the first heat exchanger 5, the expansion valve 6, and the second heat exchanger 7.

In the cooling operation, the compressor 4 compresses and discharges the gaseous working medium, and thus the gaseous working medium is sent to the first heat exchanger 5 through the four-way valve 8. The first heat exchanger 5 conducts heat exchange between the outdoor air and the gaseous working medium and then the gaseous working medium is condensed to be liquefied. The liquid working medium is decompressed by the expansion valve 6 and is sent to the second heat exchanger 7. The second heat exchanger 7 conducts heat exchange between the liquid working medium and the indoor air, and then the liquid working medium evaporates to become the gaseous working medium. The gaseous working medium returns to the compressor 4 through the four-way valve 8. In the cooling operation, the first heat exchanger 5 functions as a condenser, and the second heat exchanger 7 functions as an evaporator. Thus, the indoor unit 1b sends air cooled via heat exchange at the second heat exchanger 7 to an interior during cooling.

In the present embodiment, as shown by a broken arrow A2 in Fig. 1, the second direction is a direction in which the working medium circulates in the refrigeration cycle circuit 2 in the order of the compressor 4, the second heat exchanger 7, the expansion valve 6, and the first heat exchanger 5.

In the heating operation, the compressor 4 compresses and discharges the gaseous working medium, and thus the gaseous working medium is sent to the second heat exchanger 7 through the four-way valve 8. The second heat exchanger 7 conducts heat exchange between the indoor air and the gaseous working medium and then the gaseous working medium is condensed to be liquefied. The liquid working medium is decompressed by the expansion valve 6 and is sent to the first heat exchanger 5. The first heat exchanger 5 conducts heat exchange between the liquid working medium and the outdoor air, and then the liquid working medium evaporates to become the gaseous working medium. The gaseous working medium returns to the compressor 4 through the four-way valve 8. In the heating operation, the second heat exchanger 7 functions as a condenser, and the first heat exchanger 5 functions as an evaporator. Thus, the indoor unit 1b sends air warmed via heat exchange at the second heat exchanger 7 to an interior during the heating.

The control device 3 is configured to control the compressor 4 of the refrigeration cycle circuit 2. Fig. 2 is a schematic view of the compressor 4 and the control device 3.

The compressor 4 is, for example, a hermetically sealed compressor. The compressor 4 may be of a rotary type, a scroll type, or other well-known type. The compressor 4 includes a sealed container 40, a compression mechanism 41, and an electric motor 42.

The sealed container 40 constitutes a fluidic pathway for the working medium 20. The sealed container 40 includes a suction pipe 401 and a discharge pipe 402. The working medium 20 is suctioned into the sealed container 40 via the suction pipe 401 and then is compressed by the compression mechanism 41 and thereafter is discharged to an exterior of the sealed container 40 via the discharge pipe 402. The inside of the sealed container 40 is filled with the working medium 20 with a high temperature and a high pressure together with a lubricating oil. The sealed container 40 has a bottom portion which constitutes an oil reservoir for storing a mixed liquid of the working medium 20 and the lubricating oil.

The compression mechanism 41 is positioned inside the sealed container 40 to compress the working medium. The compression mechanism 41 may have a conventional configuration. For example, the compression mechanism 41 may include a cylinder forming a compression chamber, a rolling piston disposed in the compression chamber inside the cylinder, and a crank shaft coupled to the rolling piston.

The electric motor 42 is positioned inside the sealed container 40 to operate the compression mechanism 41. The electric motor 42 is a blushless motor (three-phase brushless motor). The electric motor 42 includes a rotator fixed to the crank shaft of the compression mechanism 41 and a stator provided in a vicinity of the rotator, for example. The stator is configured by concentrated or distributed winding of the stator windings (magnet wires) around a stator core (electrical or magnetic steel sheet or the like) with an insulation paper in-between. The stator windings are covered with insulating material. Examples of the insulating material may include polyethylene terephthalate (PET), polyethylene naphthalate (PEN), aramid polymer, polyphenylene sulfide (PPS), and polytetrafluoroethylene (PTFE).

The compressor 4 may include an accumulator for preventing liquid compression in the compression chamber of the compression mechanism 41. The accumulator separates the working medium into the gaseous working medium and the liquid working medium and directs only the gaseous working medium to the sealed container 40 via the suction pipe 401.

The control device 3 includes a drive circuit 31 and a control circuit 35.

The drive circuit 31 is configured to drive the electric motor 42 based on input power from a power supply 10. In the present embodiment, the power supply 10 is an alternating current power supply and the input power is AC power. The drive circuit 31 includes a converter circuit 311 and an inverter circuit 312.

The converter circuit 311 is configured to output DC output power based on the input power from the power supply 10 so that a voltage of the DC output power becomes a first voltage. This means that the converter circuit 311 converts the input power into the DC output power so that the voltage of the DC output power becomes the first voltage. The first voltage corresponds to a rated voltage of the drive circuit 31.

The converter circuit 311 includes a rectification circuit 311a and a smoothing circuit 311b.

The rectification circuit 311a is a diode bridge constituted by a plurality of diodes D1 to D4. The power supply 10 is connected between input terminals (a connecting point between the diodes D1, D2 and a connecting point between the diodes D3, D4) of the rectification circuit 311a and the smoothing circuit 311b is connected between output terminals (a connecting point between the diodes D1, D3 and a connecting point between the diodes D2, D4) of the rectification circuit 311a.

The smoothing circuit 311b smooths a voltage between the output terminals of the rectification circuit 311a to output it. By the smoothing circuit 311b, the voltage of the DC output power is set to the first voltage. The smoothing circuit 311b includes a series circuit of an inductor L1 and smoothing capacitors C1 and C2. In the smoothing circuit 311b, a connecting point between the inductor L1 and the smoothing capacitor C1 corresponds to a first output point P1 outputting a voltage corresponding to the first voltage. In the smoothing circuit 311b, a connecting point between the connecting point between the diodes D2, D4 and the smoothing capacitor C2 corresponds to a second output point P2 outputting a voltage lower than the voltage at the first output point P1. In the smoothing circuit 311b, a connecting point between the smoothing capacitor C1 and the smoothing capacitor C2 corresponds to a third output point P3 outputting a voltage between the voltage at the first output point P1 and the voltage at the second output point P2. In a relation among the first output point P1, the second output point P2 and the third output point P3, the first output point P1 is a high voltage point, the second output point P2 is a low voltage point and the third output point P3 is a intermediate voltage point. In the smoothing circuit 311b, the smoothing capacitor C1 and the smoothing capacitor C2 have the same capacitance. Therefore, a voltage between the first output point P1 and the third output point P3 and a voltage between the second output point P2 and the third output point P3 are equal. If the voltage between the first output point P1 and the second output point P2 (which corresponds to the first voltage) is denoted as E, then the voltage between the first output point P1 and the third output point P3 is E/2, and similarly, the voltage between the second output point P2 and the third output point P3 is also E/2. Accordingly, the drive circuit 31 is capable of providing five voltage levels: E, E/2, 0, -E/2, and -E.

The inverter circuit 312 outputs AC output power to the electric motor 42 based on the DC output power from the converter circuit 311. In the present embodiment, the AC output power is three-phase AC power. The inverter circuit 312 includes a plurality of semiconductor switching elements U1 to U4, V1 to V4, and W1 to W4. The semiconductor switching elements U1 to U4, V1 to V4, and W1 to W4 are, for example, transistors or the like.

Each set of the semiconductor switching elements U1 to U4, V1 to V4, and W1 to W4 forms a series circuit and is connected between the first output point P1 and the second output point P2.

A connecting point between the semiconductor switching elements U1 and U2, a connecting point between the semiconductor switching elements V1 and V2, and a connecting point between the semiconductor switching elements W1 and W2 are connected to the third output point P3 via diodes D5, D7, and D9, respectively.

Anodes of the diodes D5, D7, and D9 are connected to the third output point P3, and cathodes of the diodes D5, D7, and D9 are connected to a connecting point between the semiconductor switching elements U1 and U2, a connecting point beetween the semiconductor switching elements V1 and V2, and a connecting point between the semiconductor switching element W1 and W2, respectively.

A connecting point between the semiconductor switching elements U2 and U3 constitutes a U-phase output terminal Pu, which is connected to a U-phase input terminal of the electric motor 42. A connecting point between the semiconductor switching elements V2 and V3 constitutes a V-phase output terminal Pv, which is connected to a V-phase input terminal of the electric motor 42. The connecting point between the semiconductor switching elements W2 and W3 constitutes a W-phase output terminal Pw, which is connected to a W-phase input terminal of the electric motor 42.

A connecting points between the semiconductor switching elements U3 and U4, a connecting points between the semiconductor switching elements V3 and V4, and a connecting points between the semiconductor switching elements W3 and W4 are connected to the third output point P3 via diodes D6, D8, and D10, respectively.

Cathodes of the diodes D6, D8, and D10 are connected to the third output point P3, and anodes of the diodes D6, D8, and D10 are connected to a connecting points between the semiconductor switching elements U3 and U4, a connecting points between the semiconductor switching elements V3 and V4, and a connecting points between the semiconductor switching elements W3 and W4, respectively.

In the inverter circuit 312, the semiconductor switching elements U1, U2, V1, V2, W1, and W2 constitute a first semiconductor switching element group connected between the first output point P1 and the electric motor 42. In particular, the semiconductor switching elements U1 and U2 constitute a U-phase first semiconductor switching element group connected between the first output point P1 and the U-phase input terminal of the electric motor 42. The semiconductor switching elements V1 and V2 constitute a V-phase first semiconductor switching element group connected between the first output point P1 and the V-phase input terminal of the electric motor 42. The semiconductor switching elements W1 and W2 constitute a W-phase first semiconductor switching element group connected between the first output point P1 and the W-phase input terminal of the electric motor 42.

The semiconductor switching elements U3, U4, V3, V4, W3, and W4 constitute a second semiconductor switching element group connected between the second output point P2 and the electric motor 42. In particular, the semiconductor switching elements U3 and U4 constitute a U-phase second semiconductor switching element group connected between the second output point P2 and the U-phase input terminal of the electric motor 42. The semiconductor switching elements V3 and V4 constitute a V-phase second semiconductor switching element group connected between the second output point P2 and the V-phase input terminal of the electric motor 42. The semiconductor switching elements W3 and W4 constitute a W-phase second semiconductor switching element group connected between the second output point P2 and the W-phase input terminal of the electric motor 42.

The semiconductor switching elements U2, U3, V2, V3, W2, and W3 constitute a third semiconductor switching element group connected between the third output point P3 and the electric motor 42. In particular, the semiconductor switching elements U2 and U3 constitute a U-phase third semiconductor switching element group connected between the third output point P3 and the U-phase input terminal of the electric motor 42. The semiconductor switching elements V2 and V3 constitute a V-phase third semiconductor switching element group connected between the third output point P3 and the V-phase input terminal of the electric motor 42. The semiconductor switching elements W2 and W3 constitute a W-phase third semiconductor switching element group connected between the third output point P3 and the W-phase input terminal of the electric motor 42.

The converter circuit 311 has a plurality of output points, including the first to third output points P1 to P3. The inverter circuit 312 includes a plurality of semiconductor switching element groups: the first semiconductor switching element group (the semiconductor switching elements U1, U2, V1, V2, W1, W2) connected between the first output point P1 and the electric motor 42; the second semiconductor switching element group (the semiconductor switching elements U3, U4, V3, V4, W3, W4) connected between the second output point P2 and the electric motor 42; and the third semiconductor switching element group (the semiconductor switching elements U2, U3, V2, V3, W2, W3) connected between the third output point P3 and the electric motor 42. The drive circuit 31 is a so-called multilevel inverter, specifically a three-level inverter.

A voltage detector 32 detects the DC output power of the converter circuit 311 and outputs a detection voltage indicating the voltage of the DC output power. In the present embodiment, the voltage detector 32 includes a voltage divider circuit connected between the output terminals of the smoothing circuit 311b of the converter circuit 311, that is, between the first output point P1 and the second output point P2, and outputs the detection voltage based on a voltage obtained from the voltage divider circuit. The voltage detector 32 may also output the detection voltage based on outputs of the voltage divider circuit and a differential amplifier. As an example, a non-inverting input terminal and an inverting input terminal of the differential amplifier are connected to both ends of a resistor of the voltage divider circuit, respectively, so that the differential amplifier can output the voltage across the resistor as the detection voltage. By using a differential amplifier, it is possible to detect the potential difference in a floating state, thereby improving the accuracy of the detection voltage. The position at which the voltage detector 32 is connected to the drive circuit 31 is not particularly limited as long as the DC output power of the converter circuit 311 can be detected. The position for detecting the DC output power of the converter circuit 311 is not limited to inside the converter circuit 311; it may also be at a position inside the inverter circuit 312 that is circuitequivalent to each of the first output point P1 and the second output point P2. The voltage divider circuit of the voltage detector 32 may adopt a conventionally known configuration, so detailed explanation is omitted.

A first protective device 33 is provided to interrupt outputting the AC output power. The first protective device 33 includes switches Su, Sv, and Sw, which are interposed between the drive circuit 31 and the electric motor 42. The switches Su, Sv, and Sw are connected between the input terminals of the U phase, V phase, and W phase of the electric motor 42 and the U-phase output terminal Pu, the V-phase output terminal Pv, and the W-phase output terminal Pw, respectively. The switches Su, Sv, and Sw may be, for example, controllable switches such as semiconductor switches, electromagnetic relays. In an ON state, where the switches Su, Sv, and Sw are closed, the first protective device 33 allows outputting the AC output power from the drive circuit 31 to the electric motor 42, and in an OFF state, where the switches Su, Sv, and Sw are open, it interrupts outputting the AC output power from the drive circuit 31 to the electric motor 42.

A second protective device 34 is provided to interrupt inputting the input power. The second protective device 34 includes switches S1 and S2, which are interposed between the drive circuit 31 and the power supply 10. The switches S1 and S2 are connected between the input terminals of the rectification circuit 311a and the power supply 10, respectively. The switches S1 and S2 may be, for example, controllable switches such as semiconductor switches, electromagnetic relays. In an ON state, where the switches S1 and S2 are closed, the second protective device 34 allows inputting the input power from the power supply 10 to the drive circuit 31, and in an OFF state, where the switches S1 and S2 are open, it interrupts inputting the input power from the power supply 10 to the drive circuit 31.

The control circuit 35 may be implemented by a computer system including at least one processor (microprocessor) and at least one memory. The computer system may also include one or more A/D converters. For example, one or more A/D converters may be used to convert the detection voltage from the voltage detector 32 from analog format to digital format. The control circuit 35 controls the drive circuit 31, the first protective device 33, and the second protective device 34. Specifically, the control circuit 35 performs PWM control of the plurality of semiconductor switching element groups of the inverter circuit 312 of the drive circuit 31 to allow the drive circuit 31 to operate the electric motor 42. More specifically, the control circuit 35 controls the switching of the plurality of semiconductor switching elements U1 to U4, V1 to V4, and W1 to W4 of the inverter circuit 312 of the drive circuit 31 so that the inverter circuit 312 supplies AC output power (three-phase AC power) to the electric motor 42 based on the DC output power from the smoothing circuit 311b.

The semiconductor switching elements U1 to U4 have a first state in which the semiconductor switching elements U1 and U2 are ON and the semiconductor switching elements U3 and U4 are OFF, a second state in which the semiconductor switching elements U3 and U4 are ON and the semiconductor switching elements U1 and U2 are OFF, and a third state in which the semiconductor switching elements U2 and U3 are ON and the semiconductor switching elements U1 and U4 are OFF. The voltage at the U-phase output terminal Pu is E/2 in the first state, -E/2 in the second state, and 0 in the third state.

The semiconductor switching elements V1 to V4 have a first state in which the semiconductor switching elements V1 and V2 are ON and the semiconductor switching elements V3 and V4 are OFF, a second state in which the semiconductor switching elements V3 and V4 are ON and the semiconductor switching elements V1 and V2 are OFF, and a third state in which the semiconductor switching elements V2 and V3 are ON and the semiconductor switching elements V1 and V4 are OFF. The voltage at the V-phase output terminal Pv is E/2 in the first state, -E/2 in the second state, and 0 in the third state.

The semiconductor switching elements W1 to W4 have a first state in which the semiconductor switching elements W1 and W2 are ON and the semiconductor switching elements W3 and W4 are OFF, a second state in which the semiconductor switching elements W3 and W4 are ON and the semiconductor switching elements W1 and W2 are OFF, and a third state in which the semiconductor switching elements W2 and W3 are ON and the semiconductor switching elements W1 and W4 are OFF. The voltage at the W-phase output terminal Pw is E/2 in the first state, -E/2 in the second state, and 0 in the third state.

In this way, the drive circuit 31 can provide five voltage levels: E, E/2, 0, -E/2, and -E.

The control circuit 35 controls the switching of the semiconductor switching elements U1 to U4, V1 to V4, and W1 to W4 of the inverter circuit 312 of the drive circuit 31, based on, for example, the U-phase, V-phase, and W-phase output voltage command values respectively corresponding to the U-phase, V-phase, and W-phase sinusoidal AC voltages of the three-phase AC, as well as first and second carrier triangular waves. A value of the first carrier triangular wave is greater than or equal to 0, and a value of the second carrier triangular wave is less than or equal to 0. Since the drive circuit 31 can provide five-level voltages of E, E/2, 0, -E/2, and -E, the voltage between the U-phase input terminal and the V-phase input terminal of the electric motor 42, the voltage between the V-phase input terminal and the W-phase input terminal of the electric motor 42, and the voltage between the W-phase input terminal and the U-phase input terminal of the electric motor 42 can each be made closer to a sinusoidal waveform.

The control circuit 35 further performs a process for suppressing the disproportionation reaction of the working medium 20 that circulates in the refrigeration cycle circuit 2, based on the detected voltage from the voltage detector 32.

It is considered that factors of the disproportionation reaction of the working medium 20 are heat and radicals. For example, when radicals are generated under high temperature and high pressure, it is assumed that the disproportionation reaction of the working medium 20 proceeds. The radicals may possibly be generated by a discharge phenomenon occurring, for example, when some abnormality happens in the compressor 4 or the drive circuit 31.

When the disproportionation reaction of the working medium 20 is initiated by a discharge phenomenon, plasma or a reaction fireball is observed in the working medium 20. Then, by the disproportionation reaction of the working medium 20, products are generated from the working medium 20. The products may include intermediate products and/or final products. The final products refer to chemical species, among those generated in the disproportionation of the working medium 20, that are thermodynamically stable. Here, "thermodynamically stable" refers to compounds whose type and composition do not change when exposed to high temperatures of 2000 K or more for a predetermined period (e.g., about 10 minutes) at 1 atm, and then returned to room temperature and atmospheric pressure. The intermediate products are chemical species, generated in the disproportionation of the working medium 20, that are thermodynamically unstable. "Thermodynamically unstable" means that at least one of the type or composition of the compounds change when exposed to 2000 K or more at 1 atm. Thermodynamically unstable species include so-called metastable species. In particular, the intermediate products are species that can exist with a lifetime of 1 ms or more, but can decompose at high temperatures (e.g., 2000 K or higher) to produce the final products. Naturally, the final products are not included in the intermediate products. Note that the lifetime herein refers to the measured lifetime under conditions corresponding to the inside of the refrigeration cycle circuit 2. One example of lifetime measurement is under a maximum temperature of 500 K and a maximum pressure of 6 MPa.

For example, when the working medium 20 includes an ethylene-based fluoroolefin as a refrigerant component, examples of the intermediate product includes carbene, carbene insertion products (compounds formed by carbene insertion reaction), tetrafluoroethylene, perfluoroolefins, and fluorobenzene. Examples of the final product includes soot, hydrogen fluoride, and tetrafluoromethane.

Considering such disproportionation progression, it is believed possible to detect a sign of the disproportionation reaction based on at least one of a first state regarding the drive circuit 31 that drives the compressor 4 of the refrigeration cycle circuit 2, or a second state regarding the working medium 20. The first state refers to a state of the drive circuit 31 capable of being used to determine occurrence of a discharge phenomenon in the compressor 4. The second state refers to a state of the working medium 20 capable of being used for judgment such as emission due to generation of plasma or reaction fireballs, or the quantity of the products formed from the working medium 20. Note that the "sign of the disproportionation reaction" here refers not to a local disproportionation sign in the working medium 20, but to a sign of propagation of the disproportionation reaction throughout the working medium 20. In other words, frequent occurrence of local disproportionation eventually risks spreading the reaction throughout the entire working medium 20.

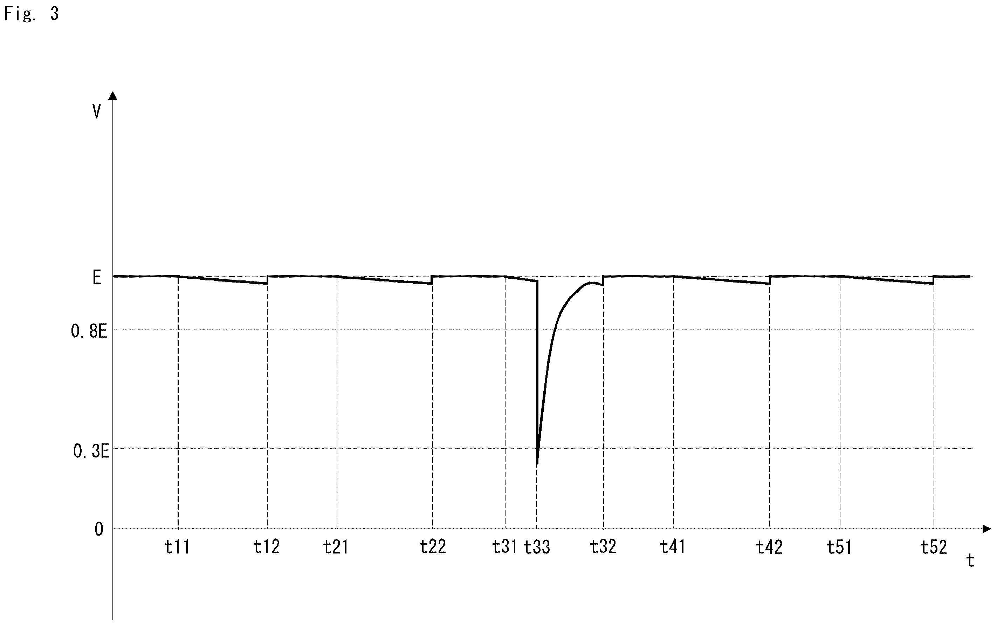

The present inventors found that when a discharge phenomenon occurs in the compressor 4, the voltage of the DC output power of the converter circuit 311, that is, the voltage of the smoothing circuit 311b of the drive circuit 31, undergoes an abrupt change. Fig. 3 shows a waveform diagram of the DC output voltage of the converter circuit 311. In Fig. 3, during times t11 to t12, t21 to t22, t31 to t32, t41 to t42, and t51 to t52, the DC output voltage gently decreases, which is due to switching of the semiconductor switching elements U1 to U4, V1 to V4, W1 to W4 of the inverter circuit 312. When the switching frequency of the inverter circuit 312 is, for example, 1.0 kHz to 5.0 kHz, the time between the times t11 and t21 is about 0.2 to 1.0 ms. Here, at the time t33, a steep drop in the DC output voltage is observed, and this is considered to result from the occurrence of a discharge phenomenon.

From this perspective, the control circuit 35 determines whether a discharge phenomenon has occurred based on the detection voltage from the voltage detector 32, and when it is determined that a discharge phenomenon is occurring, the control circuit 35 interrupts or limits the operation of the drive circuit 31 so as to suppress the disproportionation reaction of the working medium circulating in the refrigeration cycle circuit 2.

In the control device 3, detection of the sign of the disproportionation reaction is carried out not based on changes in the actual current flowing from the drive circuit 31 to the electric motor 42, but instead based on changes in the DC output power (the voltage of the smoothing circuit 311b) within the drive circuit 31. The timescale of a discharge phenomenon is shorter than the timescale for smoothing (rectification) in the drive circuit 31. For example, the timescale of a discharge phenomenon is on the order of microseconds. Therefore, it is possible to determine whether a discharge phenomenon has occurred by monitoring the DC output power within the drive circuit 31. Moreover, measurement of the DC output power (the voltage of the smoothing circuit 311b) within the drive circuit 31 can be conducted in a shorter time and with shorter cycles than measurement of the actual current flowing from the drive circuit 31 to the electric motor 42. This enables earlier detection of the sign of the disproportionation reaction of the working medium 20. In this way, if the sign of the disproportionation reaction of the working medium 20 can be detected at an earlier stage, suppression of the disproportionation reaction can also be initiated earlier, thereby improving the effectiveness of the disproportionation reaction suppression.

In the present embodiment, when the detection voltage falls below a second voltage that is lower than the first voltage, the control circuit 35 interrupts or limits the operation of the drive circuit 31. The second voltage is set in order to determine whether a discharge phenomenon has occurred due to some abnormality in the compressor 4 or the drive circuit 31. Referring to Fig. 3, if the normal voltage (the first voltage) of the DC output current is taken as E, it is observed that, due to a discharge phenomenon, the voltage of the DC output current drops to 0.8E or less, and sometimes as low as 0.3E or less. From this point, it is preferable that the second voltage be between 0.3 and 0.8 times the first voltage, inclusive. In the present embodiment, the second voltage is set at 0.8 times the first voltage.

As described above, in the control device 3, the voltage detector 32 detects the DC output power to output the detection voltage, which indicates the voltage of the DC output power, as the first state. When the control circuit 35 detects the sign of the disproportionation reaction based on the first state regarding the drive circuit 31, it interrupts or limits the operation of the refrigeration cycle circuit 2. Here, the control circuit 35 determines the number of occurrences of the discharge phenomenon at the compressor 4 depending on the number of times that the detection voltage falls below the second voltage equal to or lower than the first voltage. The sign of the disproportionation reaction is when the number of occurrences of the discharge phenomenon reaches or exceeds a predetermined number of times.

The interrupting or limiting the operation of the refrigeration cycle circuit 2 may include interrupting the operation of the drive circuit 31, increasing the rotational speed of a fan of the condenser, decreasing the rotational speed of a fan of the evaporator, increasing an opening degree of the expansion valve, opening the expansion valve of at least one indoor unit 1b among multiple indoor units 1b which are not in operation (if the refrigeration cycle device 1 has multiple indoor units 1b), or, in the heating operation, switching to the cooling operation with the four-way valve 8 and opening the expansion valve 6.

The interrupting the operation of the drive circuit 31 can be realized by any of interrupting outputting the AC output power, interrupting outputting the DC output power, or interrupting inputting the input power. In the case of interrupting outputting the AC output power, the control circuit 35 sets the first protective device 33 to the OFF state to electrically disconnect the electric motor 42 from the drive circuit 31 and thereby interrupt outputting the AC output power. To restart outputting the AC output power, the control circuit 35 sets the first protective device 33 to the ON state to connect the electric motor 42 to the drive circuit 31. In the case of interrupting inputting the input power, the control circuit 35 sets the second protective device 34 to the OFF state to electrically disconnect the power supply 10 from the drive circuit 31 and thereby interrupt outputting the AC output power. To restart inputting the input power, the control circuit 35 sets the second protective device 34 to the ON state to connects the power supply 10 to the drive circuit 31.

The limiting the operation of the drive circuit 31 can be realized by reducing a setting value of an amplitude of the AC output power or reducing a setting value of a frequency of the AC output power. The control circuit 35 controls the drive circuit 31 to decrease the setting value of the amplitude of the AC output power. In the present embodiment, since the drive circuit 31 can provide five voltage levels of E, E/2, 0, -E/2, and -E, the setting value of the amplitude of the AC output power is changed from E to E/2. In this case, the rotational speed of the electric motor 42 decreases compared to when the setting value of the amplitude of the AC output power is E.

If inputting the input power is interrupted, outputting the AC output power is interrupted as a result. In the present embodiment, the control circuit 35 sets the second protective device 34 to the OFF state to electrically disconnect the power supply 10 from the drive circuit 31 and thereby interrupt outputting the AC output power. To restart inputting the input power, the control circuit 35 sets the second protective device 34 to the ON state to connect the power supply 10 to the drive circuit 31.

The control circuit 35 interrupts or limits the operation of the drive circuit 31 in a different way according to the number of times that the detection voltage has fallen below the second voltage. In particular, the control circuit 35 performs a process with a higher degree of suppression of the disproportionation reaction as the number of times that the detection voltage falls below the second voltage becomes greater. This allows the control device 3 to suppress the disproportionation reaction even if relatively minor discharge phenomena occur continuously in a short time. For example, this prevents induction of the disproportionation reaction by exceeding a predetermined energy due to continuous low-energy abnormal states (discharges), thereby improving the safety of use of the working medium 20.

The control circuit 35 also interrupts or limits the operation of the drive circuit 31 in a different way according to a time difference between a first time when the detection voltage first falls below the second voltage and a second time when the detection voltage falls below the second voltage next time. In particular, the control circuit 35 performs a process with a higher degree of suppression of the disproportionation reaction as the time difference becomes shorter. Thus, the control device 3 can suppress the disproportionation reaction even if relatively minor discharge phenomena occur continuously in a short time. For example, this prevents induction of a disproportionation reaction by exceeding a certain energy due to continuously occurring low-energy abnormal states (discharges), improving safety in the use of the working medium 20.

The process for suppressing the disproportionation reaction may include, for example, a first process to a third process. The first process is a process of interrupting outputting the AC output power and after a lapse of a waiting period, restarting outputting the AC output power. The second process is a process of interrupting outputting the AC output power and after a lapse of a waiting period, restarting the operation with a reduced setting value of the amplitude of the AC output power. The third process is a process of interrupting outputting the AC output power and interrupting inputting the input power. Among the first to third processes, the degree of suppression of the disproportionation reaction is higher in the order of the third, the second, and the first processes. Even in the first or second processes, the longer the waiting period, the higher the degree of the disproportionation suppression.

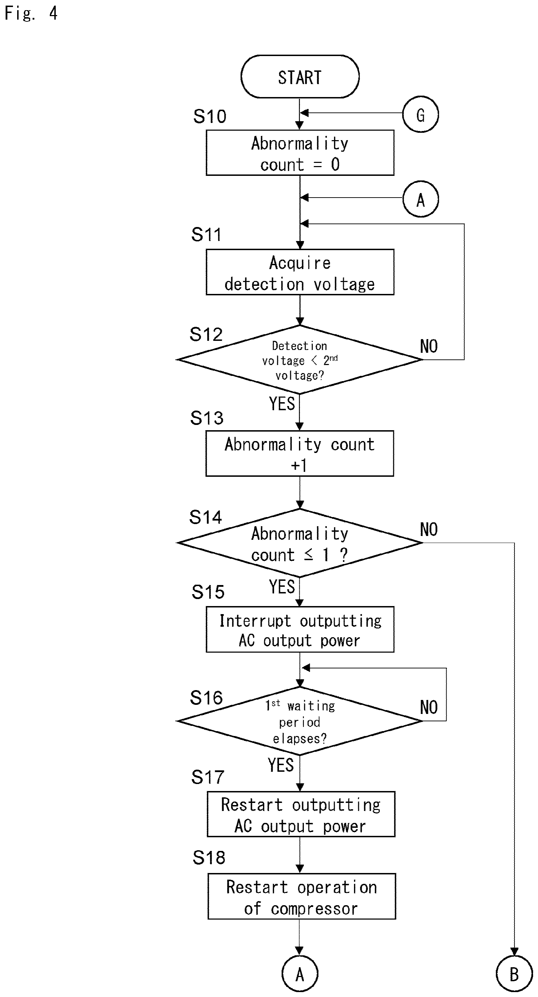

Next, an example of the operation of the control circuit 35 of the control device 3 will be briefly explained with reference to Figs. 4 to 9. Each of Figs. 4 to 9 represents a part of a flowchart showing the operation of the control circuit 35 of the control device 3, and a complete flowchart is obtained by combining Figs. 4 to 9.

Referring to Fig. 4, the control circuit 35 outputs the AC output power to the electric motor 42 based on the input power from the power supply 10 by use of the drive circuit 31, thereby driving the compressor 4. The control circuit 35 sets an abnormality count to zero (S10). The abnormality count indicates the number of times that the detection voltage has fallen below the second voltage. A higher abnormality count serves as an indicator of a higher likelihood of occurrence of the disproportionation reaction.

The control circuit 35 obtains the detection voltage from the voltage detector 32 (S11). The control circuit 35 determines whether the detection voltage falls below the second voltage (S12).

If the detection voltage does not fall below the second voltage (S12: NO), the process returns to step S10. Through steps S11 and S12, the control circuit 35 determines, at a predetermined interval, whether the detection voltage falls below the second voltage. It is preferable that this predetermined interval be shorter than the period corresponding to the reference frequency (e.g., 1000 to 5000 Hz) of the inverter circuit 312.

If, in step S12, the detection voltage falls below the second voltage (S12: YES), the control circuit 35 increments the abnormality count by one (S13) and determines whether the abnormality count is one or less (S14).

If, in step S14, the abnormality count is one or less (S14: YES), the control circuit 35 sets the first protective device 33 to the OFF state to interrupt outputting the AC output power (S15). The control circuit 35 then determines whether first waiting period has elapsed after the interruption of outputting the AC output power (S16). The first waiting period is, for example, 1 second. When the first waiting period has elapsed (S16: YES), the control circuit 35 sets the first protective device 33 to the ON state to restart outputting the AC output power (S17), thereby restarting the operation of the compressor 4 (S18). Thereafter, the process returns to step S11.

In this way, the control circuit 35 interrupts outputting the AC output power when the detection voltage falls below the second voltage, and restarts outputting the AC output power after the first waiting period has elapsed.

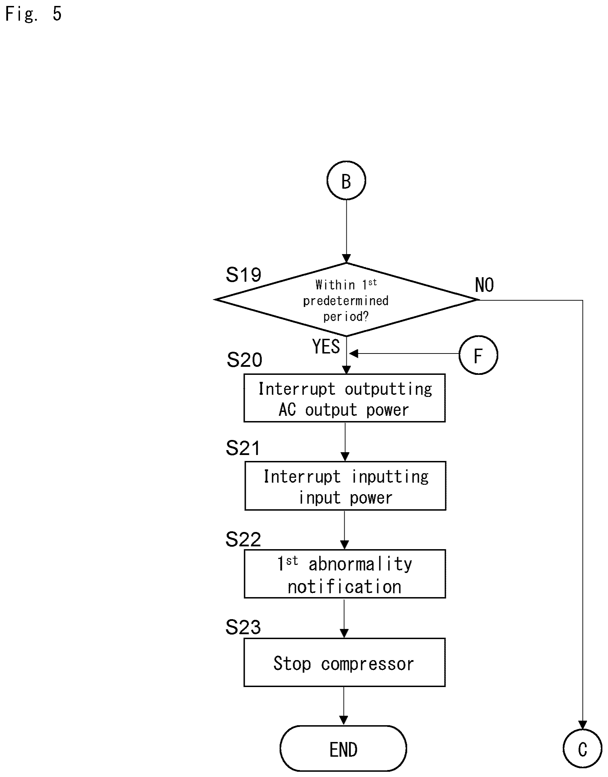

If, in step S14, the abnormality count is greater than one (S14: NO), referring to Fig. 5, the control circuit 35 determines whether the time difference between the first time when the detected voltage first falls below the second voltage and the second time when the detection voltage falls below the second voltage next time is within a first predetermined period (step S19). A shorter time difference serves as an indicator of a higher likelihood of occurrence of the disproportionation reaction. The first predetermined period is, for example, about 100 times the period corresponding to the reference frequency of the inverter circuit 312, i.e., about 20 to 100 ms.

If in step S19 the time difference is within the first predetermined period (step S19: YES), the control circuit 35 sets the first protective device 33 to the OFF state to interrupt outputting the AC output power (S20). The control circuit 35 sets the second protective device 34 to the OFF state to interrupt inputting the input power (S21). The control circuit 35 outputs a first abnormality notification (S22). The first abnormality notification indicates that an abnormality with a very high likelihood of causing the disproportionation reaction in the refrigeration cycle device 1 has occurred. The first abnormality notification is output to, for example, a control circuit of the indoor unit 1b and a remote controller, etc. After this, the control circuit 35 interrupts the operation of the compressor 4 (S23).

In this way, if the detection voltage falls below the second voltage before a predetermined period (the first predetermined period) elapses after restart (S17) of outputting the AC output power after a lapse of the first waiting period (S19: YES), the control circuit 35 interrupts outputting the AC output power (S20) and interrupts inputting the input power (S21).

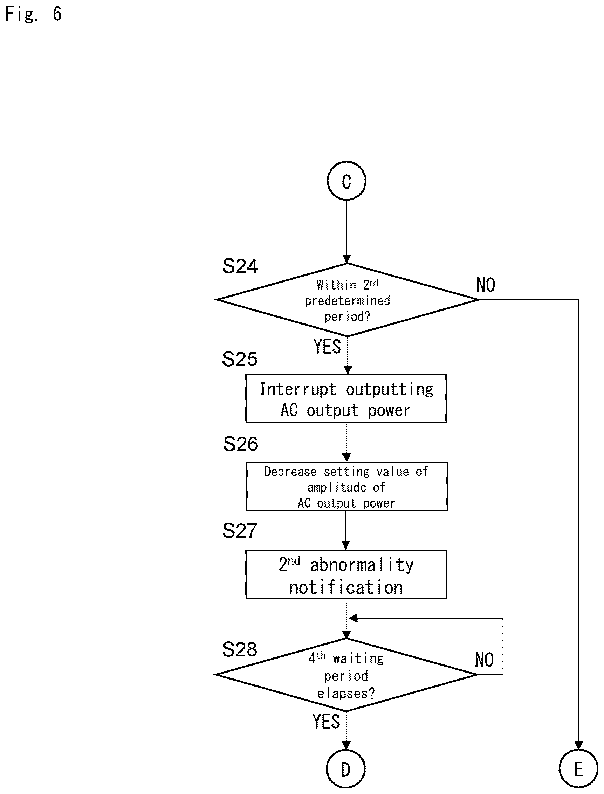

If in step S19 the time difference is not within the first predetermined period (S19: NO), referring to Fig. 6, the control circuit 35 determines whether the time difference is within a second predetermined period that is longer than the first predetermined period (step S24). The second predetermined period is, for example, about 1,000 times the period corresponding to the reference frequency of the inverter circuit 312, i.e., about 200 ms to 1 s.

If in step S24 the time difference is within the second predetermined period (S24: YES), the control circuit 35 sets the first protective device 33 to the OFF state to interrupt outputting the AC output power (S25). The control circuit 35 changes the switching control of the semiconductor switching elements of the drive circuit 31 so that the setting value of the amplitude of the AC output power is reduced from E to E/2 (S26). The control circuit 35 outputs a second abnormality notification (S27). The second abnormality notification indicates that an abnormality with a high likelihood of causing the disproportionation reaction has occurred in the refrigeration cycle device 1. The second abnormality notification is output, for example, to the control circuit of the indoor unit 1b and to a remote controller.

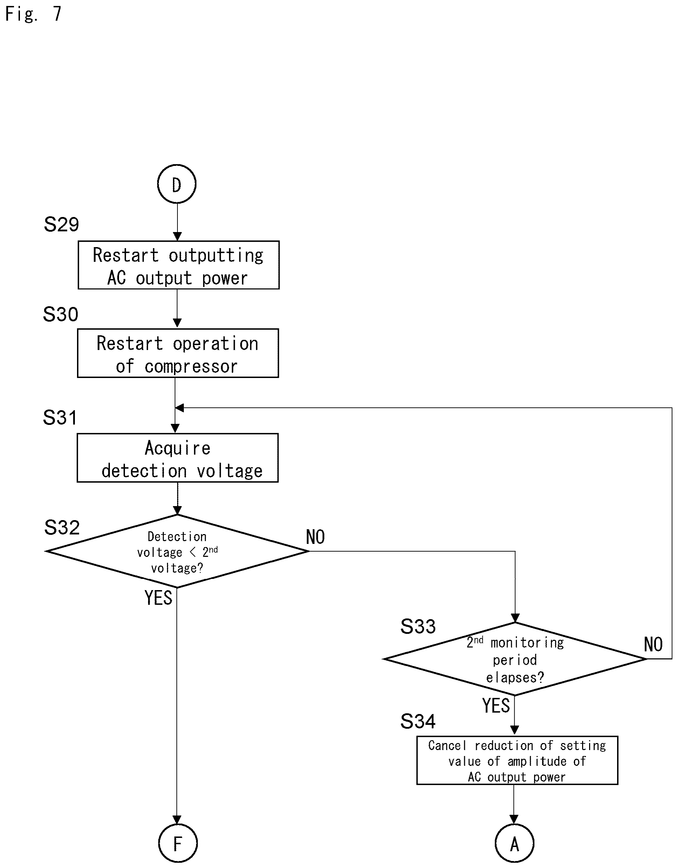

The control circuit 35 determines whether fourth waiting period has elapsed after the interruption of outputting the AC output power (S28). The fourth waiting period is longer than the first waiting period and is, for example, 60 seconds. When the fourth waiting period has elapsed (S28: YES), as shown in Fig. 7, the control circuit 35 sets the first protective device 33 to the ON state to restart outputting the AC output power (S29), thereby restarting the operation of the compressor 4 (S30). In this case, the setting value of the amplitude of the AC output power remains reduced from E to E/2.

Thus, if the detection voltage falls below the second voltage before a prescribed period (the second predetermined period) elapses after restart (S17) of outputting the AC output power after a lapse of the first waiting period, the control circuit 35 interrupts outputting the AC output power (S25) and reduces the setting value of the amplitude of the AC output power (S26). If the fourth waiting period, which is longer than the first waiting period, elapses after the interruption of outputting the AC output power, the control circuit 35 restarts outputting the AC output power while keeping the setting value of the amplitude reduced (S29).

Thereafter, the control circuit 35 obtains the detection voltage from the voltage detector 32 (S31) and determines whether the detection voltage falls below the second voltage (S32).

If in step S32 the detection voltage falls below the second voltage (S32: YES), the process proceeds to step S20 in Fig. 5.

If in step S32 the detection voltage does not fall below the second voltage (S32: NO), the control circuit 35 determines whether a second monitoring period has elapsed since restart of the operation of the compressor 4 (S33).

If in step S33 the second monitoring period has elapsed since restart of the operation of the compressor 4 (S33: YES), the control circuit 35 cancels the reduction of the setting value of the amplitude of the AC output power and returns the setting value of the amplitude to E (S34), and the process proceeds to step S11 in Fig. 4.

If in step S33 the second monitoring period has not elapsed since restart of the operation of the compressor 4 (S33: NO), the process returns to step S31.

In steps S31 to S33, if the detection voltage falls below the second voltage before the second monitoring period has elapsed since restart of the operation of the compressor 4, the process proceeds to step S20 in Fig. 5. If the detection voltage does not fall below the second voltage before the end of the second monitoring period after the restart of the operation of the compressor 4, the process proceeds to step S34.

In this way, if the detection voltage does not fall below the second voltage during the second monitoring period after the restart (S29) of the outputting the AC output power after a lapse of the fourth waiting period (S33: YES), the control circuit 35 cancels the reduction of the setting value of the amplitude of the AC output power (S34). If the detection voltage falls below the second voltage before the second monitoring period elapses after the restart (S29) of outputting the AC output power after a lapse of the fourth waiting period (S32: YES), the control circuit 35 interrupts outputting the AC output power (S20) and interrupts inputting the input power (S21).

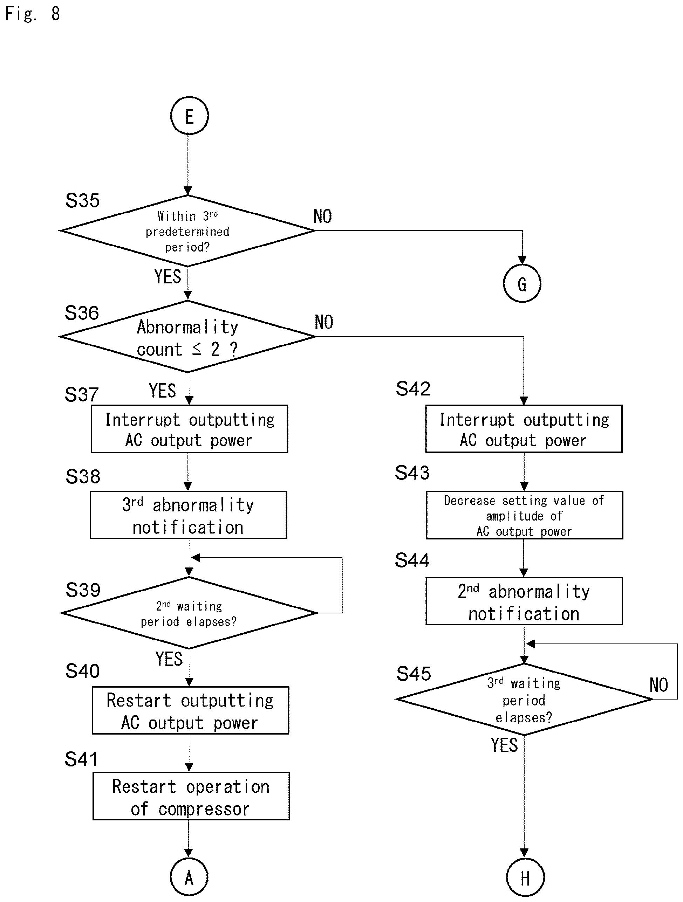

Returning to Fig. 6, if in step S24 the time difference is not within the second predetermined period (S24: NO), referring to Fig. 8, the control circuit 35 determines whether the time difference is within a third predetermined period, which is longer than the second predetermined period (step S35). The third predetermined period is, for example, about 10,000 times the period corresponding to the reference frequency of the inverter circuit 312, that is, about 2 to 10 s.

If in step S35 the time difference is not within the third predetermined period (S35: NO), the process returns to step S10, and the control circuit 35 sets the abnormality count to zero (see Fig. 4). That is, if sufficient time has passed since the last abnormality detection, it is considered that the possibility of occurrence of a discharge phenomenon is low, and the abnormality count is reset to zero.

If in step S35 the time difference is within the third predetermined period (S35: YES), the control circuit 35 determines whether the abnormality count is two or less (S36).

If in step S36 the abnormality count is two or less (S36: YES), the control circuit 35 sets the first protective device 33 to the OFF state to interrupt outputting the AC output power (S37). The control circuit 35 outputs a third abnormality notification (S38). The third abnormality notification indicates that an abnormality that may cause a disproportionation reaction has occurred in the refrigeration cycle device 1. The third abnormality notification is output, for example, to the control circuit of the indoor unit 1b and to a remote controller. The control circuit 35 determines whether a second waiting period has elapsed after the interruption of outputting the AC output power (S39). The second waiting period is longer than the first waiting period and is, for example, 10 seconds. When the second waiting period has elapsed (S39: YES), the control circuit 35 sets the first protective device 33 to the ON state to restart outputting the AC output power (S40), thereby restarting the operation of the compressor 4 (S41). Thereafter, the process returns to step S11.

In this way, if the detection voltage falls below the second voltage before a predetermined period (the third predetermined period) elapses after the restart of outputting the AC output power after a lapse of the first waiting period (S17), the control circuit 35 interrupts outputting the AC output power. If the second waiting period, which is longer than the first waiting period, has elapsed after the interruption of outputting the AC output power, the control circuit 35 restarts outputting the AC output power (S40).

In step S36, if the abnormality count is not two or less (S36: NO), that is, if the abnormality count is three or more, the control circuit 35 sets the first protective device 33 to the OFF state to interrupt outputting the AC output power (S42). The control circuit 35 changes the switching control of the semiconductor switching elements of the drive circuit 31 so that the setting value of the amplitude of the AC output power is reduced from E to E/2 (S43). The control circuit 35 outputs the second abnormality notification (S44).

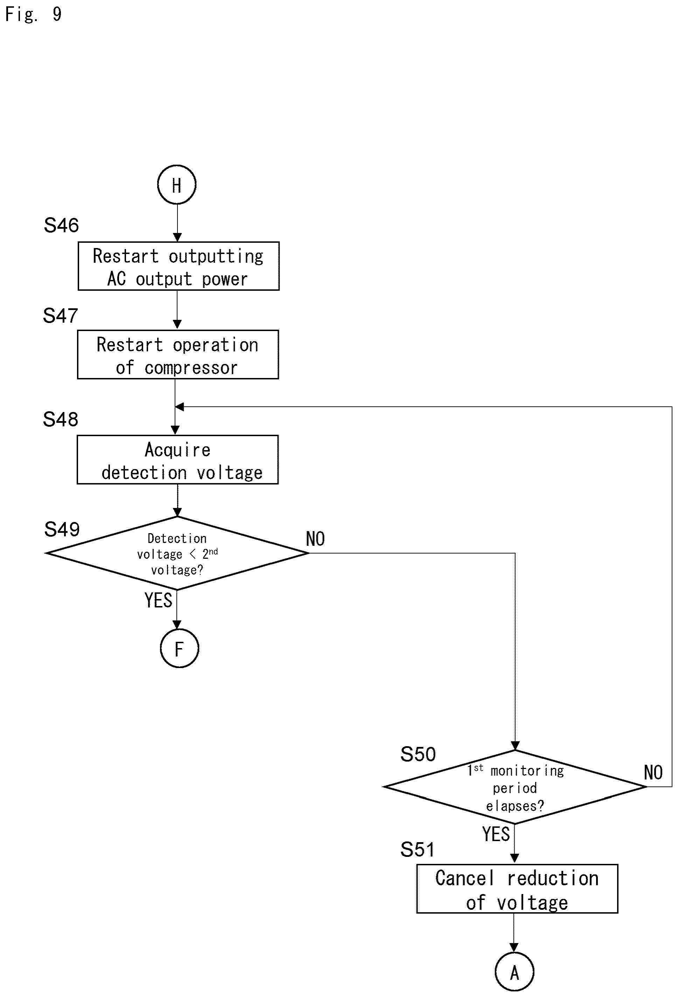

The control circuit 35 determines whether third waiting period has elapsed after the interruption of outputting the AC output power (S45). The third waiting period is longer than the second waiting period and is, for example, 60 seconds. When the third waiting period has elapsed (S45: YES), as shown in Fig. 9, the control circuit 35 sets the first protective device 33 to the ON state to restart outputting the AC output power (S46), thereby restarting the operation of the compressor 4 (S47). In this case, the setting value of the amplitude of the AC output power remains reduced from E to E/2.

Thus, if the detection voltage falls below the second voltage before a predetermined period (the third predetermined period) elapses after the restart of outputting the AC output power after a lapse of the second waiting period (S40), the control circuit 35 interrupts outputting the AC output power (S42) and reduces the setting value of the amplitude of the AC output power (S43). If the third waiting period, which is longer than the second waiting period, has elapsed after the interruption of outputting the AC output power, the control circuit 35 restarts outputting the AC output power while keeping the setting value of the amplitude reduced (S47).

Thereafter, the control circuit 35 obtains the detection voltage from the voltage detector 32 (S48) and determines whether the detection voltage falls below the second voltage (S49).

If in step S49 the detection voltage falls below the second voltage (S49: YES), the process proceeds to step S20 in Fig. 5.

If in step S49 the detection voltage does not fall below the second voltage (S49: NO), the control circuit 35 determines whether a first monitoring period has elapsed since restart of the operation of the compressor 4 (S50). The first monitoring period may be the same as or different from the second monitoring period in step S33.

If in step S50 the first monitoring period has elapsed since restart of the operation of the compressor 4 (S50: YES), the control circuit 35 cancels the reduction of the setting value of the amplitude of the AC output power and returns the setting value of the amplitude to E (S51), and then the process proceeds to step S11 in Fig. 4.

If in step S50 the first monitoring period has not elapsed since restart of the operation of the compressor 4 (S50: NO), the process returns to step S48.

In steps S48 to S50, if the detection voltage falls below the second voltage before the first monitoring period has elapsed since restart of the operation of the compressor 4, the process proceeds to step S20 in Fig. 5, and if the detection voltage does not fall below the second voltage before the end of the first monitoring period, the process proceeds to step S51.

In this way, if the detection voltage does not fall below the second voltage during the first monitoring period after the restart (S47) of the AC output power after a lapse of the third waiting period (S50: YES), the control circuit 35 cancels the reduction of the setting value of the amplitude of the AC output power (S51). If the detection voltage falls below the second voltage before the first monitoring period elapses after the restart (S47) of outputting the AC output power after a lapse of the third waiting period (S49: YES), the control circuit 35 interrupts outputting the AC output power (S20) and interrupts inputting the input power (S21).

### [1.1.2 ADVANTAGEOUS EFFECTS]

The aforementioned control device 3 is a control device for controlling the refrigeration cycle circuit 2 allowing circulation of the working medium 20 containing the refrigerant component capable of undergoing the disproportionation reaction, includes: the drive circuit 31 configured to drive the compressor 4 of the refrigeration cycle circuit 2; and the control circuit 35 configured to interrupt or limit the operation of the refrigeration cycle circuit 2 in response to detecting the sign of the disproportionation reaction based on at least one of the first state regarding the drive circuit 31 for driving the compressor 4 of the refrigeration cycle circuit 2 or the second state regarding the working medium 20. This configuration enables improvement of accuracy of detection of the disproportionation reaction of the working medium 20 and improvement of suppression of the disproportionation reaction.

In the control device 3, the drive circuit 31 includes the converter circuit 311 configured to output the DC output power so that the voltage of the DC output power is equal to the first voltage, based on the input power from the power supply 10, and the inverter circuit 312 configured to output the AC output power to the electric motor 42, based on the DC output power. The control device 3 includes the voltage detector 32 configured to detect the DC output power to output the detection voltage indicative of the voltage of the DC output power, as the first state. The control circuit 35 is configured to determine the number of discharge occurrences in the compressor 4 by the number of times that the detection voltage falls below the second voltage equal to or smaller than the first voltage. The sign of the disproportionation reaction is that the number of the discharge occurrences is equal to or larger than the predetermined number of times. This configuration enables earlier detection of the sign of the disproportionation reaction of the working medium 20, and enables improvement of suppression of the disproportionation reaction.

The aforementioned control device 3 seems to perform the following control method. The control method includes interrupting or limiting the operation of the refrigeration cycle circuit 2 in response to detecting the sign of the disproportionation reaction based on at least one of the first state regarding the drive circuit 31 for driving the compressor 4 of the refrigeration cycle circuit 2 or the second state regarding the working medium 20. This configuration enables improvement of accuracy of detection of the disproportionation reaction of the working medium 20 and improvement of suppression of the disproportionation reaction.

The control method further includes determining the number of discharge occurrences in the compressor 4, based on the second state. The sign of the disproportionation reaction is that the number of the discharge occurrences is equal to or larger than the predetermined number of times. This configuration enables earlier detection of the sign of the disproportionation reaction of the working medium 20, and enables improvement of suppression of the disproportionation reaction.

The control method performed by the control device 3 can be realized by a computer system executing a program. This program is a program executed by a computer system included in the control device 3 for controlling the refrigeration cycle circuit 2 allowing circulation of the working medium 20 containing the refrigerant component capable of undergoing the disproportionation reaction, and enables the computer system to perform a process of interrupting or limiting the operation of the refrigeration cycle circuit 2 in response to detecting the sign of the disproportionation reaction based on at least one of the first state regarding the drive circuit 31 for driving the compressor 4 of the refrigeration cycle circuit 2 or the second state regarding the working medium 20. This configuration enables improvement of accuracy of detection of the disproportionation reaction of the working medium 20 and improvement of suppression of the disproportionation reaction.

The aforementioned control device 3 controls the compressor 4 of the refrigeration cycle circuit 2 allowing circulation of the working medium 20. The working medium 20 contains ethylene-based fluoroolefin as a refrigerant component. The control device 3 includes the drive circuit 31 including the converter circuit 311 configured to output DC output power so that the voltage of the DC output power is equal to the first voltage, based on input power from the power supply 10, and the inverter circuit 312 configured to output AC output power to the electric motor 42, based on the DC output power, the voltage detector 32 configured to detect the DC output power to output the detection voltage indicative of the voltage of the DC output power, and the control circuit 35 configured to interrupt or limit the operation of the drive circuit 31 when the detection voltage falls below the second voltage equal to or smaller than the first voltage. This configuration enables earlier detection of the sign of the disproportionation reaction of the working medium 20, and enables improvement of suppression of the disproportionation reaction.

In the control device 3, interrupting the operation of the drive circuit includes at least one of interrupting outputting the AC output power, interrupting outputting the DC output power, or interrupting inputting the input power. This configuration enables earlier detection of the sign of the disproportionation reaction of the working medium 20, and enables improvement of suppression of the disproportionation reaction.

In the control device 3, limiting the operation of the drive circuit includes at least one of decreasing a setting value of an amplitude of the AC output power, or, decreasing a setting value of a frequency of the AC output power. This configuration enables earlier detection of the sign of the disproportionation reaction of the working medium 20, and enables improvement of suppression of the disproportionation reaction.

In the control device 3, the control circuit 35 is configured to interrupt or limit the operation of the drive circuit in a different way depending on a time difference between first time when the detection voltage falls below the second voltage and second time when the detection voltage falls below the second voltage. This configuration makes it possible to suppress the disproportionation reaction of the working medium 20, even when a discharge phenomenon occurs continuously.

In the control device 3, the control circuit 35 is configured to interrupt or limit the operation of the drive circuit 31 in a different way depending on a number of times that the detection voltage falls below the second voltage. This configuration makes it possible to suppress the disproportionation reaction of the working medium 20, even when a discharge phenomenon occurs continuously.

In the control device 3, the control circuit 35 is configured to interrupt outputting the AC output power when the detection voltage falls below the second voltage, and restart outputting the AC output power after first waiting period has elapsed after the interruption of outputting the AC output power. This configuration makes it possible to continue the operation of the compressor 4 while suppressing the disproportionation reaction of the working medium 20.

In the control device 3, the control circuit 35 is configured to interrupt outputting the AC output power when the detection volage falls below the second voltage before predetermined time elapses after the restart of outputting the AC output power after the first waiting period has elapsed, and restart outputting the AC output power when second waiting period longer than the first waiting period has elapsed after the interruption of outputting the AC output power. This configuration makes it possible to continue the operation of the compressor 4 while suppressing the disproportionation reaction of the working medium 20.

In the control device 3, the control circuit 35 is configured to interrupt outputting the AC output power and decrease at least one of a setting value of an amplitude of the AC output power when the detection volage falls below the second voltage before predetermined time elapses after the restart of outputting the AC output power after the second waiting period has elapsed, and restart outputting the AC output power while keeping decreasing the setting value of the amplitude of the AC output power, when third waiting period longer than the second waiting period has elapsed after the interruption of outputting the AC output power. This configuration makes it possible to continue the operation of the compressor 4 while suppressing the disproportionation reaction of the working medium 20.

the control circuit 35 is configured to cancel decreasing the setting value of the amplitude of the AC output power when the detection voltage does not fall below the second voltage during monitoring period after the restart of outputting the AC output power after the third waiting period has elapsed, and interrupt outputting the AC output power and interrupt inputting the input power when the detection voltage falls below the second voltage before the monitoring period elapses after the restart of outputting the AC output power after the third waiting period has elapsed. This configuration makes it possible to continue the operation of the compressor 4 while suppressing the disproportionation reaction of the working medium 20.

In the control device 3, the control circuit 35 is configured to interrupt outputting the AC output power and decrease a setting value of an amplitude of the AC output power when the detection volage falls below the second voltage before predetermined time elapses after the restart of outputting the AC output power after the first waiting period has elapsed, and restart outputting the AC output power while keeping decreasing the setting value of the amplitude of the AC output power, when fourth waiting period has elapsed after the interruption of outputting the AC output power. This configuration makes it possible to continue the operation of the compressor 4 while suppressing the disproportionation reaction of the working medium 20.

In the control device 3, the control circuit 35 is configured to cancel decreasing the setting value of the amplitude of the AC output power when the detection voltage does not fall below the second voltage during monitoring period after the restart of outputting the AC output power after the fourth waiting period has elapsed, and interrupt outputting the AC output power and interrupt inputting the input power when the detection voltage falls below the second voltage before the monitoring period elapses after the restart of outputting the AC output power after the fourth waiting period has elapsed. This configuration makes it possible to continue the operation of the compressor 4 while suppressing the disproportionation reaction of the working medium 20.

In the control device 3, the control circuit 35 is configured to interrupt outputting the AC output power and interrupt inputting the input power when the detection voltage falls below the second voltage before predetermined time elapses after the restart of outputting the AC output power after the first waiting period has elapsed. This configuration enables earlier detection of the sign of the disproportionation reaction of the working medium 20, and enables improvement of suppression of the disproportionation reaction.

In the control device 3, the second voltage is between 0.3 times and 0.8 times the rated voltage, inclusive. This configuration enables earlier detection of the sign of the disproportionation reaction of the working medium 20, and enables improvement of suppression of the disproportionation reaction.

The aforementioned refrigeration cycle device 1 includes the control device 3 and the refrigeration cycle circuit 2. This configuration enables earlier detection of the sign of the disproportionation reaction of the working medium 20, and enables improvement of suppression of the disproportionation reaction.

In the refrigeration cycle device 1, the ethylene-based fluoroolefin contains ethylene-based fluoroolefin likely to undergo a disproportionation reaction. This configuration makes it possible to enhance the suppression of the disproportionation reaction of the working medium 20.

In the refrigeration cycle device 1, the ethylene-based fluoroolefin is 1,1,2-trifluoroethylene, trans-1,2-difluoroethylene, cis-1,2-difluoroethylene, 1,1-difluoroethylene, tetrafluoroethylene, or monofluoroethylene. This configuration makes it possible to enhance the suppression of the disproportionation reaction of the working medium 20.

In the refrigeration cycle device 1, the working medium 20 contains difluoromethane as the refrigerant component. This configuration makes it possible to enhance the suppression of the disproportionation reaction of the working medium 20.

In the refrigeration cycle device 1, the working medium 20 further contains a saturated hydrocarbon. This configuration makes it possible to enhance the suppression of the disproportionation reaction of the working medium 20.

In the refrigeration cycle device 1, the working medium 20 contains a haloalkane with 1 or 2 carbon atoms as a disproportionation inhibitor for suppressing a disproportionation reaction of the ethylene-based fluoroolefin. This configuration makes it possible to enhance the suppression of the disproportionation reaction of the working medium 20.

In the refrigeration cycle device 1, the saturated hydrocarbon contains n-propane. This configuration makes it possible to enhance the suppression of the disproportionation reaction of the working medium 20.

The aforementioned control device 3 seems to perform the following control method. The control method is performed by the control device 3 for controlling the compressor 4 of the refrigeration cycle circuit 2 allowing circulation of the working medium 20. The working medium 20 contains ethylene-based fluoroolefin as a refrigerant component. The control device 3 includes the drive circuit 31 including the converter circuit 311 configured to output DC output power so that the voltage of the DC output power is equal to the first voltage, based on input power from the power supply 10, and the inverter circuit 312 configured to output AC output power to the electric motor 42, based on the DC output power. The control method includes interrupting or limiting the operation of the drive circuit 31 when the voltage of the DC output power falls below the second voltage equal to or smaller than the first voltage. This configuration enables earlier detection of the sign of the disproportionation reaction of the working medium 20, and enables improvement of suppression of the disproportionation reaction.

The control method performed by the control device 3 can be implemented by a computer system executing a program. This program is executed by a computer system included in the control device 3 for controlling the compressor 4 of the refrigeration cycle circuit 2 allowing circulation of the working medium 20. The working medium 20 contains ethylene-based fluoroolefin as a refrigerant component. The control device 3 includes the drive circuit 31 including the converter circuit 311 configured to output DC output power so that the voltage of the DC output power is equal to the first voltage, based on input power from the power supply 10, and the inverter circuit 312 configured to output AC output power to the electric motor 42, based on the DC output power. The program enables the computer system to interrupt or limit the operation of the drive circuit 31 when the voltage of the DC output power falls below the second voltage equal to or smaller than the first voltage. This configuration enables earlier detection of the sign of the disproportionation reaction of the working medium 20, and enables improvement of suppression of the disproportionation reaction.

### [1.2 EMBODIMENT 2]

### [1.2.1 CONFIGURATIONS]

The present embodiment provides a control device, a refrigeration cycle device, a control method, and, a program which enable improvement of accuracy of detection of a disproportionation reaction of a working medium and improvement of suppression of the disproportionation reaction.

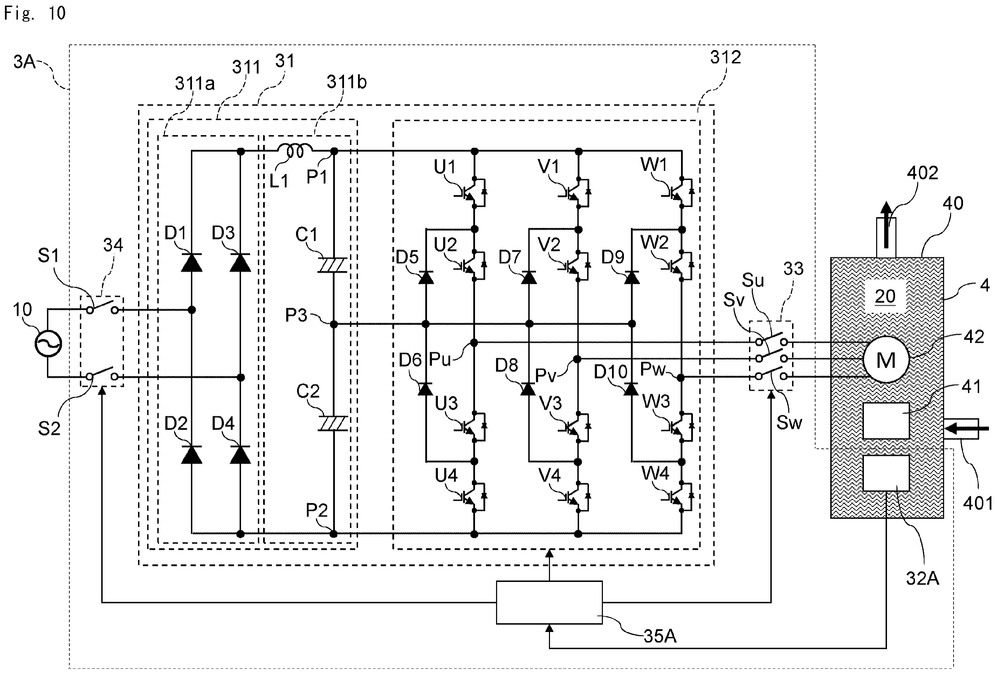

Fig. 10 is a schematic view of the compressor 4 and a control device 3A of a refrigeration cycle device according to Embodiment 2. The refrigeration cycle device according to Embodiment 2 includes the same configuration as the refrigeration cycle device 1 according to Embodiment 1, and therefore, with respect to the same configuration, Fig. 1 and the reference numerals will be employed as appropriate.

The control device 3A is configured to control the compressor 4 of the refrigeration cycle circuit 2.

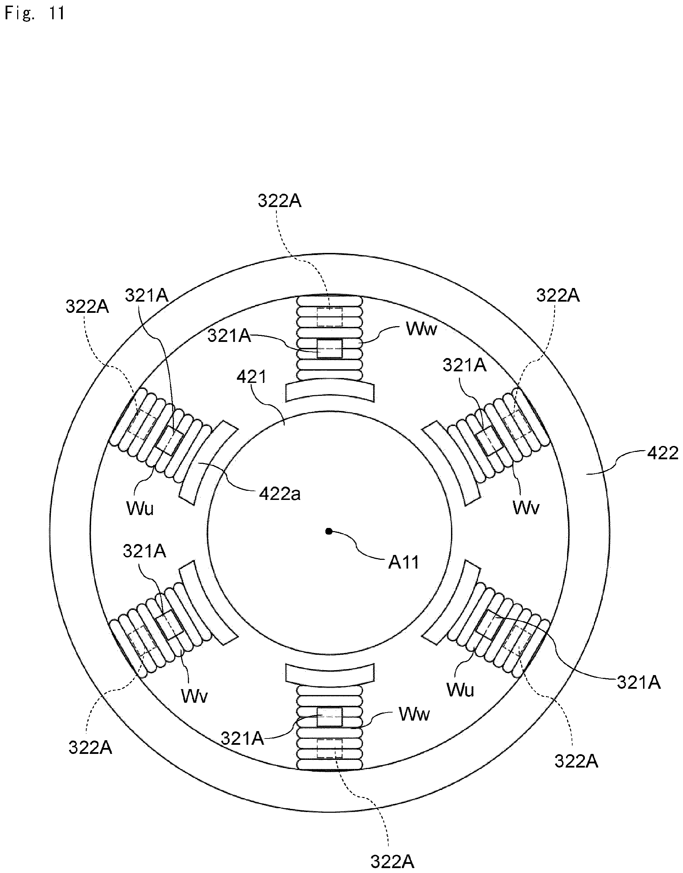

Fig. 11 is a schematic view of the electric motor 42. The electric motor 42 includes a rotator 421 fixed to the crank shaft of the compression mechanism 41 and a stator 422 provided in a vicinity of the rotator 421, for example. The stator 422 is configured by concentrated or distributed winding of the stator windings (magnet wires) Wu, Wv, Ww around a stator core (electrical or magnetic steel sheet or the like) 422a with an insulation member such as insulation paper in-between. In Fig. 3, the stator 422 includes total six stator windings including two stator windings Wu corresponding to the U-phase, two stator windings Wv corresponding to the V-phase, and two stator windings Ww corresponding to the W-phase.

The control device 3A includes the drive circuit 31, a light detection device 32A, the first protective device 33, the second protective device 34, and a control circuit 35A.

The light detection device 32A is configured to detect light inside the sealed container 40 to output an intensity of that light. Factors of a disproportionation reaction of the working medium 20 are considered to include heat and radicals. For example, it is considered that a disproportionation reaction of the working medium 20 may progress when radicals are generated under a high temperature and high pressure environment. Radicals may be generated by a discharge phenomenon at the compressor 4 or the drive circuit 31, for example. The present inventors have found that, when a disproportionation reaction occurs in the compressor 4, light is generated within the sealed container 40.

Here, an experiment was conducted to verify the occurrence of a disproportionation reaction using a working medium containing 1,1,2-trifluoroethylene (HFO-1123).

In the disproportionation reaction experiment, a sealed, pressure-resistant container (stainless steel sealed container, internal volume: 50 mL) was equipped with a pressure sensor (GC61, manufactured by Nagano Keiki Co., Ltd.) for measuring the internal pressure of the pressure-resistant container, a thermocouple (PL Thermocouple Grand PL-18-K-A4-T, manufactured by Conax Technologies) for measuring the internal temperature of the pressure-resistant container, and discharge electrodes D for generating discharge inside the pressure-resistant container. Furthermore, a gas cylinder of 1,1,2-trifluoroethylene was connected so that the pressure could be adjusted. In addition, a mantle heater was installed to heat the entire pressure-resistant container (but its window plate), and a ribbon heater (Flexible Ribbon Heater 1 m, 200 W, manufactured by Tokyo Research Institute Co., Ltd.) was installed to heat the piping section as well. In addition, in order to observe the light emission behavior of the disproportionation reaction caused by discharge, a digital camera (commercially available product, 240 fps) was installed at a position facing the window plate of the pressure-resistant container. In this way, the experimental system for the disproportionation reaction was constructed.

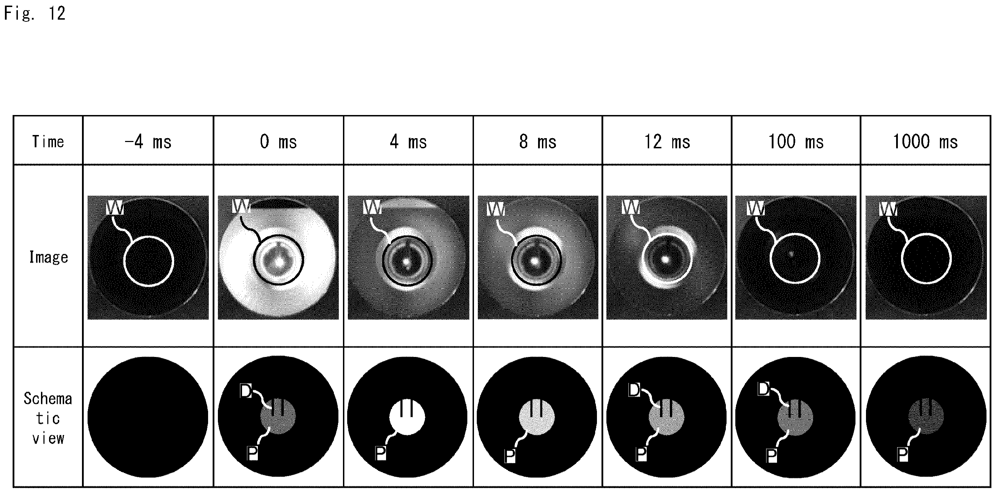

Fig. 12 is an explanatory diagram of the results of an experiment for verifying whether or not a disproportionation reaction occurs. In Fig. 12, when 1,1,2-trifluoroethylene was used as the working medium, images of representative frames were illustrated from left to right in chronological order, in which the behavior of plasma and a reaction fireball generated by a discharge of approximately 0.2 J was captured at 4.2 ms per frame. In Fig. 12, schematic diagrams are shown below the images. Each schematic diagram schematically illustrates the central portion W of the corresponding upper image. In the schematic diagrams, D denotes parallel discharge electrodes of the discharge device, and P denotes a discharge location. In Fig. 12, the elapsed time is indicated above the images. The time is shown by defining the frame in which plasma generated by the discharge was captured as 0 ms, and indicating elapsed time from the discharge.

At the moment of discharge (0 ms), bluish-white light emission was observed at the center of the frame (discharge location P). Spectroscopic measurements confirmed that this emission was strong in the range of 200 nm to 600 nm. In subsequent frames (4 to 12 ms), although light emission was continuously observed at the center of the frame (discharge location P), as in the 0 ms frame, the emission color changed to reddish-orange. Spectroscopic measurements confirmed that this emission was particularly strong at 600 nm or more, and had an emission profile similar to blackbody radiation. That is, in the frames from 4 ms to 12 ms, the emission was observed strongly in the range of 600 nm to 2000 nm. After 8 ms, the reddish-orange emission was observed to weaken, and after 100 ms it scarcely exhibited any light emission, eventually returning to a darkness level comparable to that before discharge (-4 ms) after about 1000 ms. As a result of investigating this behavior by varying the discharge energy, the light emission (bluish-white) due to plasma at 0 ms appeared in all cases, disappeared within 4 ms, and its emission intensity increased with increasing discharge energy. On the other hand, the duration of the subsequent emission of the reaction fireball (reddish-orange) varied between several milliseconds and several tens of milliseconds, and increased with increasing discharge energy. The intensity of the reddish-orange emission appearing in the 8 ms frame also slightly increased with increasing discharge energy.

As shown in Fig. 12, even when a reddish-orange reaction fireball was generated, no flame propagation throughout the entire reactor by spontaneous reaction propagation occurred when the discharge energy was as low as approximately 0.2 J. That is, even when plasma (0 ms) or a reaction fireball (4 to several tens of ms) was generated and emitted light, if the extent of the light emission was small, reaction propagation spreading throughout the entire vessel did not occur. In addition, there were differences in the intensity and duration of the light emission between the light emission in the visible region caused by plasma and the light emission in the visible to near-infrared region caused by the reaction fireball. The light emission in the visible region was characterized by being weak in intensity but always observed in all discharge phenomena. In contrast, the light emission in the visible to near-infrared region tended to have a stronger integrated emission intensity due to its longer duration, but had a characteristic of being less likely to be observed in weak discharges with low discharge energy. Accordingly, in order to suppress propagation of the disproportionation reaction, it is preferable to utilize the respective characteristics of these light emissions and to detect slight light emission states at an early stage and with high sensitivity.

As described above, it was confirmed that at least a portion of the wavelength of light emitted from a fireball generated by the disproportionation reaction is included in the near-infrared region or in a range greater than 600 nm and equal to or less than 2000 nm. The light emitted from the fireball generated by the disproportionation reaction has a relatively long emission time and a relatively large emission amount. That is, although the light emitted from the fireball generated by the disproportionation reaction is observed in an early stage of the progress of the disproportionation reaction, the detection itself is relatively easy. Accordingly, the light detection device 32A detects first light having a wavelength greater than 600 nm and equal to or less than 2000 nm. Hereinafter, for the sake of simplification of description, light having a wavelength greater than 600 nm and equal to or less than 2000 nm is referred to as "first light." The wavelength of the first light is mainly included in the near-infrared wavelength region.

Referring to Fig. 11, the light detection device 32A includes a plurality of light detectors 321Aand 322A configured to detect the first light. The plurality of light detectors 321A and 322A are disposed inside the sealed container 40. In the compressor 4, the disproportionation reaction may be caused by a discharge phenomenon in the stator windings, or by sliding of the crankshaft of the compression mechanism 41. Therefore, the light detector 321A is disposed on a first end side (front side of the drawing) in the direction of the rotational axis A11 of the electric motor 42. The light detector 322A is disposed on a second end side (rear side of the drawing) in the direction of the rotational axis A11 of the electric motor 42. This makes it possible to improve the accuracy of detection of the disproportionation reaction. In particular, in Fig. 11, with respect to each of the six stator windings, i.e., the two stator windings Wu corresponding to the U-phase, the two stator windings Wv corresponding to the V-phase, and the two stator windings Ww corresponding to the W-phase, one light detector 321A and one light detector 322A are disposed. Accordingly, the light detectors 321A and 322A are disposed on both sides of each stator winding in the direction of the rotational axis A11 of the electric motor 42. In this configuration, since the light detectors 321A and 322A are disposed on the first end side or the second end side in the direction of the rotational axis A11 of the electric motor 42, where the possibility of occurrence of a discharge phenomenon is high, it becomes possible to achieve the required sensitivity while reducing the number of the light detectors 321A and 322A. Particularly, in the present embodiment, since the light detectors 321A and 322A are positioned with respect to the stator windings on the first end side or the second end side in the direction of the rotational axis A11 of the electric motor 42, light generated due to a discharge phenomenon can be efficiently detected.

The light detectors 321A and 322A may be selected from, for example, PN-type photodiodes, PIN-type photodiodes, and avalanche photodiodes. In the present embodiment, the light detectors 321A and 322A are, for example, InGaAs photodiodes or PbS photodiodes.

The control circuit 35A may be implemented by a computer system including at least one processor (microprocessor) and at least one memory. The computer system may also include one or more A/D converters. For example, one or more A/D converters may be used to convert the detection voltage from the light detection device 32A from analog format to digital format. The control circuit 35A, similarly to the control circuit 35, controls the drive circuit 31, the first protective device 33, and the second protective device 34.

The control circuit 35A further executes processing for suppressing a disproportionation reaction of the working medium 20 circulating through the refrigeration cycle circuit 2, based on the intensity of light output from the light detection device 32A. As described above, the present inventors have found that, when a disproportionation reaction occurs in the compressor 4, the first light is generated within the sealed container 40. From this viewpoint, the control circuit 35A determines, based on the intensity of the first light in the sealed container 40, whether or not a disproportionation reaction has occurred, and when it is determined that a disproportionation reaction is occurring, the operation of the drive circuit 31 is interrupted or limited in order to suppress the progress of the disproportionation reaction of the working medium circulating through the refrigeration cycle circuit 2.

In the aforementioned control device 3A, the light detection device 32A is configured to detect light inside the sealed container 40 of the compressor 4 of the refrigeration cycle circuit 2 to output the intensity of the light as the second state. The control circuit 35A is configured to interrupt or limit the operation of the refrigeration cycle circuit 2 in response to detecting the sign of the disproportionation reaction based on the second state regarding the working medium 20. Here, the control circuit 35A is configured to determine the number of light emissions from the working medium 20 at the compressor 4 based on the number times the intensity of the light exceeds the threshold value for the light. The sign of the disproportionation reaction is that the number of the light emissions from the working medium 20 is equal to or larger than the predetermined number of times.

In the control device 3A, the detection of the disproportionation reaction is performed based on the intensity of the light generated inside the sealed container 40, rather than on changes occurring in the current actually flowing from the drive circuit 31 to the electric motor 42. Therefore, the control device 3A can detect the disproportionation reaction without being affected by the physical or electrical state of the circuits constituting the refrigeration cycle device 1. In this manner, if the accuracy of detecting the disproportionation reaction of the working medium 20 can be improved, the suppression of the progress of the disproportionation reaction can be carried out with higher accuracy, thereby making it possible to further improve the suppression of the disproportionation reaction.

In the present embodiment, when the intensity of the first light exceeds a threshold value of the first light, the control circuit 35A interrupts or limits the operation of the drive circuit 31. In the present embodiment, the light detection device 32A includes the plurality of light detectors 321A and 322A. When at least one of the intensities of the first light from the plurality of light detectors 321A and 322A exceeds the threshold value for the first light, the control circuit 35A interrupts or limits the operation of the drive circuit 31. The threshold value for the first light is set in order to determine whether or not a disproportionation reaction has occurred. The threshold value for the first light is three times or more the intensity of the first light obtained from the light detection device 32A during rated driving of the electric motor 42. The intensity of the first light obtained from the light detection device 32A during rated driving of the electric motor 42 corresponds, for example, to a baseline current that appears in the light detection device 32A during the rated driving of the electric motor 42.

In the present embodiment, as the threshold value for the first light, a first threshold value, a second threshold value smaller than the first threshold value, and a third threshold value smaller than the second threshold value are used. However, the third threshold value is greater than a detection lower limit value of the first light. The detection lower limit value of the first light is a value that serves as a reference for whether or not the first light itself exists. By using different threshold values, the control circuit 35A interrupts or limits the operation of the drive circuit 31 in different ways according to the magnitude of the intensity of the first light. In particular, the control circuit 35A executes a process with a higher degree of suppression of the disproportionation reaction as the intensity of the first light increases. In this manner, the control device 3A can appropriately execute suppression of the disproportionation reaction.

The process for suppressing the disproportionation reaction includes, for example, first process and second process. The first process is a process in which a setting value of the amplitude of the AC output power is reduced, and if, before a monitoring period elapses from the reduction of the setting value of the amplitude of the AC output power, the intensity of the light exceeds a determination value which is not greater than the threshold value for the light, at least one of outputting the AC output power and inputting the input power is interrupted, and if the intensity of the light does not exceed the determination value even after the monitoring period elapses from the reduction of the setting value of the amplitude of the AC output power, the reduction of the setting value of the amplitude of the AC output power is canceled. The second process is a process for interrupting at least one of outputting the AC output power and inputting the input power. The degree of suppression of the disproportionation reaction is higher in the second process than in the first process. In the first process as well, the longer the monitoring period, the higher the degree of suppression of the disproportionation reaction.

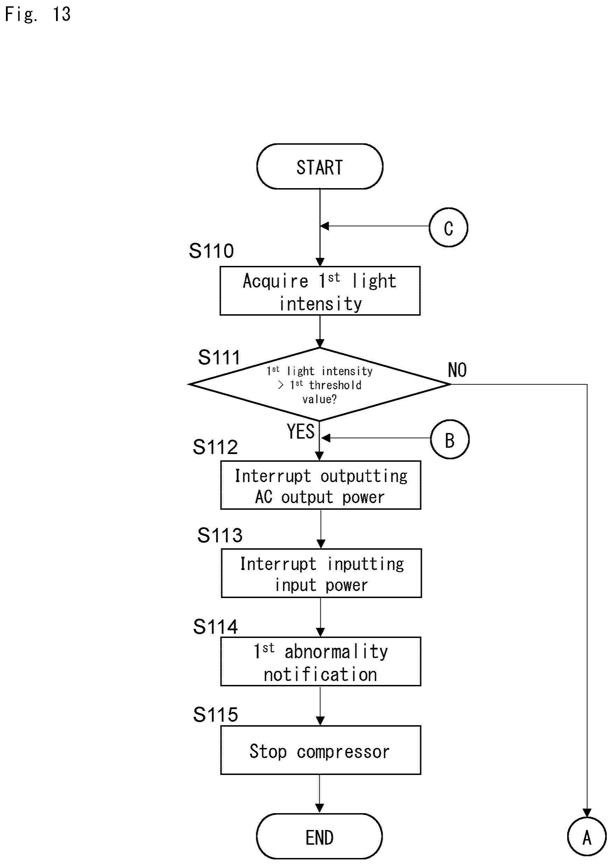

Next, an example of the operation of the control circuit 35A of the control device 3A will be briefly described with reference to Figs. 13 to 15. Each of Figs. 13 to 15 shows a part of a flowchart of the operation of the control circuit 35A of the control device 3A, and by combining Figs. 13 to 15, a single flowchart is completed.

Referring to Fig. 13, the control circuit 35A outputs the AC output power to the electric motor 42 based on the input power of the power supply 10 via the drive circuit 31, thereby driving the compressor 4.

The control circuit 35A obtains the intensity of the first light from the light detection device 32A (S110). The control circuit 35A determines whether or not the intensity of the first light exceeds the first threshold value (S111).

In step S111, when the intensity of the first light exceeds the first threshold value (step S111: YES), the control circuit 35A sets the first protective device 33 to an OFF state to interrupt outputting the AC output power (S112). The control circuit 35A sets the second protective device 34 to an OFF state to interrupt inputting the input power (S113). The control circuit 35A outputs a first abnormality notification (S114). The first abnormality notification indicates that there is a very high possibility that a disproportionation reaction is occurring in the refrigeration cycle device 1. Thereafter, the control circuit 35A interrupts the operation of the compressor 4 (S115).

As described above, when the intensity of the first light exceeds the first threshold value for the first light, the control circuit 35A interrupts outputting the AC output power and interrupts inputting the input power.

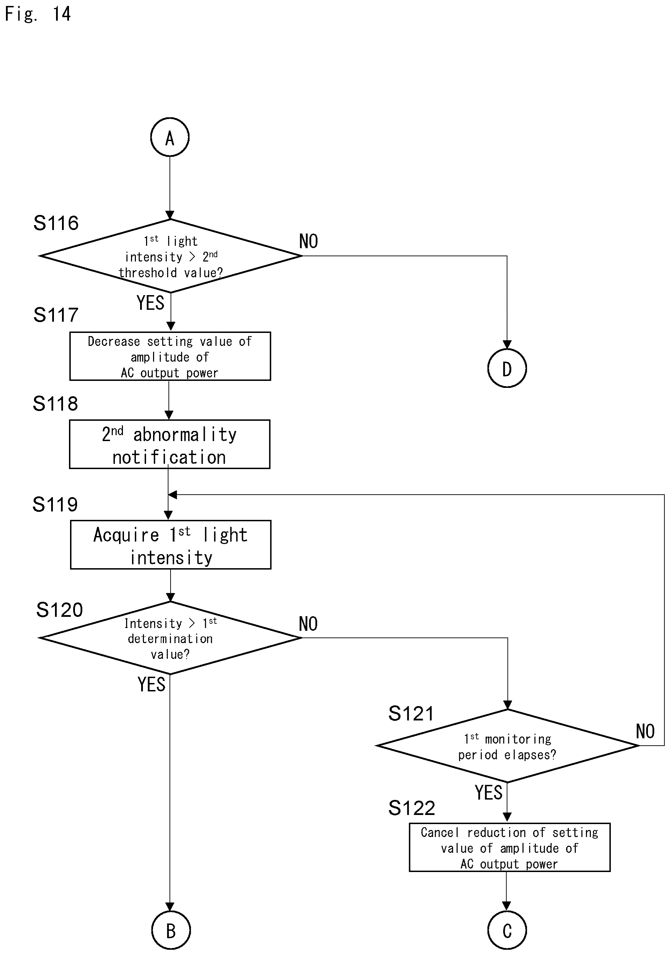

In step S111, when the intensity of the first light does not exceed the first threshold value (step S111: NO), referring to Fig. 14, the control circuit 35A determines whether or not the intensity of the first light exceeds the second threshold value smaller than the first threshold value (step S116).

In step S116, when the intensity of the first light exceeds the second threshold value (step S116: YES), the control circuit 35A changes switching control of the semiconductor switching elements of the drive circuit 31 so that the setting value of the amplitude of the AC output power decreases from E to E/2 (S117). The control circuit 35A outputs a second abnormality notification (S118). The second abnormality notification indicates that there is a high possibility that a disproportionation reaction is occurring in the refrigeration cycle device 1.

Thereafter, the control circuit 35A obtains the intensity of the first light from the light detection device 32A (S119). The control circuit 35A determines whether or not the intensity of the first light exceeds a first determination value (S120). The first determination value is equal to or less than the second threshold value. In the present embodiment, the first determination value is smaller than the second threshold value.

In step S120, when the intensity of the first light exceeds the first determination value (S120: YES), the process proceeds to step S112 in Fig. 13.

In step S120, when the intensity of the first light does not exceed the first determination value (S120: NO), the control circuit 35A determines whether the first monitoring period has elapsed from the reduction of the setting value of the amplitude of the AC output power (S121). The first monitoring period corresponds, for example, to about 100,000 times a cycle corresponding to a reference frequency of the inverter circuit 312, and is approximately 20 s to 100 s.

In step S121, if the first monitoring period has elapsed since the reduction of the setting value of the amplitude of the AC output power (S121: YES), the control circuit 35A cancels the reduction of the setting value of the amplitude of the AC output power to return the setting value of the amplitude of the AC output power to E (S122), and the process proceeds to step S110 of Fig. 13.

In step S121, if the first monitoring period has not elapsed since the reduction of the setting value of the amplitude of the AC output power (S121: NO), the process returns to step S119.

In steps S119 to S121, if the intensity of the first light exceeds the first determination value before the first monitoring period elapses from the reduction of the setting value of the amplitude of the AC output power, the process proceeds to step S112 of Fig. 13. If the intensity of the first light does not exceed the first determination value before the first monitoring period elapses from the reduction of the setting value of the amplitude of the AC output power, the process proceeds to step S122.

As described above, when the intensity of the first light does not exceed the first determination value during the first monitoring period after the reduction of the setting value of the amplitude of the AC output power (S121: YES), the control circuit 35A cancels the reduction of the setting value of the amplitude of the AC output power (S122). When the intensity of the first light exceeds the first determination value before the first monitoring period elapses from the reduction of the setting value of the amplitude of the AC output power (S120: YES), the control circuit 35A interrupts outputting the AC output power (S113) and interrupts inputting the input power (S114).

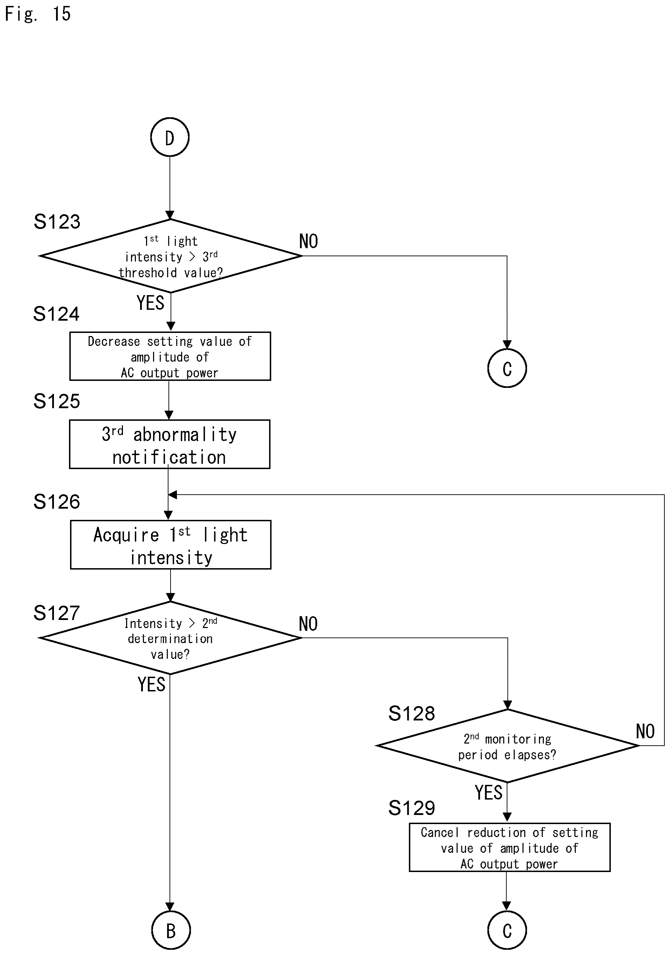

In step S116, when the intensity of the first light does not exceed the second threshold value (step S116: NO), referring to Fig. 15, the control circuit 35A determines whether or not the intensity of the first light exceeds the third threshold value smaller than the second threshold value (step S123). In the present embodiment, the third threshold value is equal to the first determination value.

In step S123, when the intensity of the first light exceeds the third threshold value (step S123: YES), the control circuit 35A changes switching control of the semiconductor switching elements of the drive circuit 31 so that the setting value of the amplitude of the AC output power decreases from E to E/2 (S124). The control circuit 35A outputs a third abnormality notification (S125). The third abnormality notification indicates that there is a possibility that a disproportionation reaction is occurring in the refrigeration cycle device 1.

Thereafter, the control circuit 35A obtains the intensity of the first light from the light detection device 32A (S126). The control circuit 35A determines whether or not the intensity of the first light exceeds a second determination value (S127). The second determination value is equal to or less than the third threshold value. In the present embodiment, the second determination value is equal to the third threshold value.

In step S127, when the intensity of the first light exceeds the second determination value (S127: YES), the process proceeds to step S112 of Fig. 13.

In step S127, when the intensity of the first light does not exceed the second determination value (S127: NO), the control circuit 35A determines whether a second monitoring period has elapsed since the reduction of the setting value of the amplitude of the AC output power (S128). The second monitoring period is shorter than the first monitoring period. The second monitoring period corresponds, for example, to about 10,000 times a cycle corresponding to the reference frequency of the inverter circuit 312, and is approximately 2 s to 10 s.

In step S128, if the second monitoring period has elapsed since the reduction of the setting value of the amplitude of the AC output power (S128: YES), the control circuit 35A cancels the reduction of the setting value of the amplitude of the AC output power to return the setting value of the amplitude of the AC output power to E (S129), and the process proceeds to step S110 of Fig. 13.

In step S128, if the second monitoring period has not elapsed since the reduction of the setting value of the amplitude of the AC output power (S128: NO), the process returns to step S126.

In steps S126 to S128, if the intensity of the first light exceeds the second determination value before the second monitoring period elapses from the reduction of the setting value of the amplitude of the AC output power, the process proceeds to step S112 of Fig. 13. If the intensity of the first light does not exceed the second determination value before the second monitoring period elapses from the reduction of the setting value of the amplitude of the AC output power, the process proceeds to step S129.

As described above, when the intensity of the first light does not exceed the second determination value during the second monitoring period after the reduction of the setting value of the amplitude of the AC output power (S128: YES), the control circuit 35A cancels the reduction of the setting value of the amplitude of the AC output power (S129). When the intensity of the first light exceeds the second determination value before the second monitoring period elapses from the reduction of the setting value of the amplitude of the AC output power (S127: YES), the control circuit 35A interrupts outputting the AC output power (S113) and interrupts inputting the input power (S114).

### [1.2.2 ADVANTAGEOUS EFFECTS]

The aforementioned control device 3A is a control device for controlling the refrigeration cycle circuit 2 allowing circulation of the working medium 20 containing the refrigerant component capable of undergoing the disproportionation reaction, includes: the drive circuit 31 configured to drive the compressor 4 of the refrigeration cycle circuit 2; and the control circuit 35A configured to interrupt or limit the operation of the refrigeration cycle circuit 2 in response to detecting the sign of the disproportionation reaction based on at least one of the first state regarding the drive circuit 31 for driving the compressor 4 of the refrigeration cycle circuit 2 or the second state regarding the working medium 20. This configuration enables improvement of accuracy of detection of the disproportionation reaction of the working medium 20 and improvement of suppression of the disproportionation reaction.

The control device 3A includes the light detection device 32A configured to detect light inside the sealed container 40 to output the intensity of the light as the second state. The control circuit 35A is configured to determine the number of light emissions from the working medium 20 at the compressor 4 based on the number times the intensity of the light exceeds the threshold value for the light. The sign of the disproportionation reaction is that the number of the light emissions from the working medium 20 is equal to or larger than the predetermined number of times. This configuration enables improvement of accuracy of detection of the disproportionation reaction of the working medium 20 and improvement of suppression of the disproportionation reaction.

The aforementioned control device 3A seems to perform the following control method. The control method includes interrupting or limiting the operation of the refrigeration cycle circuit 2 in response to detecting the sign of the disproportionation reaction based on at least one of the first state regarding the drive circuit 31 for driving the compressor 4 of the refrigeration cycle circuit 2 or the second state regarding the working medium 20. This configuration enables improvement of accuracy of detection of the disproportionation reaction of the working medium 20 and improvement of suppression of the disproportionation reaction.

The control method includes determining the number of light emissions from the working medium 20 at the compressor 4 based on the second state. The sign of the disproportionation reaction is that the number of light emissions from the working medium 20 is equal to or larger than the predetermined number of times. This configuration enables improvement of accuracy of detection of the disproportionation reaction of the working medium 20 and improvement of suppression of the disproportionation reaction.

The control method performed by the control device 3A can be realized by a computer system executing a program. This program is a program executed by a computer system included in the control device 3A for controlling the refrigeration cycle circuit 2 allowing circulation of the working medium 20 containing the refrigerant component capable of undergoing the disproportionation reaction, and enables the computer system to perform a process of interrupting or limiting the operation of the refrigeration cycle circuit 2 in response to detecting the sign of the disproportionation reaction based on at least one of the first state regarding the drive circuit 31 for driving the compressor 4 of the refrigeration cycle circuit 2 or the second state regarding the working medium 20. This configuration enables improvement of accuracy of detection of the disproportionation reaction of the working medium 20 and improvement of suppression of the disproportionation reaction.

The aforementioned control device 3A controls the compressor 4 of the refrigeration cycle circuit 2 allowing circulation of the working medium 20. The working medium 20 contains ethylene-based fluoroolefin as a refrigerant component. The compressor 4 includes the sealed container 40 constituting a fluidic pathway for the working medium 20, the compression mechanism 41 positioned inside the sealed container 40 to compress the working medium 20, and the electric motor 42 positioned inside the sealed container 40 to operate the compression mechanism 41. The control device 3A includes the drive circuit 31 configured to drive the electric motor 42, the light detection device 32A configured to detect light inside the sealed container 40 to output an intensity of the light, and the control circuit 35A configured to interrupt or limit the operation of the drive circuit 31 when the intensity of the light exceeds the threshold value for the light. This configuration enables improvement of accuracy of detection of the disproportionation reaction of the working medium 20 and improvement of suppression of the disproportionation reaction.

In the control device 3A, the light detection device 32A includes the plurality of light detectors 321A and 322A configured to detect light inside the sealed container 40. The plurality of light detectors 321A and 322A are located on at least one of the first end side or the second end side of the electric motor 42 in the direction of its rotational axis A11 inside the sealed container 40. This configuration enables improvement of accuracy of detection of the disproportionation reaction of the working medium 20 and improvement of suppression of the disproportionation reaction.

In the control device 3A, the light detection device 32A includes at least one of a PN-type photodiode, a PIN-type photodiode, or avalanche photodiode. This configuration enables improvement of accuracy of detection of the disproportionation reaction of the working medium 20 and improvement of suppression of the disproportionation reaction.

In the control device 3A, the light has a wavelength that is longer than 600 nm and is equal to or shorter than 2000 nm. This configuration makes it possible to interrupt or limit the operation of the drive circuit 31 based on light emitted from a fireball generated by the disproportionation reaction.

In the control device 3A, the threshold value for the light is equal to or larger than three times the intensity of the light obtained from the light detection device 32A during a rated operation of the electric motor 42. This configuration makes it possible to improve the accuracy of determination as to whether or not suppression of the disproportionation reaction is to be performed.

In the control device 3A, the drive circuit 31 includes the converter circuit 311 configured to output the DC output power based on the input power from the power supply 10, and the inverter circuit 312 configured to output the AC output power to the electric motor 42 based on the DC output power. Stopping the operation of the drive circuit 31 includes at least one of interrupting outputting the AC output power, interrupting outputting the DC output power, or, interrupting inputting the input power. Limiting the operation of the drive circuit 31 includes at least one of decreasing the setting value of the amplitude of the AC output power, or, decreasing the setting value of the frequency of the AC output power. This configuration makes it possible to enhance the suppression of the disproportionation reaction.

In the control device 3A, the control circuit 35A is configured to limit the operation of the drive 31 circuit when the intensity of the light exceeds the threshold value for the light. The control circuit 35A is configured to interrupt the operation of the drive circuit 31 when the intensity of the light exceeds a determination value lower than the threshold value for the light before the monitoring period elapses after limit of the operation of the drive circuit 31. The control circuit 35A is configured to cancel limiting the operation of the drive circuit 31 when the intensity of the light does not exceed the determination value until the monitoring period elapses after limit of the operation of the drive circuit 31. This configuration makes it possible to continue the operation of the compressor 4 while suppressing the disproportionation reaction of the working medium 20.

The aforementioned refrigeration cycle device 1 includes the control device 3A and the refrigeration cycle circuit 2. This configuration enables improvement of accuracy of detection of the disproportionation reaction of the working medium 20 and improvement of suppression of the disproportionation reaction.

The aforementioned control device 3A seems to perform the following control method. The control method is performed by the control device 3A for controling the compressor 4 of the refrigeration cycle circuit 2 allowing circulation of the working medium 20. The working medium 20 contains ethylene-based fluoroolefin as a refrigerant component. The compressor 4 includes the sealed container 40 constituting a fluidic pathway for the working medium 20, the compression mechanism 41 positioned inside the sealed container 40 to compress the working medium 20, and the electric motor 42 positioned inside the sealed container 40 to operate the compression mechanism 41. The control device 3A includes the drive circuit 31 configured to drive the electric motor 42. The control method includes interrupting or limiting the operation of the drive circuit 31 when the intensity of the light inside the sealed container 40 exceeds the threshold value for the light. This configuration enables improvement of accuracy of detection of the disproportionation reaction of the working medium 20 and improvement of suppression of the disproportionation reaction.

The control method performed by the control device 3A can be realized by a computer system executing a program. This program is executed by a computer system included in the control device 3A for controlling the compressor 4 of the refrigeration cycle circuit 2 allowing circulation of the working medium 20. The working medium 20 contains ethylene-based fluoroolefin as a refrigerant component. The compressor 4 includes the sealed container 40 constituting a fluidic pathway for the working medium 20, the compression mechanism 41 positioned inside the sealed container 40 to compress the working medium 20, and the electric motor 42 positioned inside the sealed container 40 to operate the compression mechanism 41. The control device 3A includes the drive circuit 31 configured to drive the electric motor 42. The program enables the computer system to interrupt or limit the operation of the drive circuit 31 when the intensity of the light inside the sealed container 40 exceeds the threshold value for the light. This configuration enables improvement of accuracy of detection of the disproportionation reaction of the working medium 20 and improvement of suppression of the disproportionation reaction.

### [1.3 EMBODIMENT 3]

### [1.3.1 CONFIGURATIONS]

A refrigeration cycle device according to Embodiment 3 includes the refrigeration cycle circuit 2 and a control device 3A, similarly to the refrigeration cycle device 1 according to Embodiment 2 but is different from Embodiment 2 in configurations of the light detection device 32A and the control circuit 35A of the control device 3A.

In the present embodiment as well, the light detection device 32A is configured to detect light inside the sealed container 40 to output an intensity of the light, but a wavelength of the light to be detected differs from that in Embodiment 1. The present inventors have found that, when a discharge phenomenon occurs in the compressor 4, light is generated inside the sealed container 40. This light uses plasma generated by the discharge phenomenon as a light source, and it has been confirmed that at least a portion of its wavelength range is included in the visible light region or in a range of 200 nm to 600 nm. The light generated by the discharge phenomenon has a relatively short emission time and a relatively small emission amount; however, since it can be observed before the occurrence of the disproportionation reaction, it may be more preferable than the first light (light having a wavelength greater than 600 nm and equal to or less than 2000 nm) of Embodiment 1 in terms of suppression of the disproportionation reaction. Accordingly, the light detection device 32A is configured to detect second light having a wavelength between 200 nm to 600 nm, inclusive. Hereinafter, for the sake of simplification of description, light having a wavelength between 200 nm and 600 nm, inclusive is referred to as "second light." The wavelength of the second light mainly falls within a wavelength region including ultraviolet rays and visible light.

In Embodiment 2, the light detection device 32A includes the plurality of light detectors 321A and 322A configured to detect the second light. The light detectors 321A and 322A may be selected from, for example, PN-type photodiodes, PIN-type photodiodes, and avalanche photodiodes. In the present embodiment, the light detectors 321A and 322A are, for example, Si photodiodes or Ge photodiodes.

The control circuit 35A executes processing for suppressing a disproportionation reaction of the working medium 20 circulating through the refrigeration cycle circuit 2, based on the intensity of light output from the light detection device 32A. As described above, the present inventors have found that, when a disproportionation reaction occurs in the compressor 4, the second light is generated within the sealed container 40. From this viewpoint, the control circuit 35A determines, based on the intensity of the second light in the sealed container 40, whether or not a disproportionation reaction has occurred, and when it is determined that a disproportionation reaction is occurring, the operation of the drive circuit 31 is interrupted or limited in order to suppress the progress of the disproportionation reaction of the working medium circulating through the refrigeration cycle circuit 2.

In the present embodiment, when the intensity of the second light exceeds a threshold value for the second light, the control circuit 35A interrupts or limits the operation of the drive circuit 31. The light detection device 32A includes the plurality of light detectors 321A and 322A. When at least one of the intensities of the second light from the plurality of light detectors 321A and 322A exceeds the threshold value for the second light, the control circuit 35A interrupts or limits the operation of the drive circuit 31. The threshold value for the second light is set in order to determine whether or not a disproportionation reaction has occurred. The threshold value for the second light is three times or more the intensity of the second light obtained from the light detection device 32A during rated driving of the electric motor 42. The intensity of the second light obtained from the light detection device 32A during rated driving of the electric motor 42 corresponds, for example, to a baseline current that appears in the light detection device 32A during the rated driving of the electric motor 42.

In the present embodiment, as the threshold value for the second light, a fourth threshold value, and a fifth threshold value smaller than the fourth threshold value are used. However, the fifth threshold value is greater than a detection lower limit value of the second light. The detection lower limit value of the second light is a value that serves as a reference for whether or not the second light itself exists. By using different threshold values, the control circuit 35A interrupts or limits the operation of the drive circuit 31 in different ways according to the magnitude of the intensity of the second light. In particular, the control circuit 35A executes a process with a higher degree of suppression of the disproportionation reaction as the intensity of the second light increases. In this manner, the control device 3A can appropriately execute suppression of the disproportionation reaction.

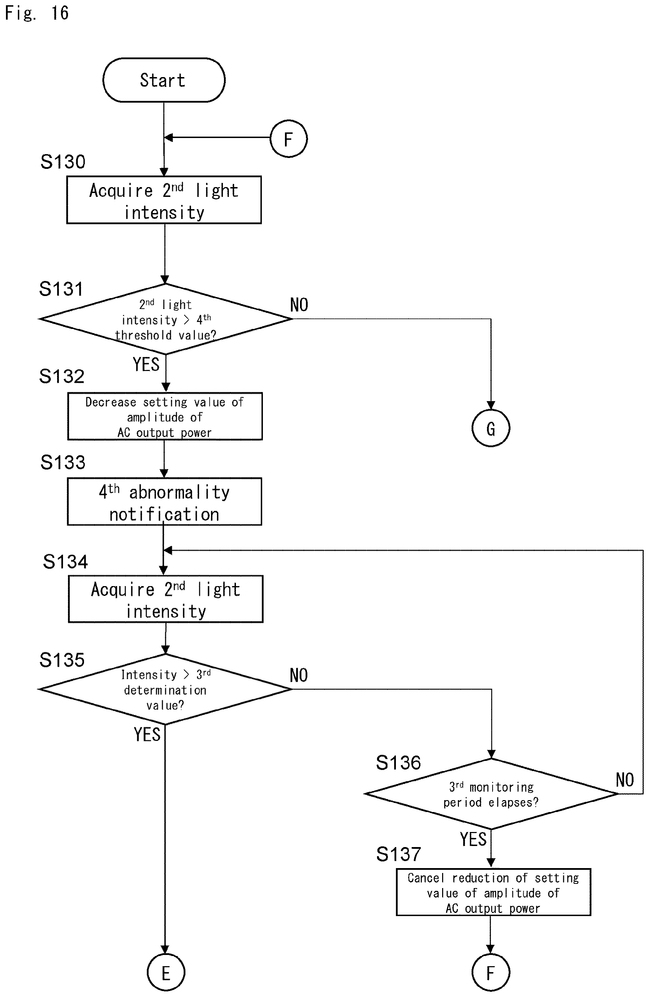

Next, an example of the operation of the control circuit 35A of the control device 3A will be briefly described with reference to Figs. 16 to 18. Each of Figs. 16 to 18 shows a part of a flowchart of the operation of the control circuit 35A of the control device 3A, and by combining Figs. 16 to 18, a single flowchart is completed.

Referring to Fig. 16, the control circuit 35A outputs the AC output power to the electric motor 42 based on the input power of the power supply 10 via the drive circuit 31, thereby driving the compressor 4.

The control circuit 35A obtains the intensity of the second light from the light detection device 32A (S130). The control circuit 35A determines whether or not the intensity of the second light exceeds the fourth threshold value (S131).

In step S131, when the intensity of the second light exceeds the fourth threshold value (step S131: YES), the control circuit 35A changes switching control of the semiconductor switching elements of the drive circuit 31 so that the setting value of the amplitude of the AC output power decreases from E to E/2 (S133). The control circuit 35A outputs a fourth abnormality notification (S133). The fourth abnormality notification indicates that there is a high possibility that a disproportionation reaction is occurring in the refrigeration cycle device 1. The fourth abnormality notification is output to, for example, a control circuit of the indoor unit 1b and a remote controller, etc.

Thereafter, the control circuit 35A obtains the intensity of the second light from the light detection device 32A (S134). The control circuit 35A determines whether or not the intensity of the second light exceeds a third determination value (S135). The third determination value is equal to or less than the fourth threshold value. In the present embodiment, the third determination value is smaller than the fourth threshold value.

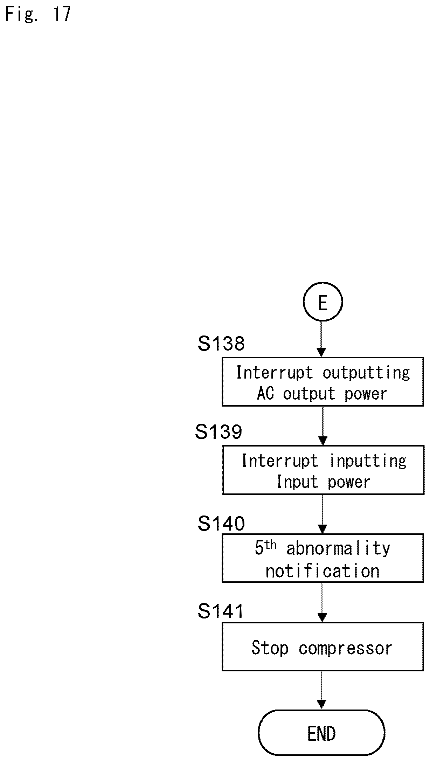

In step S135, when the intensity of the second light exceeds the third determination value (step S135: YES), referring to Fig. 17, the control circuit 35A sets the first protective device 33 to an OFF state to interrupt outputting the AC output power (S138). The control circuit 35A sets the second protective device 34 to an OFF state to interrupt inputting the input power (S139). The control circuit 35A outputs a fifth abnormality notification (S114). The fifth abnormality notification indicates that there is a very high possibility that a disproportionation reaction is occurring in the refrigeration cycle device 1. Thereafter, the control circuit 35A interrupts the operation of the compressor 4 (S141).

Referring to Fig. 16, in step S135, when the intensity of the second light does not exceed the third determination value (S135: NO), the control circuit 35A determines whether a third monitoring period has elapsed from the reduction of the setting value of the amplitude of the AC output power (S136). The third monitoring period corresponds, for example, to about 100,000 times a cycle corresponding to a reference frequency of the inverter circuit 312, and is approximately 20 s to 100 s.

In step S136, if the third monitoring period has elapsed since the reduction of the setting value of the amplitude of the AC output power (S136: YES), the control circuit 35A cancels the reduction of the setting value of the amplitude of the AC output power to return the setting value of the amplitude of the AC output power to E (S137), and the process proceeds to step S130.

In step S136, if the third monitoring period has not elapsed since the reduction of the setting value of the amplitude of the AC output power (S136: NO), the process returns to step S134.

In steps S134 to S136, if the intensity of the second light exceeds the third determination value before the third monitoring period elapses from the reduction of the setting value of the amplitude of the AC output power, the process proceeds to step S138 of Fig. 17. If the intensity of the second light does not exceed the third determination value before the third monitoring period elapses from the reduction of the setting value of the amplitude of the AC output power, the process proceeds to step S137.

As described above, when the intensity of the second light exceeds the fourth threshold value for the second light, the control circuit 35A decreases the setting value of the amplitude of the AC output power (S32). When the intensity of the second light does not exceed the third determination value during the third monitoring period after the reduction (S132) of the setting value of the amplitude of the AC output power (S136: YES), the control circuit 35A cancels the reduction of the setting value of the amplitude of the AC output power (S137). When the intensity of the second light exceeds the third determination value before the third monitoring period elapses from the reduction (S132) of the setting value of the amplitude of the AC output power (S135: YES), the control circuit 35A interrupts outputting the AC output power (S138) and interrupts inputting the input power (S139).

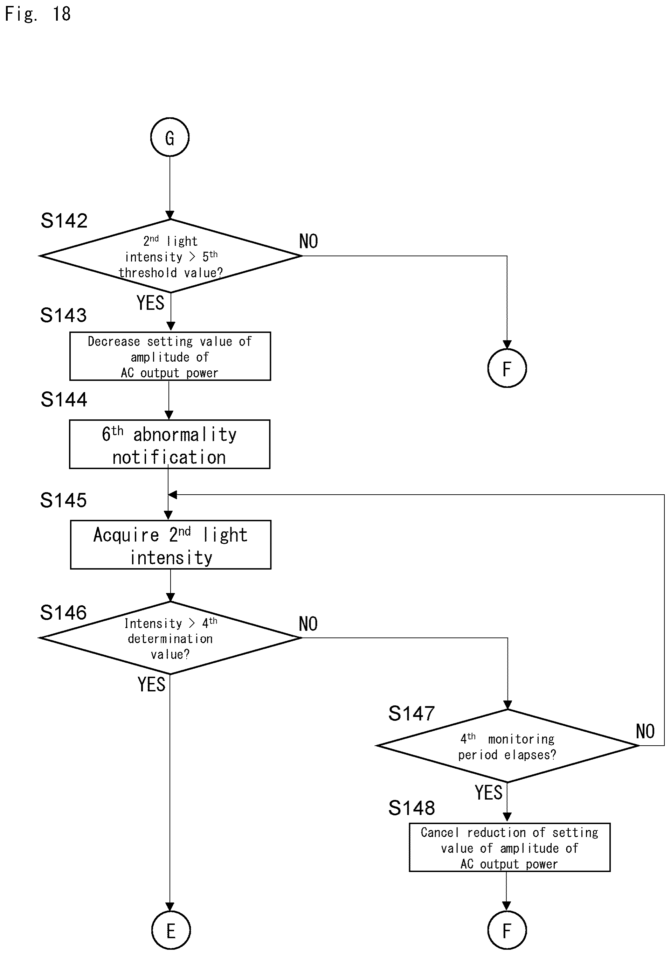

In step S131, when the intensity of the second light does not exceed the fourth threshold value (step S131: NO), referring to Fig. 18, the control circuit 35A determines whether or not the intensity of the second light exceeds the fifth threshold value smaller than the fourth threshold value (step S142).

In step S142, when the intensity of the second light exceeds the fourth threshold value (step S142: YES), the control circuit 35A changes switching control of the semiconductor switching elements of the drive circuit 31 so that the setting value of the amplitude of the AC output power decreases from E to E/2 (S143). The control circuit 35A outputs a sixth abnormality notification (S144). The sixth abnormality notification indicates that there is a possibility that a disproportionation reaction is occurring in the refrigeration cycle device 1. The sixth abnormality notification is output to, for example, a control circuit of the indoor unit 1b and a remote controller, etc.

Thereafter, the control circuit 35A obtains the intensity of the second light from the light detection device 32A (S145). The control circuit 35A determines whether or not the intensity of the second light exceeds a fourth determination value (S146). The fourth determination value is equal to or less than the fourth threshold value. In the present embodiment, the fourth determination value is equal to the fourth threshold value.

In step S146, when the intensity of the second light exceeds the fourth determination value (S146: YES), the process proceeds to step S138.

In step S146, when the intensity of the second light does not exceed the fourth determination value (S146: NO), the control circuit 35A determines whether a fourth monitoring period has elapsed since the reduction of the setting value of the amplitude of the AC output power (S147). The fourth monitoring period is shorter than the third monitoring period. The fourth monitoring period corresponds, for example, to about 10,000 times a cycle corresponding to the reference frequency of the inverter circuit 312, and is approximately 2 s to 10 s.

In step S147, if the fourth monitoring period has elapsed since the reduction of the setting value of the amplitude of the AC output power (S147: YES), the control circuit 35A cancels the reduction of the setting value of the amplitude of the AC output power to return the setting value of the amplitude of the AC output power to E (S129), and the process proceeds to step S130 of Fig. 16.

In step S147, if the fourth monitoring period has not elapsed since the reduction of the setting value of the amplitude of the AC output power (S147: NO), the process returns to step S145.

In steps S145 to S147, if the intensity of the second light exceeds the fourth determination value before the fourth monitoring period elapses from the reduction of the setting value of the amplitude of the AC output power, the process proceeds to step S138 of Fig. 17. If the intensity of the second light does not exceed the fourth determination value before the fourth monitoring period elapses from the reduction of the setting value of the amplitude of the AC output power, the process proceeds to step S148.

As described above, when the intensity of the second light does not exceed the fourth determination value during the fourth monitoring period after the reduction of the setting value of the amplitude of the AC output power (S147: YES), the control circuit 35A cancels the reduction of the setting value of the amplitude of the AC output power (S148). When the intensity of the second light exceeds the fourth determination value before the fourth monitoring period elapses from the reduction of the setting value of the amplitude of the AC output power (S146: YES), the control circuit 35A interrupts outputting the AC output power (S138) and interrupts inputting the input power (S139).

### [1.3.2 ADVANTAGEOUS EFFECTS]

The aforementioned control device 3A controls the refrigeration cycle circuit 2 allowing circulation of the working medium 20 containing the refrigerant component capable of undergoing the disproportionation reaction, includes: the drive circuit 31 configured to drive the compressor 4 of the refrigeration cycle circuit 2; and the control circuit 35A configured to interrupt or limit the operation of the refrigeration cycle circuit 2 in response to detecting the sign of the disproportionation reaction based on at least one of the first state regarding the drive circuit 31 for driving the compressor 4 of the refrigeration cycle circuit 2 or the second state regarding the working medium 20. This configuration enables improvement of accuracy of detection of the disproportionation reaction of the working medium 20 and improvement of suppression of the disproportionation reaction.

In the control device 3A, the light has a wavelength between 200 nm and 600 nm, inclusive. This configuration makes it possible to interrupt or limit the operation of the drive circuit 31 based on light generated by a discharge phenomenon that may cause a disproportionation reaction.

### [1.4 EMBODIMENT 4]

### [1.4.1 CONFIGURATIONS]

A refrigeration cycle device according to Embodiment 4 includes the refrigeration cycle circuit 2 and the control device 3A, similarly to the refrigeration cycle device 1 according to Embodiment 2 but is different from Embodiment 2 in configurations of the light detection device 32A and the control circuit 35A of the control device 3A.

In the present embodiment as well, the light detection device 32A is configured to detect light inside the sealed container 40 to output the intensity of the light; however, there are two types of wavelengths of light to be detected. As described above, the first light uses a fireball generated by a disproportionation reaction as a light source, and at least a portion of its wavelength range is included in the near-infrared region or in a range greater than 600 nm and equal to or less than 2000 nm. The first light tends to have a relatively long emission time and a relatively large emission amount; however, since it is light from a fireball generated by the disproportionation reaction, it is preferable that measures against the disproportionation reaction be taken promptly. On the other hand, the second light uses plasma generated by a discharge phenomenon as a light source, and at least a portion of its wavelength range is included in the visible light region or in a range of 200 nm to 600 nm. The second light has a relatively short emission time and a relatively small emission amount compared to the first light; however, since it can be observed before the occurrence of the disproportionation reaction, it may enable suppression of the disproportionation reaction at an earlier stage in terms of suppression of the disproportionation reaction.

Accordingly, in the present embodiment, the light detection device 32A is configured to detect both the first light having a wavelength greater than 600 nm and equal to or less than 2000 nm, and the second light having a wavelength between 200 nm to 600 nm inclusive.

In Embodiment 4, the light detection device 32A includes a plurality of light detectors 321A and 322A configured to detect the first light, and a plurality of light detectors 321A and 322A configured to detect the second light. Examples of the light detectors 321A and 322A are as described in Embodiments 2 and 3.

The control circuit 35A is configured to perform a process for suppressing a disproportionation reaction of the working medium 20 circulating through the refrigeration cycle circuit 2, based on the intensity of the first light or the second light output from the light detection device 32A.

The control circuit 35A interrupts or limits the operation of the drive circuit 31 in different ways depending on whether the intensity of the first light exceeds the threshold value for the first light or the intensity of the second light exceeds the threshold value for the second light.

The threshold value for the first light includes a first threshold value, a second threshold value smaller than the first threshold value, and a third threshold value that is smaller than the second threshold value. The threshold value for the second light includes a fourth threshold value, and a fifth threshold value that is smaller than the fourth threshold value. The control circuit 35A is configured to interrupt the operation of the drive circuit 31 when an intensity of the first light exceeds the first threshold value. The control circuit 35A is configured to interrupt the operation of the drive circuit 31 when the intensity of the first light exceeds the second threshold value and when an intensity of the second light exceeds the fifth threshold value. The control circuit 35A is configured to interrupt the operation of the drive circuit 31 when the intensity of the first light exceeds the third threshold value and when an intensity of the second light exceeds the fourth threshold value. The control circuit 35A is configured to limit the operation of the drive circuit 31 when the intensity of the first light exceeds the third threshold value and when the intensity of the second light exceeds the fifth threshold value. The control circuit 35A is configured to limit the operation of the drive circuit 31 when the intensity of the first light does not exceed the third threshold value and when the intensity of the second light exceeds the fifth threshold value.

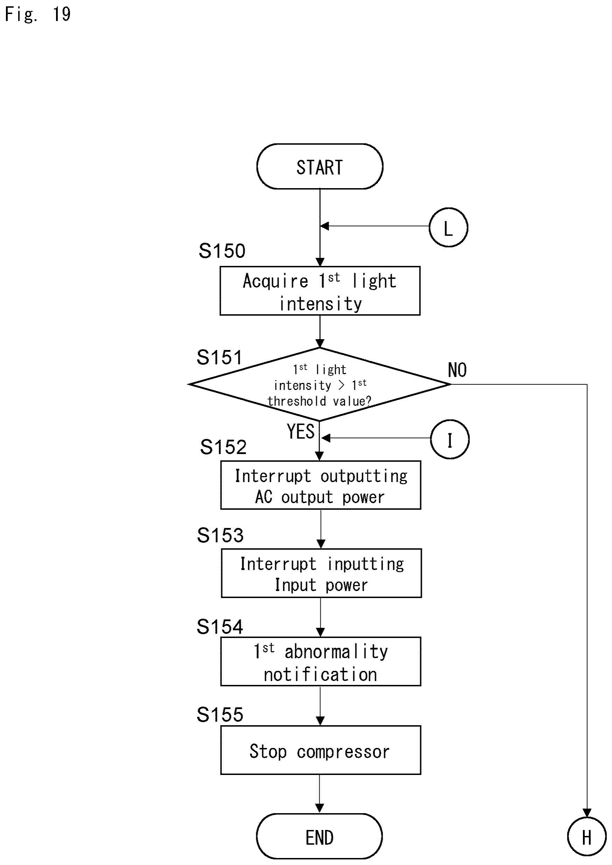

Next, an example of the operation of the control circuit 35A of the control device 3A in Embodiment 3 will be briefly described with reference to Figs. 19 to 26. Each of Figs. 19 to 26 shows a part of a flowchart of the operation of the control circuit 35A of the control device 3A, and by combining Figs. 19 to 26, a single flowchart is completed.

Referring to Fig. 19, the control circuit 35A outputs the AC output power to the electric motor 42 based on the input power of the power supply 10 via the drive circuit 31, thereby driving the compressor 4.

Steps S150 to S155 of Fig. 19 are the same as steps S110 to S155 of Fig. 12, respectively. Accordingly, the control circuit 35A interrupts the operation of the drive circuit 31 when the intensity of the first light exceeds the first threshold value.

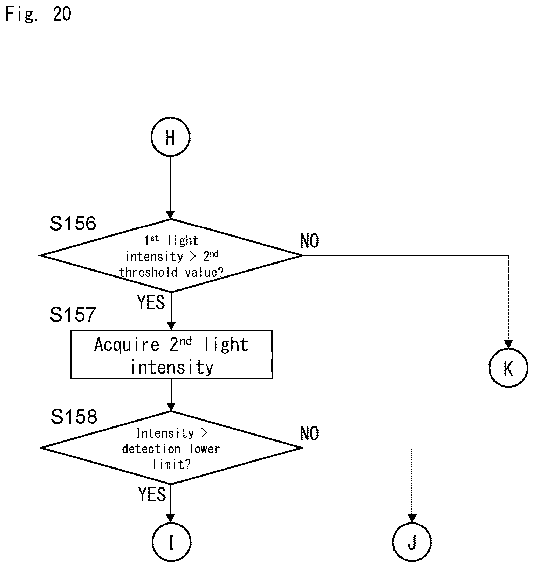

In step S151, when the intensity of the first light does not exceed the first threshold value (step S151: NO), referring to Fig. 20, the control circuit 35A determines whether the intensity of the first light exceeds the second threshold value smaller than the first threshold value (step S156).

In step S156, when the intensity of the first light exceeds the second threshold value (step S156: YES), the control circuit 35A obtains the intensity of the second light from the light detection device 32A (S157). The control circuit 35A determines whether the intensity of the second light exceeds the detection lower limit value (S158).

In step S158, when the intensity of the second light exceeds the detection lower limit value of the second light (step S158: YES), the process proceeds to step S152. That is, when the intensity of the first light is not more than the first threshold value and exceeds the second threshold value, if the second light is detected, the control circuit 35A interrupts the operation of the drive circuit 31 in the same manner as when the intensity of the first light exceeds the first threshold value.

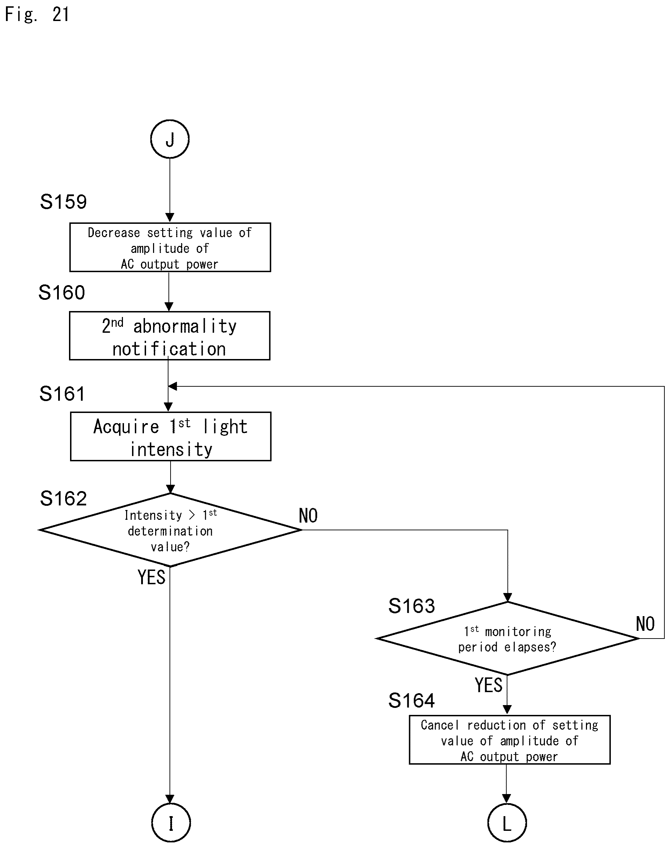

In step S158, when the intensity of the second light does not exceed the detection lower limit value of the second light (step S158: NO), referring to Fig. 21, the control circuit 35A changes the switching control of the semiconductor switching elements of the drive circuit 31 so that the setting value of the amplitude of the AC output power decreases from E to E/2 (S159). Steps S160 to S164 of Fig. 21 correspond to steps S118 to S122 of Fig. 14, respectively. In step S162 of Fig. 21, when the intensity of the first light exceeds the first determination value, the process proceeds to step S152 of Fig. 19. After step S164 of Fig. 21, the process proceeds to step S150 of Fig. 19.

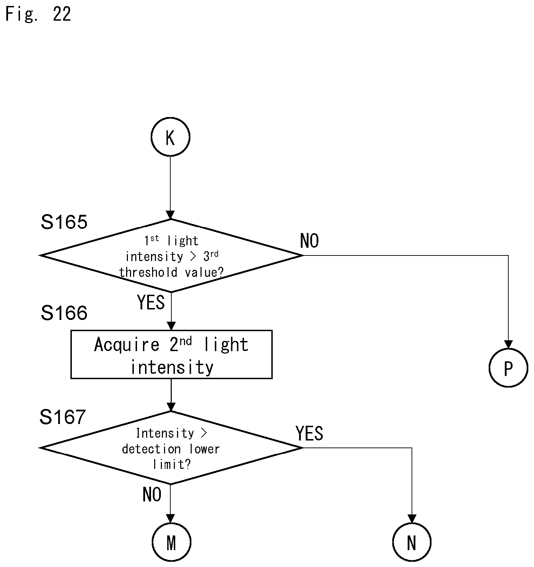

In step S156 of Fig. 20, when the intensity of the first light does not exceed the second threshold value (step S156: NO), referring to Fig. 22, the control circuit 35A determines whether the intensity of the first light exceeds the third threshold value, which is smaller than the second threshold value (step S165).

In step S165, when the intensity of the first light exceeds the third threshold value (step S165: YES), the control circuit 35A obtains the intensity of the second light from the light detection device 32A (S166). The control circuit 35A determines whether the intensity of the second light exceeds the detection lower limit value of the second light (S167).

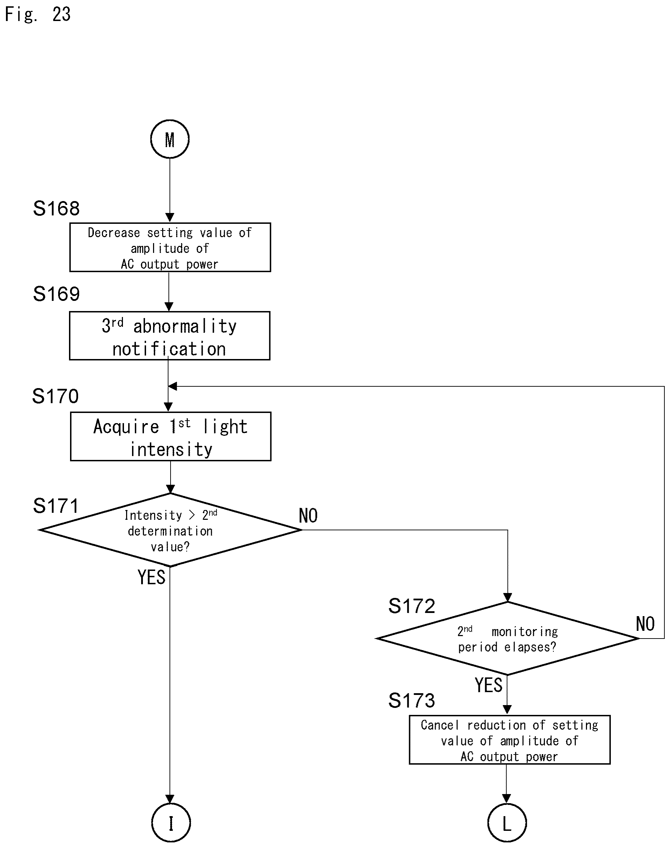

In step S167, when the intensity of the second light does not exceed the detection lower limit value (step S167: NO), referring to Fig. 23, the control circuit 35A changes the switching control of the semiconductor switching elements of the drive circuit 31 so that the setting value of the amplitude of the AC output power decreases from E to E/2 (S168). Steps S169 to S173 of Fig. 23 correspond to steps S125 to S129 of Fig. 15, respectively. In step S171 of Fig. 23, when the intensity of the first light exceeds the second determination value, the process proceeds to step S152 of Fig. 19. After step S173 of Fig. 23, the process proceeds to step S150 of Fig. 19.

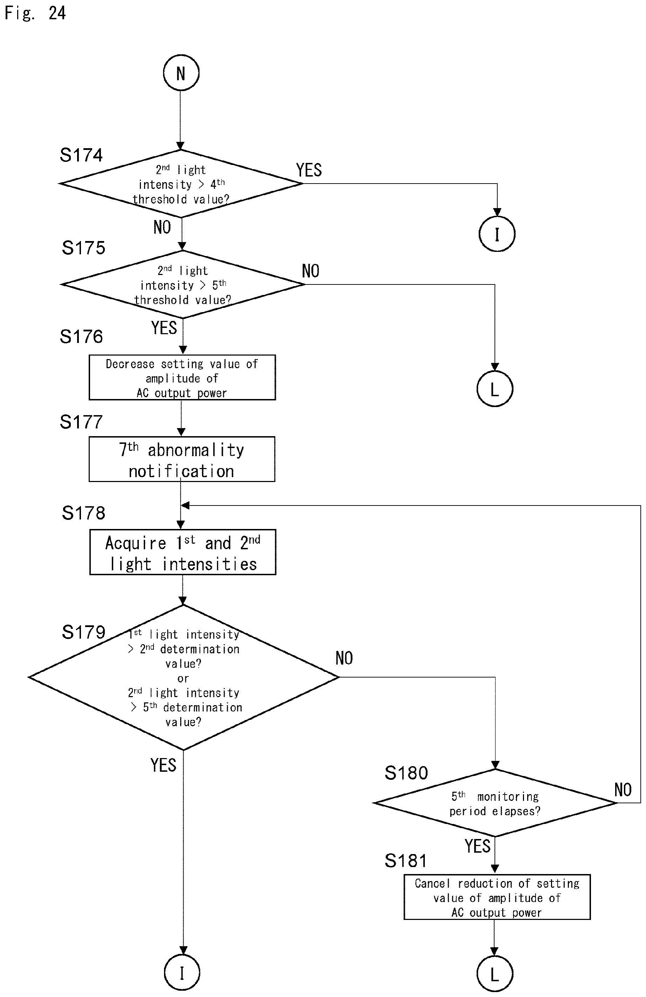

In step S167 of Fig. 22, when the intensity of the second light exceeds the detection lower limit value of the second light (step S167: YES), referring to Fig. 24, the control circuit 35A determines whether the intensity of the second light exceeds the fourth threshold value (S174).

In step S174, when the intensity of the second light exceeds the fourth threshold value (step S174: YES), the process proceeds to step S152 of Fig. 19.

In step S174, when the intensity of the second light does not exceed the fourth threshold value (step S174: NO), the control circuit 35A determines whether the intensity of the second light exceeds the fifth threshold value which is smaller than the fourth threshold value (S175).

In step S175, when the intensity of the second light exceeds the fifth threshold value (S175: YES), the control circuit 35A changes the switching control of the semiconductor switching elements of the drive circuit 31 so that the setting value of the amplitude of the AC output power decreases from E to E/2 (S176). The control circuit 35A outputs a seventh abnormality notification (S177). The seventh abnormality notification indicates that both a disproportionation reaction and a discharge phenomenon may be occurring in the refrigeration cycle device 1. The seventh abnormality notification is output, for example, to a control circuit of the indoor unit 1b and to a remote controller or the like.

Thereafter, the control circuit 35A obtains the intensities of the first light and the second light from the light detection device 32A (S178). The control circuit 35A determines whether the intensity of the first light exceeds the second determination value and whether the intensity of the second light exceeds the fifth determination value (S179). The fifth determination value is equal to or less than the fourth threshold value. In the present embodiment, the fifth determination value is equal to the lower detection limit value of the second light.

In step S179, when the intensity of the first light exceeds the second determination value, or the intensity of the second light exceeds the fifth determination value (S179: YES), the process proceeds to step S152 of Fig. 19.

In step S179, when neither the intensity of the first light exceeds the second determination value nor the intensity of the second light exceeds the fifth determination value (S179: NO), the control circuit 35A determines whether the fifth monitoring period has elapsed since the reduction of the setting value of the amplitude of the AC output power (S180). The fifth monitoring period is shorter than the third monitoring period. The fifth monitoring period corresponds, for example, to about 10,000 times a cycle corresponding to the reference frequency of the inverter circuit 312, and is approximately 2 s to 10 s.

In step S180, if the fifth monitoring period has elapsed since the reduction of the setting value of the amplitude of the AC output power (S180: YES), the control circuit 35A cancels the reduction of the setting value of the amplitude of the AC output power to return the setting value of the amplitude of the AC output power to E (S181), and the process proceeds to step S150 of Fig. 19.

In step S180, if the fifth monitoring period has not elapsed since the reduction of the setting value of the amplitude of the AC output power (S180: NO), the process returns to step S178.

In steps S178 to S180, if the intensity of the first light exceeds the second determination value, or the intensity of the second light exceeds the fifth determination value before the fifth monitoring period elapses after the reduction of the setting value of the amplitude of the AC output power, the process proceeds to step S152 of Fig. 19. If neither the intensity of the first light exceeds the second determination value nor the intensity of the second light exceeds the fourth determination value before the fifth monitoring period elapses after the reduction of the setting value of the amplitude of the AC output power, the process proceeds to step S181.

In step S174, when the intensity of the second light does not exceed the fifth threshold value (step S175: NO), the process proceeds to step S150 of Fig. 19.

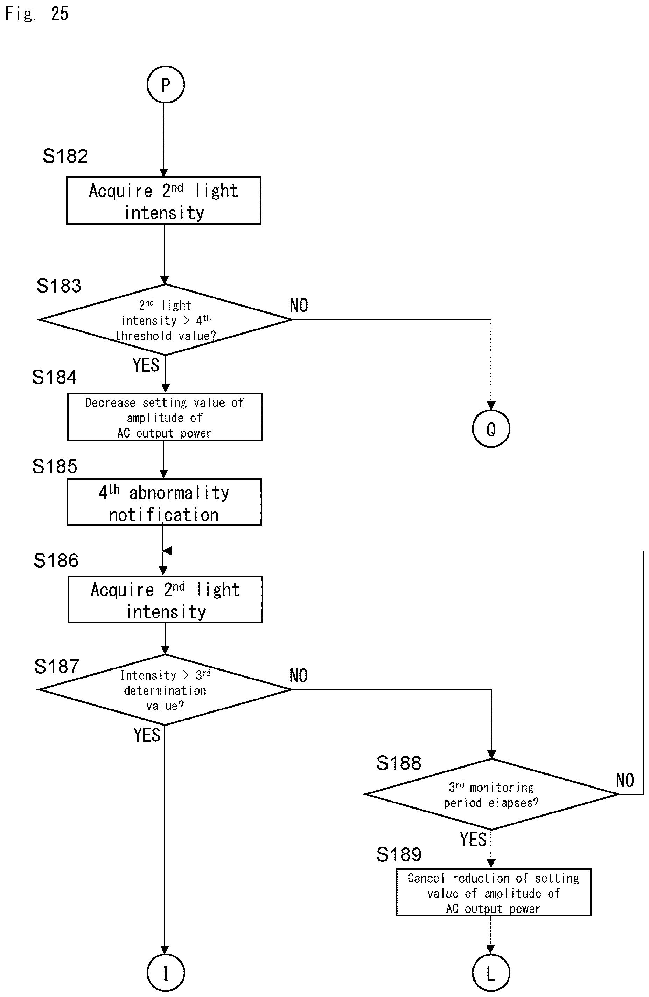

In step S165 of Fig. 22, when the intensity of the first light does not exceed the third threshold value (step S165: NO), referring to Fig. 25, the control circuit 35A obtains the intensity of the second light from the light detection device 32A (S182). Steps S183 to S189 of Fig. 25 correspond to steps S131 to S137 of Fig. 16, respectively. In step S187 of Fig. 25, when the intensity of the second light exceeds the third determination value, the process proceeds to step S152 of Fig. 19. After step S189 of Fig. 25, the process proceeds to step S150 of Fig. 19.

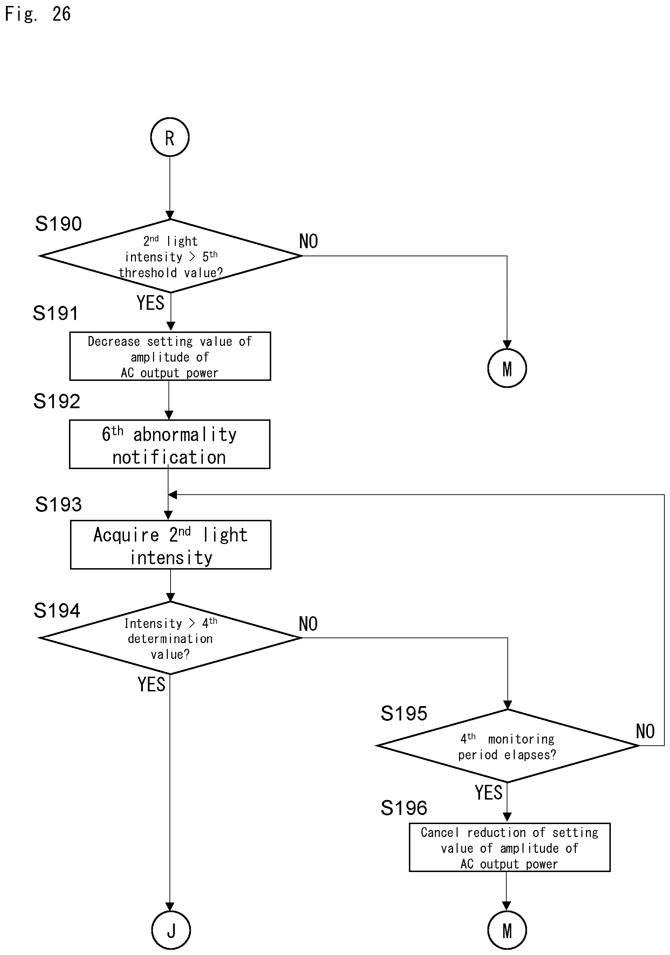

In step S183, when the intensity of the second light does not exceed the fourth threshold value (step S183: NO), referring to Fig. 26, the control circuit 35A determines whether the intensity of the second light exceeds the fifth threshold value, which is smaller than the fourth threshold value (step S190). Steps S191 to S196 of Fig. 26 correspond to steps S143 to S148 of Fig. 18, respectively. In step S194 of Fig. 26, when the intensity of the second light exceeds the fourth determination value, the process proceeds to step S152 of Fig. 19. After step S196 of Fig. 26, the process proceeds to step S150 of Fig. 19.

In step S190, when the intensity of the second light does not exceed the fifth threshold value (step S190: NO), the process proceeds to step S150 of Fig. 19.

### [1.4.2 ADVANTAGEOUS EFFECTS]

The aforementioned control device 3A is a control device for controlling the refrigeration cycle circuit 2 allowing circulation of the working medium 20 containing the refrigerant component capable of undergoing the disproportionation reaction, includes: the drive circuit 31 configured to drive the compressor 4 of the refrigeration cycle circuit 2; and the control circuit 35A configured to interrupt or limit the operation of the refrigeration cycle circuit 2 in response to detecting the sign of the disproportionation reaction based on at least one of the first state regarding the drive circuit 31 for driving the compressor 4 of the refrigeration cycle circuit 2 or the second state regarding the working medium 20. This configuration enables improvement of accuracy of detection of the disproportionation reaction of the working medium 20 and improvement of suppression of the disproportionation reaction.

In the control device 3A, the light includes first light with a wavelength that is longer than 600 nm but is not longer than 2000 nm and second light with a wavelength between 200 nm and 600 nm, inclusive. The control circuit 35A is configured to interrupt or limit the operation of the drive circuit in different ways depending on whether an intensity of the first light exceeds a threshold value for the first light or an intensity of the second light exceeds a threshold value for the second light. This configuration makes it possible to appropriately select between interrupting and limiting the operation of the drive circuit 31, and thereby extend the period during which driving of the compressor 4 can be continued.

In the control device 3A, the light includes first light with a wavelength that is longer than 600 nm but is not longer than 2000 nm and second light with a wavelength between 200 nm and 600 nm, inclusive. A threshold value for the first light includes a first threshold value, a second threshold value smaller than the first threshold value, and a third threshold value that is smaller than the second threshold value but is larger than a detection lower limit of the first light. A threshold value for the second light includes a fourth threshold value, and a fifth threshold value that is smaller than the fourth threshold value but is larger than a detection lower limit of the second light. The control circuit 35A is configured to: interrupt the operation of the drive circuit when an intensity of the first light exceeds the first threshold value; stop the operation of the drive circuit when the intensity of the first light exceeds the second threshold value and when an intensity of the second light exceeds the fifth threshold value; interrupt the operation of the drive circuit when the intensity of the first light exceeds the third threshold value and when an intensity of the second light exceeds the fourth threshold value; limit the operation of the drive circuit when the intensity of the first light exceeds the third threshold value and when the intensity of the second light exceeds the fifth threshold value; and limit the operation of the drive circuit when the intensity of the first light does not exceed the third threshold value and when the intensity of the second light exceeds the fifth threshold value. This configuration makes it possible to appropriately select between interrupting and limiting the operation of the drive circuit 31, and thereby extend the period during which driving of the compressor 4 can be continued.

### [1.5 EMBODIMENT 5]

### [1.5.1 CONFIGURATIONS]

In a refrigeration cycle (refrigeration cycle circuit), slight discharges may occur in the compressor. Such discharges may cause soot to be generated in the working medium. In addition, depending on the type of working medium, discharges in the compressor may cause hydrogen fluoride to be generated. An increase in insoluble components such as soot or hydrogen fluoride can be a cause of an abnormality in the refrigeration cycle circuit.

The present embodiment provides a refrigeration cycle device, a light detection circuit, a control device, a control method, and a program that make it possible to achieve earlier detection of an abnormality in a refrigeration cycle circuit.

### [1.5.1 CONFIGURATIONS]

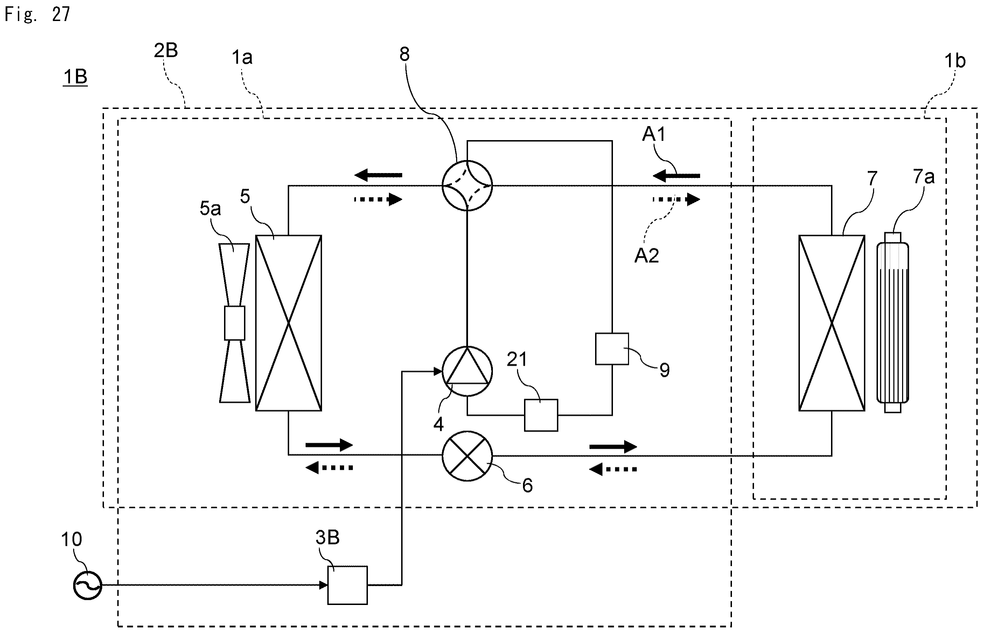

Fig. 27 is a block diagram of a refrigeration cycle device 1B according to the present embodiment. The refrigeration cycle device 1B constitutes an air conditioner enabling a cooling operation and a heating operation, for example. The refrigeration cycle device 1B includes a refrigeration cycle circuit 2B and a control device 3B.

The refrigeration cycle circuit 2B includes the compressor 4, the first heat exchanger 5, the expansion valve 6, the second heat exchanger 7, the four-way valve 8, an accumulator 9, and a bubble removing mechanism 21.

The accumulator 9 is provided for preventing liquid compression in the compression chamber of the compression mechanism 41. The accumulator 9 is positioned closer to the suction pipe 401 of the compressor 4. In detail, the accumulator 9 is positioned between the suction pipe 401 of the compressor 4 and the four-way valve 8. The accumulator 9 separates the working medium 20 into the gaseous working medium 20 and the liquid working medium 20 and directs only the gaseous working medium 20 to the sealed container 40 via the suction pipe 401.

The bubble removing mechanism 21 is provided to remove or break up bubbles that may be contained in the working medium 20. As a structure for removing or breaking up bubbles, a mesh structure can be used, but the structure is not particularly limited and any conventionally known structure can be utilized. In the present embodiment, the bubble removing mechanism 21 is located between the compressor 4 and the accumulator 9.

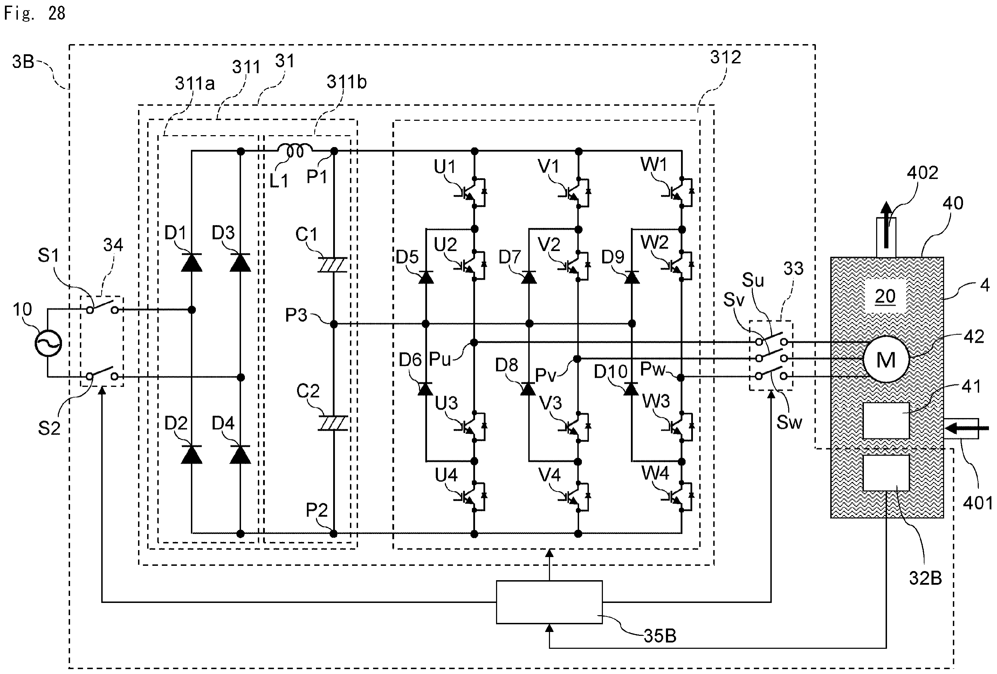

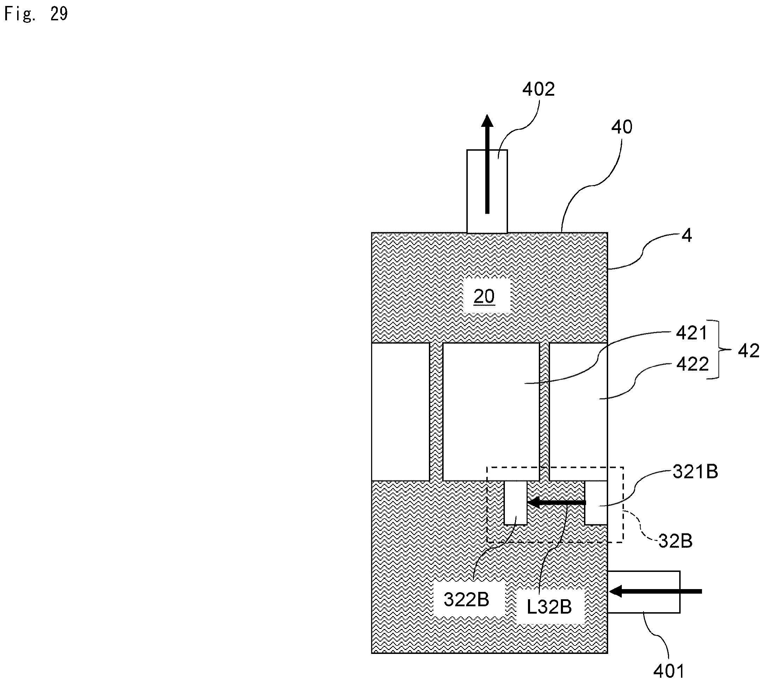

The control device 3B is configured to control the refrigeration cycle circuit 2B. In particular, the control device 3B is configured to control the compressor 4 and the expansion valve 6 of the refrigeration cycle circuit 2B. Fig. 28 is a schematic view of the compressor 4 and the control device 3B. Fig. 29 is a schematic view of an inside of the compressor 4.

The control device 3B includes the drive circuit 31, a light detection circuit 32B, the first protective device 33, the second protective device 34, and a control circuit 35B.

The light detection circuit 32B is a light detection circuit for the refrigeration cycle circuit 2B allowing circulation of the working medium 20. The light detection circuit 32B is provided to detect an abnormality in the refrigeration cycle circuit 2B by utilizing changes in the transmittance of the working medium 20. When the working medium 20 has relatively low stability, for example, due to the generation of radicals, a disproportionation reaction of compounds contained in the working medium 20 may progress, and the compounds may change into other compounds. The factors of the disproportionation reaction of the working medium 20 are considered to be heat and radicals. For example, it is considered that, when radicals are generated under high temperature and high pressure, the disproportionation reaction of the working medium 20 proceeds. Radicals may be generated by a discharge phenomenon, which can occur, for example, when an abnormality arises in the compressor 4 or in the drive circuit 31. When a discharge phenomenon occurs, relatively stable compounds are generated from the working medium 20 and circulate as insoluble components together with the working medium 20 in the refrigeration cycle circuit 2B. For example, when the working medium contains ethylene-based fluoroolefin, soot or hydrogen fluoride (HF) may be generated as insoluble components. Such unnecessary components are examples of the products generated from the working medium 20 by the disproportionation reaction. When the discharge phenomenon is repeated, the amount of insoluble components such as soot increases. An increase in such insoluble components can also cause an abnormality in the refrigeration cycle circuit 2B. The present inventors have found that, due to such an increase in insoluble components, the transmittance of the working medium 20 decreases. That is, by focusing on the transmittance of the working medium 20, it is possible to quantitatively evaluate the increase in insoluble components, thereby enabling earlier detection of abnormalities in the refrigeration cycle circuit 2B.

The light detection circuit 32B enables evaluation of changes in the transmittance of the working medium based on changes in an intensity of light. As shown in Fig. 29, the light detection circuit 32B includes a light source device 321B and a light detection device 322B.

The light source device 321B is configured to emit light L32B to the inside of the refrigeration cycle circuit 2B. In the present embodiment, the light L32B is directional light (for example, laser light, or collimated parallel light generated by converging light emitted from a light-emitting diode (LED) using a lens or double slit). The color of the light L32B is not particularly limited and may be white light or red light having a wavelength of 650 nm to 690 nm. The light detection device 322B receives the light L32B and outputs the intensity of the received light L32B. In the present embodiment, the light detection device 322B outputs a light detection signal indicating the intensity of the light L32B to the control circuit 35B.

Further explanation regarding the arrangement of the light source device 321B and the light detection device 322B will be provided. In the present embodiment, the light source device 321B emits light to the working medium 20, and the light detection device 322B receives light L32B through the working medium 20. The location in the refrigeration cycle circuit 2B where the light source device 321B irradiates the working medium 20 with light is not particularly limited; however, in the present embodiment, the light source device 321B irradiates the working medium 20 in the compressor 4 with light L32B. Since the discharge phenomenon described above may occur in the electric motor 42 of the compressor 4, it is considered that a decrease in transmittance due to insoluble components such as soot can be readily detected in the working medium 20 inside the compressor 4.

In the present embodiment, the light detection circuit 32B is located inside the sealed container 40 of the compressor 4. The light source device 321B irradiates the working medium 20 in the region between the electric motor 42 and the suction pipe 401 with light L32B. In Fig. 29, the light source device 321B is arranged beneath the electric motor 42, but is not limited thereto. The light source device 321B may also be arranged above the electric motor 42. The working medium 20 may contain bubbles. Bubbles in the working medium 20 scatter light L32B and may cause a decrease in transmittance, thereby adversely affecting evaluation using transmittance. Here, the region between the electric motor 42 and the suction pipe 401 is considered to have a small amount of bubbles. Therefore, it is possible to suppress a decrease in accuracy due to bubbles.

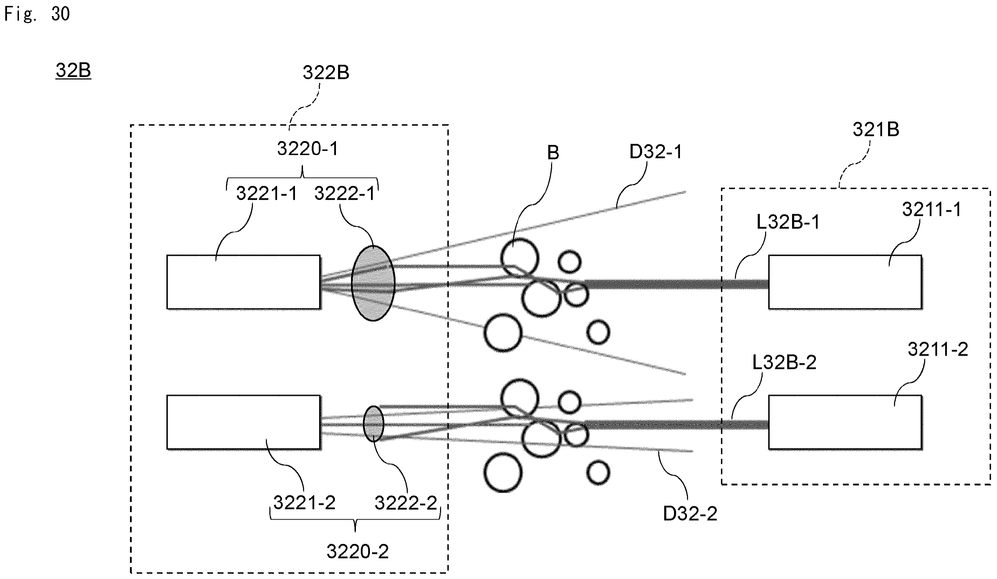

Fig. 30 is a schematic view of the light detection circuit 32B.

The light source device 321B includes a first light source 3211-1 and a second light source 3211-2. The first light source 3211-1 and the second light source 3211-2 are LED emitting white light, for example.

The light detection device 322B includes a first light detector 3220-1 and a second light detector 3220-2. The first light detector 3220-1 is placed to receive to the light L32B-1 emitted from the first light source 3211-1. The second light detector 3220-2 is placed to receive the light L32B-2 emitted from the second light source 3211-2. In the present embodiment, the first light detector 3220-1 is placed to face the first light source 3211-1 and the second light detector 3220-2 is placed to face the second light source 3211-2.

In the present embodiment, the light detection signal output from the light detection device 322B to the control circuit 35B may include one or more light detection signals indicative of intensities of the light L32B-1 and L32B-2.

The first light detector 3220-1 includes a light detection element 3221-1 and an optical system 3222-1. The second light detector 3220-2 includes a light detection element 3221-2 and an optical system 3222-2. The light detection elements 3221-1 and 3221-2 include photodiodes, for example. The optical systems 3222-1 and 3222-2 include lenses (focusing lenses), for example.

In the present embodiment, the optical designs of the optical systems 3222-1 and 3222-2 are configured such that a light receiving region D32-1 of the first light detector 3220-1 is larger (i.e., has a greater aperture ratio) than a light receiving region D32-2 of the second light detector 3220-2.

As shown in Fig. 30, bubbles B in the refrigeration cycle circuit 2B can scatter the light L32B-1 and L32B-2 from the light source device 321B. Here, since the light receiving region D32-1 of the first light detector 3220-1 is larger than the light receiving region D32-2 of the second light detector 3220-2, the first light detector 3220-1 is less susceptible to the effects of scattering due to bubbles B than the second light detector 3220-2, and conversely, the second light detector 3220-2 is more susceptible to the effects of scattering due to bubbles B than the first light detector 3220-1. When the set intensity of the light L32B-1 emitted from the first light source 3211-1 and the set intensity of the light L32B-2 emitted from the second light source 3211-2 are the same, if there are no bubbles B, the intensity of the light L32B-1 received by the first light detector 3220-1 and the intensity of the light L32B-2 received by the second light detector 3220-2 will be substantially equal. On the other hand, if bubbles B are present, the intensity of the light L32B-2 received by the second light detector 3220-2 will be smaller than the intensity of the light L32B-1 received by the first light detector 3220-1. Therefore, the difference in intensity between the light L32B-1 and L32B-2 received by the first and second light detectors 3220-1 and 3220-2 can be used as an indicator of scattering due to bubbles B, i.e., as an indicator of the presence of bubbles B.

The control circuit 35B may be implemented by a computer system including at least one processor (microprocessor) and at least one memory. The computer system may also include one or more A/D converters. For example, one or more A/D converters may be used to convert the detection voltage from the light detection circuit 32B from analog format to digital format. The control circuit 35B, similarly to the control circuit 35, controls the drive circuit 31, the first protective device 33, and the second protective device 34.

The control circuit 35B is configured to determine whether an abnormality has occurred in the refrigeration cycle circuit 2B based on the light detection signal from the light detection circuit 32B, and if it is determined that an abnormality has occurred, interrupts or limits the operation of the refrigeration cycle circuit 2B.

The control circuit 35B causes the light source device 321B to emit the light L32B to the inside of the refrigeration cycle circuit 2B, and obtains the intensity of the light L32B that has passed through the inside of the refrigeration cycle circuit 2B by means of the light detection device 322B. Here, for the purpose of reducing the influence of bubbles B that may be contained in the working medium 20, the control circuit 35B executes a process to adjust the rotational speed of the compressor 4. Specifically, the control circuit 35B makes the rotational speed of the compressor 4 in the refrigeration cycle circuit 2B, during at least a portion of the time period in which the light detection device 322B receives light L32B, smaller than the maximum value of the rotational speed during the time period in which the light detection device 322B does not receive light L32B. The time period in which the light detection device 322B does not receive light L32B is a time period of the normal operation of the refrigeration cycle circuit 2B. Preferably, the control circuit 35B sets the rotational speed of the compressor 4 in the refrigeration cycle circuit 2B, during the entire time period in which the light detection device 322B receives light L32B, to half or less of the maximum value of the rotational speed during the time period in which the light detection device 322B does not receive light L32B. By reducing the rotational speed of the compressor 4, the amount of bubbles B generated can be expected to decrease. Therefore, it is possible to reduce the influence of bubbles B that may be contained in the working medium 20, thereby improving the accuracy in detecting abnormalities in the refrigeration cycle circuit 2B.

In the present embodiment, the control circuit 35B is configured to interrupt or limit the operation of the refrigeration cycle circuit 2B when the intensity of the light L32B indicated by the light detection signal from the light detection circuit 32B satisfies a predetermined condition.

A predetermined condition may be that the index value of the intensity of the light L32B is equal to or less than a threshold value. This predetermined condition corresponds to the case where the amount of the product generated from the working medium 20 due to the disproportionation reaction reaches or exceeds a predetermined amount. The threshold value may be determined by evaluating the transmittance of the working medium 20, at which an abnormality is likely to occur in the refrigeration cycle circuit 2B, through testing or simulation. The threshold value may, for example, be set at 95% or less of the index value of the intensity of light L32B in the initial rated operation state. That is, the predetermined condition may be that the index value of the intensity of light L32B is equal to or less than 95% of the index value of the intensity of light L32B in the initial rated operation state. The index value of the intensity of the light is a value derived directly or indirectly from the intensity of the light, and may be either the intensity of the light itself or the transmittance of the light. The index value of the intensity of the light is also an index value indicating the amount of the product generated from the working medium 20 due to the disproportionation reaction. The index value of the intensity of the light L32B in the initial rated operation state may be set, for example, based on a representative value of the index value of the intensity of the light detected by the light detection device 322B when the refrigeration cycle circuit 2B is first operated. Here, the representative value may be selected from the average value, mode value, maximum value, minimum value, median value, or the like.

The predetermined condition may be that the ratio of an index value of the intensity of the light L32B at a second time point after predetermined time from a first time point, to the index value of the intensity of the light L32B at the first time point is equal to or less than a predetermined ratio. This predetermined condition corresponds to the amount of increase, within a predetermined period, in a product generated from the working medium 20 due to a disproportionation reaction reaching or exceeding a predetermined amount. The predetermined ratio may be determined by evaluation through testing or simulation, based on the transmittance of the working medium 20 at which there is a high possibility that an abnormality occurs in the refrigeration cycle circuit 2B. For example, the predetermined ratio may be 95% or less. In other words, the predetermined condition may be that the ratio of the index value of the intensity of the light L32B at the second time point (after predetermined time from the first time point) to the index value at the first time point is 95% or less. The first time point may be, for example, the time of start of the operation of the refrigeration cycle circuit 2B, and the second time point may be any time during the operation of the refrigeration cycle circuit 2B.

In the control device 3B described above, the light detection circuit 32B receives the light L32B from the inside of the sealed container 40 of the compressor 4 of the refrigeration cycle circuit 2B to output the intensity of the light L32B received, as the second state. When the control circuit 35B detects the sign of the disproportionation reaction based on the second state regarding the working medium 20, it interrupts or limits the operation of the refrigeration cycle circuit 2B. Here, the control circuit 35B determines an index value of the amount of the product generated from the working medium 20 by the disproportionation reaction, based on the intensity of the light L32B. The sign of the disproportionation reaction is that the amount of the product or the increase in the amount of the product within a predetermined period becomes equal to or greater than a predetermined amount.

As described above, the light detection circuit 32B is provided with the first light detector 3220-1 and the second light detector 3220-2. The control circuit 35B can use the difference between the intensities of the light L32B-1 and L32B-2 received by the first and second light detectors 3220-1 and 3220-2 as an index of the amount of bubbles B. When determining the index value of the intensity of the light L32B, the control circuit 35B can correct the index value based on the amount of bubbles B. That is, it is possible to perform a correction to eliminate the decrease caused by the bubbles B from the intensity of the light L32B. For the correction of the influence of the bubbles B, a table may be prepared in advance by experimentally or through simulation defining the relationship between the difference in intensity of the light L32B-1 and L32B-2 received by the first and second light detectors 3220-1 and 3220-2, and the amount of bubbles B, and associating the difference in intensity with a correction amount for the intensity of the light L32B. The control circuit 35B determines the correction amount by referring to the table based on the difference between the intensities of the light L32B-1 and L32B-2 received by the first and second light detectors 3220-1 and 3220-2, and then obtains the index value of the intensity of the light L32B by taking into account the correction amount in the intensities of the light L32B-1 and L32B-2. Further, the control circuit 35B improves the accuracy of abnormality detection by reducing measurement errors caused by bubbles B flowing together with the working medium 20, by first calculating the time-averaged values of the intensities of the light L32B-1 and L32B-2 received by the first and second light detectors 3220-1 and 3220-2 (for example, taking averages with a time constant of about 0.1 s to 1 s), and then calculating the difference between those averages.

As described above, the refrigeration cycle device 1B is provided with the bubble removing mechanism 21. In the present embodiment, the bubble removing mechanism 21 is disposed between the compressor 4 and the accumulator 9, and is located closer to an upstream side than a portion to which the light source device 321B emits the light L32B in the refrigeration cycle circuit 2B (i.e., the inside of the compressor 4). Therefore, it is possible to reduce the influence of bubbles B that may be contained in the working medium 20, and to improve the accuracy of detecting abnormalities in the refrigeration cycle circuit 2B.

The interrupting or limiting of the operation of the refrigeration cycle circuit 2B may include interrupting the operation of the drive circuit 31, increasing the rotational speed of a fan of the condenser, decreasing the rotational speed of a fan of the evaporator, increasing the opening degree of the expansion valve, (in the case where the refrigeration cycle device 1B is provided with a plurality of indoor units 1b) opening the expansion valve of at least one indoor unit 1b of the indoor units 1b that are not in operation, and, (in the case of the heating operation) switching to the cooling operation by the four-way valve 8 and opening the expansion valve 6.

The control circuit 35B interrupts or limits the operation of the refrigeration cycle circuit 2B in different ways according to the number of times that the intensity of the light L32B satisfies the predetermined condition. In particular, the greater the number of times that the intensity of the light L32B satisfies the predetermined condition, the control circuit 35B performs the process for interrupting or limiting the operation of the refrigeration cycle circuit 2B at a higher degree. This enables earlier detection of an abnormality in the refrigeration cycle circuit 2B, and therefore improves the safety of using the working medium 20.

The control circuit 35B interrupts or limits the operation of the refrigeration cycle circuit 2B in different ways depending on the time difference between a first time at which the intensity of the light L32B first satisfies the predetermined condition and a second time at which the intensity of the light L32B next satisfies the predetermined condition. In particular, the shorter the time difference, the higher the degree of the process performed for interrupting or limiting the operation of the refrigeration cycle circuit 2B. This allows the control device 3 to detect an abnormality in the refrigeration cycle circuit 2B at an earlier stage, and hence improves the safety of using the working medium 20.

The process for interrupting or limiting the operation of the refrigeration cycle circuit 2B includes, for example, a first process to a third process. The first process is a process of interrupting outputting the AC output power and then restarting outputting the AC output power after a waiting period elapses. The second process is a process of interrupting outputting the AC output power and after a waiting period elapses, restarting it with a reduced setting value of the amplitude of the AC output power. The third process is a process of interrupting outputting the AC output power and interrupting inputting the input power. Among the first process to the third process, the third process, the second process, and the first process are in order of higher degree of interrupting or limiting the operation of the refrigeration cycle circuit 2B. Even in the first process or the second process, the longer the waiting time, the higher the degree of interrupting or limiting the operation of the refrigeration cycle circuit 2B.

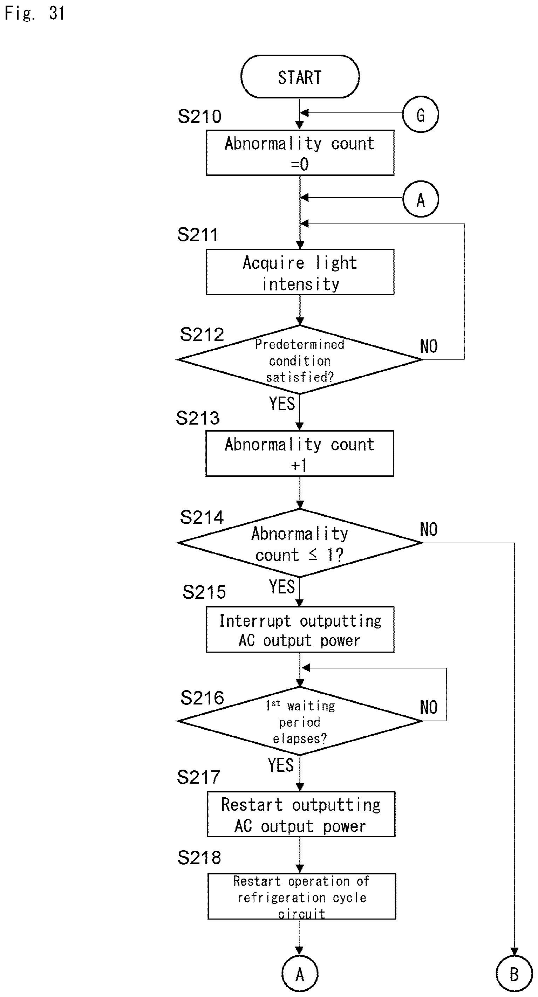

Next, an example of the operation of the control circuit 35B of the control device 3B will be briefly explained with reference to Figs. 31 to 36. Each of Figs. 31 to 36 represents a part of a flowchart showing the operation of the control circuit 35B of the control device 3B, and a complete flowchart is obtained by combining Figs. 31 to 36.

Referring to Fig. 31, the control circuit 35B outputs the AC output power to the electric motor 42 based on the input power from the power supply 10 by the drive circuit 31, thereby driving the compressor 4. The control circuit 35B sets the abnormality count to zero (S210). The abnormality count indicates the number of times that the intensity of the light L32B has satisfied the predetermined condition. A greater abnormality count serves as an index of a higher possibility that an abnormality has occurred in the refrigeration cycle circuit 2B.

The control circuit 35B obtains the light detection signal from the light detection circuit 32B (S211). The control circuit 35B then determines whether the intensity of the light L32B indicated by the light detection signal satisfies the predetermined condition (S212).

If the intensity of the light L32B does not satisfy the predetermined condition (S212: NO), the process returns to step S211. Through steps S211 and S212, the control circuit 35B determines, at a predetermined cycle, whether the intensity of the light L32B satisfies the predetermined condition.

If, in step S212, the intensity of the light L32B satisfies the predetermined condition (S212: YES), the control circuit 35B increments the abnormality count by one (S213), and determines whether the abnormality count is one or less (S214).

In step S214, if the abnormality count is one or less (S214: YES), the control circuit 35B sets the first protective device 33 to the OFF state to interrupt outputting the AC output power (S215). The control circuit 35B then determines whether a first waiting period has elapsed after the interruption of outputting the AC output power (S216). The first waiting period is, for example, 1 second. When the first waiting period elapses (S216: YES), the control circuit 35B sets the first protective device 33 to the ON state to restart outputting the AC output power (S217). Consequently, the operation of the compressor 4 is restarted, thereby restarting the operation of the refrigeration cycle circuit 2B (S218). Thereafter, the process returns to step S211.

As described above, when the intensity of the light L32B satisfies the predetermined condition, the control circuit 35B interrupts outputting the AC output power, and when the first waiting period has elapsed after the interruption of outputting the AC output power, the control circuit 35B restarts outputting the AC output power.

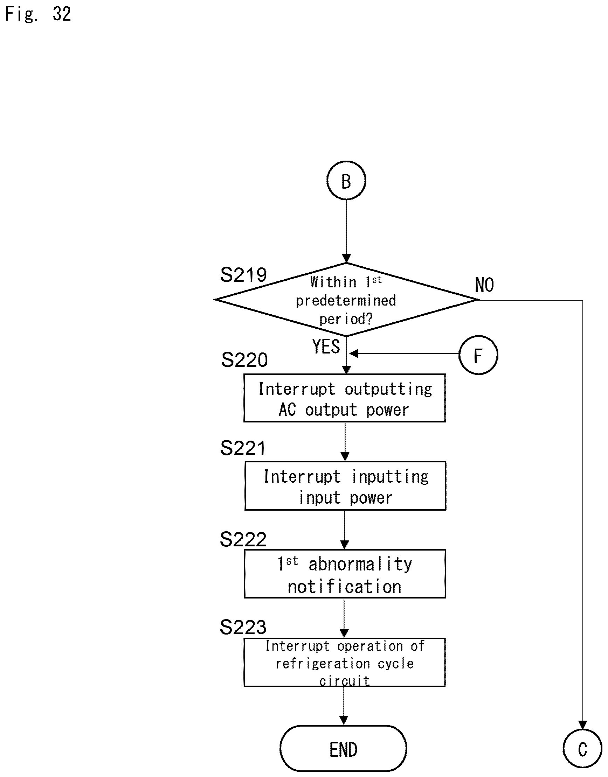

In step S214, if the abnormality count is not one or less (S214: NO), referring to Fig. 32, the control circuit 35B determines whether the time difference between the first time at which the intensity of the light L32B first satisfies the predetermined condition and the second time at which the intensity of the light L32B next satisfies the predetermined condition is within first predetermined time (step S219). The shortness of the time difference serves as an index of a higher possibility that an abnormality has occurred in the refrigeration cycle circuit 2B. The first predetermined time is, for example, about 20 to 100 ms.

In step S219, if the time difference is within the first predetermined time (step S219: YES), the control circuit 35B sets the first protective device 33 to the OFF state to interrupt outputting the AC output power (S220). The control circuit 35B then sets the second protective device 34 to the OFF state to interrupt inputting the input power (S221). The control circuit 35B outputs a first abnormality notification (S222). The first abnormality notification indicates that there is a very high possibility that an abnormality has occurred in the refrigeration cycle circuit 2B of the refrigeration cycle device 1B. Thereafter, the control circuit 35B interrupts the operation of the compressor 4 to interrupt the operation of the refrigeration cycle circuit 2B (S223).

As described above, when the detection voltage falls below the second voltage (S219: YES) before a predetermined time (the first predetermined time) elapses from restart of outputting the AC output power after the lapse of the first waiting period (S217), the control circuit 35B interrupts outputting the AC output power (S220) and interrupts inputting the input power (S221).

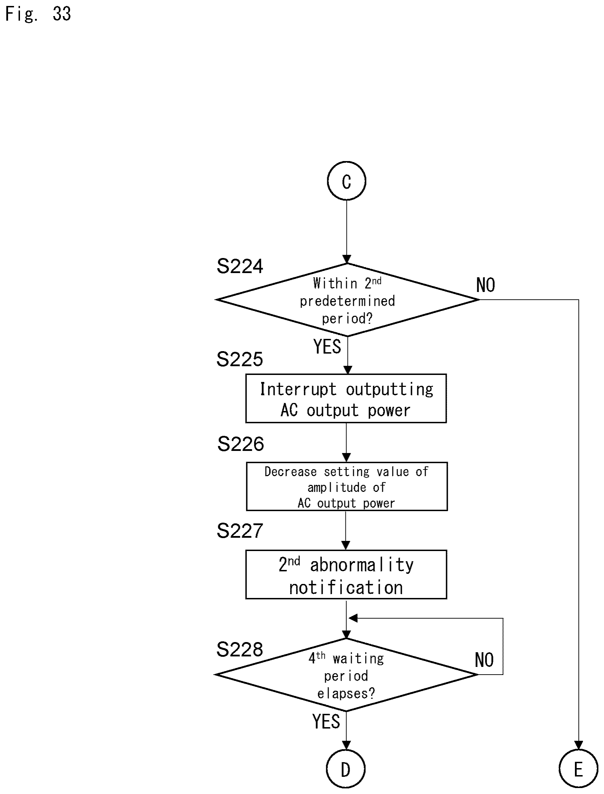

In step S219, if the time difference is not within the first predetermined time (step S219: NO), referring to Fig. 33, the control circuit 35B determines whether the time difference is within a second predetermined time longer than the first predetermined time (step S224). The second predetermined time is, for example, about 200 ms to 1 s.

In step S224, if the time difference is within the second predetermined time (step S224: YES), the control circuit 35B sets the first protective device 33 to the OFF state to interrupt outputting the AC output power (S225). The control circuit 35B changes the switching control of the semiconductor switching elements of the drive circuit 31 so that the setting value of the amplitude of the AC output power decreases from E to E/2 (S226). The control circuit 35B outputs a second abnormality notification (S227). The second abnormality notification indicates that there is a high possibility that an abnormality has occurred in the refrigeration cycle circuit 2 of the refrigeration cycle device 1.

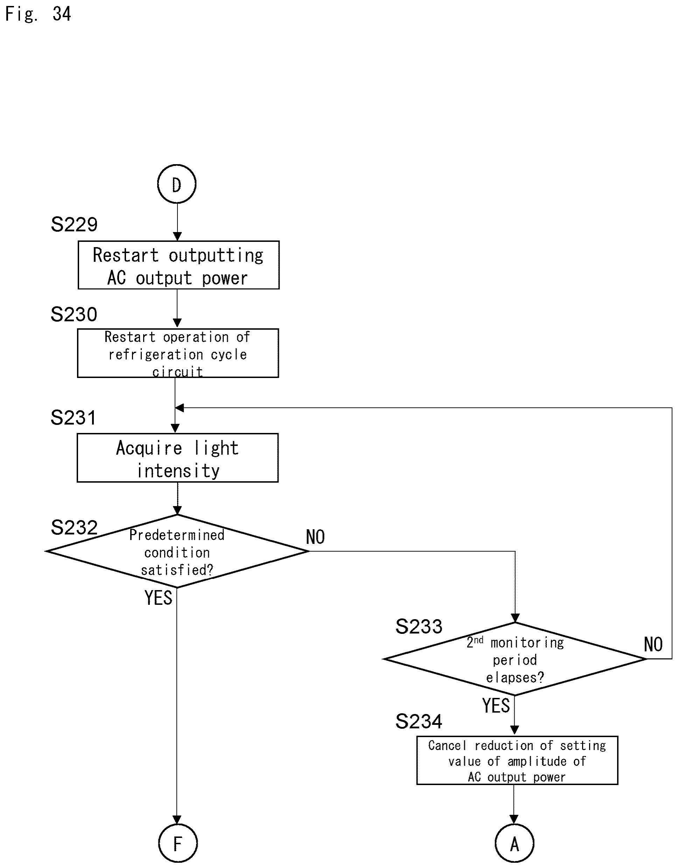

The control circuit 35B determines whether a fourth waiting period has elapsed after the interruption of outputting the AC output power (S228). The fourth waiting period is longer than the first waiting period. The fourth waiting period is, for example, 60 s. When the fourth waiting period elapses (S228: YES), as shown in Fig. 34, the control circuit 35B sets the first protective device 33 to the ON state to restart outputting the AC output power (S229). Consequently, the operation of the compressor 4 is restarted (S230). In this case, the setting value of the amplitude of the AC output power remains decreased from E to E/2.

As described above, when the intensity of the light L32B satisfies the predetermined condition before a predetermined time (the second predetermined time) has elapsed from restart of outputting the AC output power after the lapse of the first waiting period (S217), the control circuit 35B interrupts outputting the AC output power (S225) and decreases the setting value of the amplitude of the AC output power (S226). When the fourth waiting period longer than the first waiting period has elapsed after the interruption of outputting the AC output power, the control circuit 35B restarts outputting the AC output power with the setting value of the amplitude kept decreased (S229).

Thereafter, the control circuit 35B obtains the light detection signal from the light detection circuit 32B (S231). The control circuit 35B determines whether the intensity of the light L32B satisfies the predetermined condition (S232).

In step S232, if the intensity of the light L32B satisfies the predetermined condition (S232: YES), the process proceeds to step S220 in Fig. 32.

In step S232, if the intensity of the light L32B does not satisfy the predetermined condition (S232: NO), the control circuit 35B determines whether the second monitoring period has elapsed from restart of the operation of the refrigeration cycle circuit 2B (S233).

In step S233, if the second monitoring period has elapsed from restart of the operation of the refrigeration cycle circuit 2B (S233: YES), the control circuit 35B cancels the reduction of the setting value of the amplitude of the AC output power to return the setting value of the amplitude of the AC output power to E (S234), and the process proceeds to step S211 in Fig. 31.

In step S233, if the second monitoring period has not elapsed from restart of the operation of the refrigeration cycle circuit 2B (S233: NO), the process returns to step S231.

Through steps S231 to S233, if the intensity of the light L32B satisfies the predetermined condition before the lapse of the second monitoring period from restart of the operation of the refrigeration cycle circuit 2B, the process proceeds to step S220 in Fig. 33. If the intensity of the light L32B does not satisfy the predetermined condition before the lapse of the second monitoring period from restart of the operation of the refrigeration cycle circuit 2B, the process proceeds to step S234.

As described above, if the intensity of the light L32B does not satisfy the predetermined condition during the second monitoring period after the restart of outputting the AC output power (S229) following the lapse of the fourth waiting period (S233: YES), the control circuit 35B cancels the reduction of the setting value of the amplitude of the AC output power (S234). When the intensity of the light L32B satisfies the predetermined condition before the lapse of the second monitoring period after the restart of outputting the AC output power (S229) following the lapse of the fourth waiting period (S232: YES), the control circuit 35B interrupts outputting the AC output power (S220) and interrupts inputting the input power (S221).

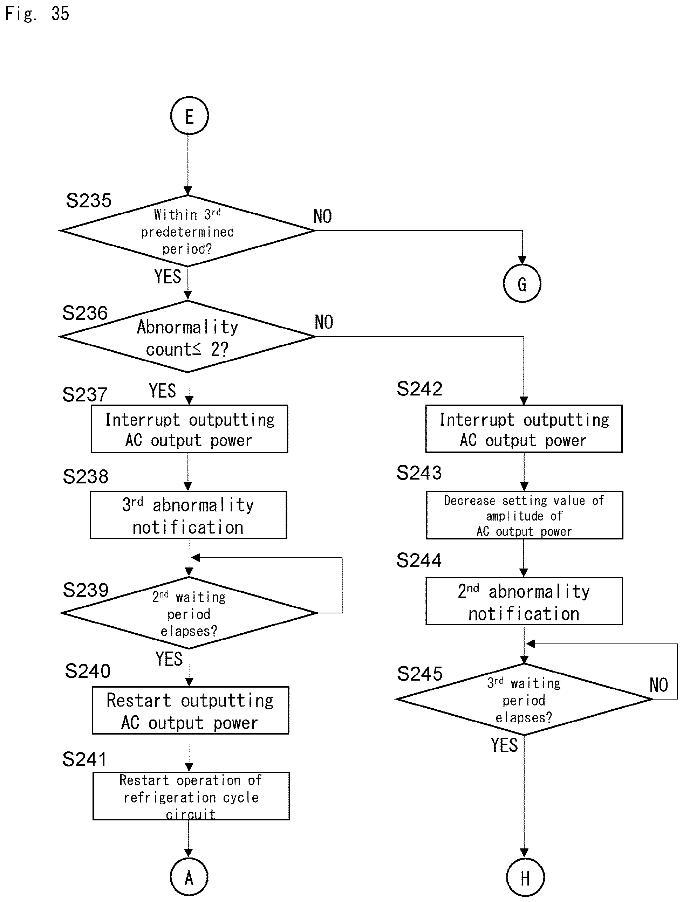

Returning to Fig. 33, in step S244, if the time difference is not within the second predetermined time (step S224: NO), referring to Fig. 35, the control circuit 35B determines whether the time difference is within a third predetermined time longer than the second predetermined time (step S235). The third predetermined time is, for example, about 2 s to 10 s.

In step S235, if the time difference is not within the third predetermined time (step S235: NO), the process returns to step S210, and the control circuit 35B sets the abnormality count to zero (see Fig. 31). That is, when a sufficient amount of time has elapsed since abnormality detection, it is considered that the possibility of occurrence of an abnormality in the refrigeration cycle circuit 2B is low, and therefore the abnormality count is reset to zero.

In step S235, if the time difference is within the third predetermined time (step S235: YES), the control circuit 35B determines whether the abnormality count is two or less (S236).

In step S236, if the abnormality count is two or less (S236: YES), the control circuit 35B sets the first protective device 33 to the OFF state to interrupt outputting the AC output power (S237). The control circuit 35B outputs a third abnormality notification (S238). The third abnormality notification indicates that there is a possibility that an abnormality has occurred in the refrigeration cycle circuit 2B of the refrigeration cycle device 1B. The control circuit 35B then determines whether a second waiting period has elapsed after the interruption of outputting the AC output power (S239). The second waiting period is longer than the first waiting period. The second waiting period is, for example, 10 s. When the second waiting period elapses (S239: YES), the control circuit 35B sets the first protective device 33 to the ON state to restart outputting the AC output power (S240). Consequently, the compressor 4 restart to operate and the refrigeration cycle circuit 2B restarts to operate (S241). Thereafter, the process returns to step S211.

As described above, when the intensity of the light L32B satisfies the predetermined condition before a predetermined time (the third predetermined time) elapses from the restart of outputting the AC output power after the lapse of the first waiting period (S217), the control circuit 35B interrupts outputting the AC output power. When the second waiting period, which is longer than the first waiting period, elapses after the interruption of outputting the AC output power, the control circuit 35B restarts outputting the AC output power (S240).

In step S236, if the abnormality count is not two or less (S236: NO), i.e., if the abnormality count is three or more, the control circuit 35B sets the first protective device 33 to the OFF state to interrupt outputting the AC output power (S242). The control circuit 35B changes the switching control of the semiconductor switching elements of the drive circuit 31 so that the setting value of the amplitude of the AC output power decreases from E to E/2 (S243). The control circuit 35B outputs the second abnormality notification (S244).

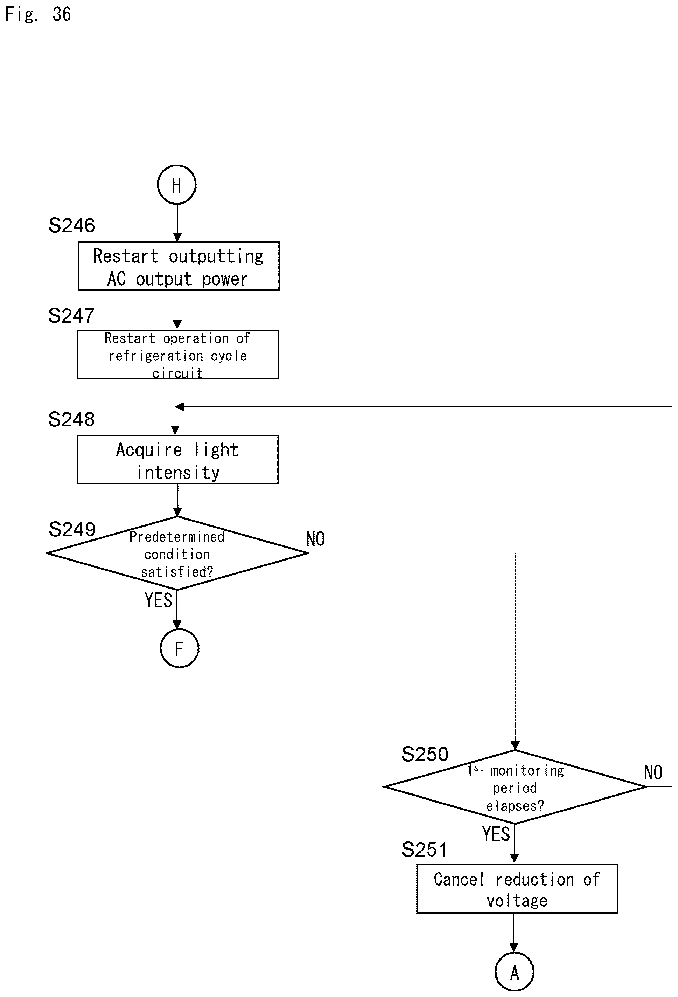

The control circuit 35B determines whether a third waiting period has elapsed after the interruption of outputting the AC output power (S245). The third waiting period is longer than the second waiting period. The third waiting period is, for example, 60 s. When the third waiting period elapses (S245: YES), as shown in Fig. 36, the control circuit 35B sets the first protective device 33 to the ON state to restart outputting the AC output power (S246). Consequently, the compressor 4 restarts to operate and the refrigeration cycle circuit 2B restarts to operate (S247). In this case, the setting value of the amplitude of the AC output power remains decreased from E to E/2.

As described above, when the intensity of the light L32B satisfies the predetermined condition before a predetermined time (the third predetermined time) elapses from the restart of outputting the AC output power after the lapse of the second waiting period (S240), the control circuit 35B interrupts outputting the AC output power (S242) and decreases the setting value of the amplitude of the AC output power (S243). When a third waiting period longer than the second waiting period has elapsed after the interruption of outputting the AC output power, the control circuit 35B restarts outputting the AC output power with the setting value of the amplitude of the AC output power kept decreased (S247).

Thereafter, the control circuit 35B obtains the light detection signal from the light detection circuit 32B (S248). The control circuit 35B determines whether the intensity of the light L32B satisfies the predetermined condition (S249).

In step S249, if the intensity of the light L32B satisfies the predetermined condition (S249: YES), the process proceeds to step S220 in Fig. 33.

In step S249, if the intensity of the light L32B does not satisfy the predetermined condition (S249: NO), the control circuit 35B determines whether a first monitoring period has elapsed from the restart of the operation of the refrigeration cycle circuit 2B (S250). The first monitoring period may be the same as, or different from, the second monitoring period in step S233.

In step S250, if the first monitoring period has elapsed from the restart of the operation of the refrigeration cycle circuit 2B (S250: YES), the control circuit 35B cancels the reduction of the setting value of the amplitude of the AC output power to return the setting value of the amplitude of the AC output power to E (S251), and the process proceeds to step S211 in Fig. 31.

In step S250, if the first monitoring period has not elapsed from the restart of the operation of the refrigeration cycle circuit 2B (S250: NO), the process returns to step S248.

Through steps S248 to S250, if the intensity of the light L32B satisfies the predetermined condition before the lapse of the first monitoring period from the restart of the operation of the refrigeration cycle circuit 2B, the process proceeds to step S220 in Fig. 33. If the intensity of the light L32B does not satisfy the predetermined condition before the lapse of the first monitoring period from the restart of the operation of the compressor 4, the process proceeds to step S251.

As described above, if the intensity of the light L32B does not satisfy the predetermined condition during the first monitoring period after the restart of outputting the AC output power (S247) following the lapse of the third waiting period (S250: YES), the control circuit 35B cancels the reduction of the setting value of the amplitude of the AC output power (S251). If the intensity of the light L32B satisfies the predetermined condition before the lapse of the first monitoring period after the restart of outputting the AC output power (S247) following the lapse of the third waiting period (S249: YES), the control circuit 35B interrupts outputting the AC output power (S220) and interrupts inputting the input power (S221).

### [1.5.2 ADVANTAGEOUS EFFECTS]

The aforementioned control device 3B is a control device for controlling the refrigeration cycle circuit 2B allowing circulation of the working medium 20 containing the refrigerant component capable of undergoing the disproportionation reaction, includes: the drive circuit 31 configured to drive the compressor 4 of the refrigeration cycle circuit 2; and the control circuit 35B configured to interrupt or limit the operation of the refrigeration cycle circuit 2B in response to detecting the sign of the disproportionation reaction based on at least one of the first state regarding the drive circuit 31 for driving the compressor 4 of the refrigeration cycle circuit 2B or the second state regarding the working medium 20. This configuration enables improvement of accuracy of detection of the disproportionation reaction of the working medium 20 and improvement of suppression of the disproportionation reaction.

The control device 3B includes the light detection device 322B configured to receive the light L32B by way of the inside of the refrigeration cycle circuit 2B to output the intensity of the light L32B received, as the second state. The control device 3B is configured to determine the index value of an amount of a product produced from the working medium 20 by the disproportionation reaction, based on the intensity of the light L32B. The sign of the disproportionation reaction is that an amount of the product or an increase in the amount of the product during a predetermined period is equal to or larger than a predetermined amount. This configuration enables improvement of accuracy of detection of the disproportionation reaction of the working medium 20 and improvement of suppression of the disproportionation reaction.

The aforementioned control device 3B seems to perform the following control method. The control method includes interrupting or limiting the operation of the refrigeration cycle circuit 2B in response to detecting the sign of the disproportionation reaction based on at least one of the first state regarding the drive circuit 31 for driving the compressor 4 of the refrigeration cycle circuit 2B or the second state regarding the working medium 20. This configuration enables improvement of accuracy of detection of the disproportionation reaction of the working medium 20 and improvement of suppression of the disproportionation reaction.

The control method includes determining an index value of an amount of a product produced from the working medium 20 by the disproportionation reaction, based on the second state. The sign of the disproportionation reaction is that the amount of the product or an increase in the amount of the product during a predetermined period is equal to or larger than a predetermined amount. This configuration enables improvement of accuracy of detection of the disproportionation reaction of the working medium 20 and improvement of suppression of the disproportionation reaction.

The control method performed by the control device 3B can be realized by a computer system executing a program. This program is a program executed by the computer system included in the control device 3B for controlling the refrigeration cycle circuit 2B allowing circulation of the working medium 20 containing the refrigerant component capable of undergoing the disproportionation reaction and enables the computer system to perform a process of interrupting or limiting the operation of the refrigeration cycle circuit 2B in response to detecting the sign of the disproportionation reaction based on at least one of the first state regarding the drive circuit 31 for driving the compressor 4 of the refrigeration cycle circuit 2B or the second state regarding the working medium 20. This configuration enables improvement of accuracy of detection of the disproportionation reaction of the working medium 20 and improvement of suppression of the disproportionation reaction.

The aforementioned refrigeration cycle device 1B includes the refrigeration cycle circuit 2B allowing circulation of the working medium 20, the light source device 321B configured to emit the light L32B to the inside of the refrigeration cycle circuit 2B, and the light detection device 322B configured to receive the light L32B to output the intensity of the light L32B received. This configuration makes it possible to enable earlier detection of abnormalities in the refrigeration cycle circuit 2B.

In the refrigeration cycle device 1B, the light source device 321B is configured to emit light L32B to the working medium 20 and the light detection device 322B is configured to receive light L32B passing through the working medium 20. This configuration makes it possible to enable earlier detection of abnormalities in the refrigeration cycle circuit 2B.

In the refrigeration cycle device 1B, the light source device 321B is configured to emit the light to the working medium 20 present in the compressor 4 of the refrigeration cycle circuit 2B. This configuration makes it possible to improve the accuracy of detecting abnormalities in the refrigeration cycle circuit 2B.

In the refrigeration cycle device 1B, the compressor 4 includes the suction pipe 401 for the working medium 20, the discharge pipe 402 for the working medium 20, and the electric motor 42 located between the suction pipe 401 and the discharge pipe 402, and the light source device 321B is configured to emit the light L32B to a portion of the working medium 20 present in a region between the electric motor 42 and the suction pipe 401. This configuration makes it possible to improve the accuracy of detecting abnormalities in the refrigeration cycle circuit 2B.

In the refrigeration cycle device 1B, the light detection device 322B includes the first light detector 3220-1 and the second light detector 3220-2, and the light receiving region D32-1 of the first light detector 3220-1 is larger than the light receiving region D32-2 of the second light detector 3220-2. This configuration makes it possible to reduce the influence of bubbles B that may be contained in the working medium 20 and to improve the accuracy of detecting abnormalities in the refrigeration cycle circuit 2B.

The refrigeration cycle device 1B further includes the bubble removing mechanism 21 which is located closer to an upstream side than a portion of the refrigeration cycle circuit 2B irradiated by the light source device 321B with the light L32B to remove or break up bubbles B within the working medium 20. This configuration makes it possible to reduce the influence of bubbles B that may be contained in the working medium 20 and to improve the accuracy of detecting abnormalities in the refrigeration cycle circuit 2B.

The refrigeration cycle device 1B further includes the control circuit 35B configured to control the operation of the refrigeration cycle circuit 2B. The control circuit 35B is configured to interrupt or limit the operation of the refrigeration cycle circuit 2B when the intensity of the light L32B output from the light detection device 322B satisfies a predetermined condition. This configuration makes it possible to enable earlier detection of abnormalities in the refrigeration cycle circuit 2B. Furthermore, this configuration makes it possible to suppress disproportionation reactions of the working medium 20.

In the refrigeration cycle device 1B, the control circuit 35B is configured to make the rotational speed of the compressor 4 of the refrigeration cycle circuit 2B during at least a portion of a time period when the light detection device 322B receives the light L32B, smaller than a maximum value of the rotational speed during a time period when the light detection device 322B does not receive the light 32B. This configuration makes it possible to reduce the influence of bubbles B that may be contained in the working medium 20 and to improve the accuracy of detecting abnormalities in the refrigeration cycle circuit 2B.

In the refrigeration cycle device 1B, the predetermined condition is that an index value of the intensity of the light L32B is not greater than 95% of an index value of the intensity of the light L32B at an initial rated operation state. This configuration makes it possible to enable earlier detection of abnormalities in the refrigeration cycle circuit 2B.

In the refrigeration cycle device 1B, the predetermined condition is that a ratio of an index value of the intensity of the light L32B at a second time point after predetermined time from a first time point, to an index value of the intensity of the light L32B at the first time point is 95% or less. This configuration makes it possible to enable earlier detection of abnormalities in the refrigeration cycle circuit 2B.

The aforementioned light detection circuit 32B is a light detection circuit for the refrigeration cycle circuit 2B allowing circulation of the working medium 20 and includes the light source device 321 configured to emit light L32B to the inside of the refrigeration cycle circuit 2B and the light detection device 322B configured to receive the light L32B to output the intensity of the light L32B received. This configuration makes it possible to enable earlier detection of abnormalities in the refrigeration cycle circuit 2B.

The aforementioned control device 3B includes the aforementioned light detection circuit 32B; and the control circuit 35B configured to control the operation of the refrigeration cycle circuit 2B. The control circuit 35B is configured to interrupt or limit the operation of the refrigeration cycle circuit 2B when the intensity of the light L32B output from the light detection device 322B of the light detection circuit 32B satisfies a predetermined condition. This configuration makes it possible to enable earlier detection of abnormalities in the refrigeration cycle circuit 2B. Furthermore, this configuration makes it possible to suppress disproportionation reactions of the working medium 20.

The aforementioned control device 3B seems to perform the following control method. The control method is a control method performed by the control device 3B for controlling the refrigeration cycle circuit 2B allowing circulation of the working medium 20 and includes: receiving, by the light detection device 322B, light L32B emitted to the inside of the refrigeration cycle circuit 2B to output the intensity of the light L32B received; and interrupting or limiting the operation of the refrigeration cycle circuit 2B when the intensity of the light L32B output from the light detection device 322B satisfies a predetermined condition. This configuration makes it possible to enable earlier detection of abnormalities in the refrigeration cycle circuit 2B. Furthermore, this configuration makes it possible to suppress disproportionation reactions of the working medium 20.

In the control method, the light detection device 322B includes the first light detector 3220-1 and the second light detector 3220-2. The light receiving region D32-1 of the first light detector 3220-1 is larger than the light receiving region D32-2 of the second light detector 3220-2. The control method includes: correcting an index value of the intensity of the light output from the light detection device 322B based on a difference between an intensity of the light L32B-1 output from the first light detector 3220-1 and an intensity of the light L32B-2 output from the second light detector 3220-2; and interrupting or limiting the operation of the refrigeration cycle circuit 2B when the corrected index value of the intensity of the light satisfies the predetermined condition. This configuration makes it possible to reduce the influence of bubbles B that may be contained in the working medium 20 and to improve the accuracy of detecting abnormalities in the refrigeration cycle circuit 2B.

The control method performed by the control device 3B can be realized by a computer system executing a program. This program is a program executed by a computer system included in the control device 3B for controlling the refrigeration cycle circuit allowing circulation 2B of the working medium 20 and includes: receiving, by the light detection device 322B, light L32B emitted to the inside of the refrigeration cycle circuit 2B to output the intensity of the light L32B received; and interrupting or limiting the operation of the refrigeration cycle circuit 2B when the intensity of the light L32B output from the light detection device 322B satisfies a predetermined condition. This configuration makes it possible to enable earlier detection of abnormalities in the refrigeration cycle circuit 2B. Furthermore, this configuration makes it possible to suppress disproportionation reactions of the working medium 20.

In the program, the light detection device 322B includes the first light detector 3220-1 and the second light detector 3220-2. The light receiving region D32-1 of the first light detector 3220-1 is larger than the light receiving region D32-2 of the second light detector 3220-2. The program includes correcting an index value of the intensity of the light output from the light detection device L322B based on a difference between an intensity of the light L32B-1 output from the first light detector 3220-1 and an intensity of the light L32B-2 output from the second light detector 3220-2, and interrupting or limiting the operation of the refrigeration cycle circuit 2B when the corrected index value of the intensity of the light satisfies the predetermined condition. This configuration makes it possible to reduce the influence of bubbles B that may be contained in the working medium 20 and to improve the accuracy of detecting abnormalities in the refrigeration cycle circuit 2B.

### [1.6 EMBODIMENT 6]

### [1.6.1 CONFIGURATIONS]

In a refrigeration cycle (refrigeration cycle circuit), minor discharges may occur within the compressor. Such discharges can result in the generation of soot in the working medium. Furthermore, depending on the type of working medium, discharges in the compressor may lead to the formation of hydrogen fluoride. The increase in insoluble components such as soot or hydrogen fluoride can be a cause of abnormality in the refrigeration cycle circuit.

The present embodiment provides a refrigeration cycle device, a light detection method, a control method, and a program which make it possible to enable earlier detection of an abnormality in a refrigeration cycle circuit.

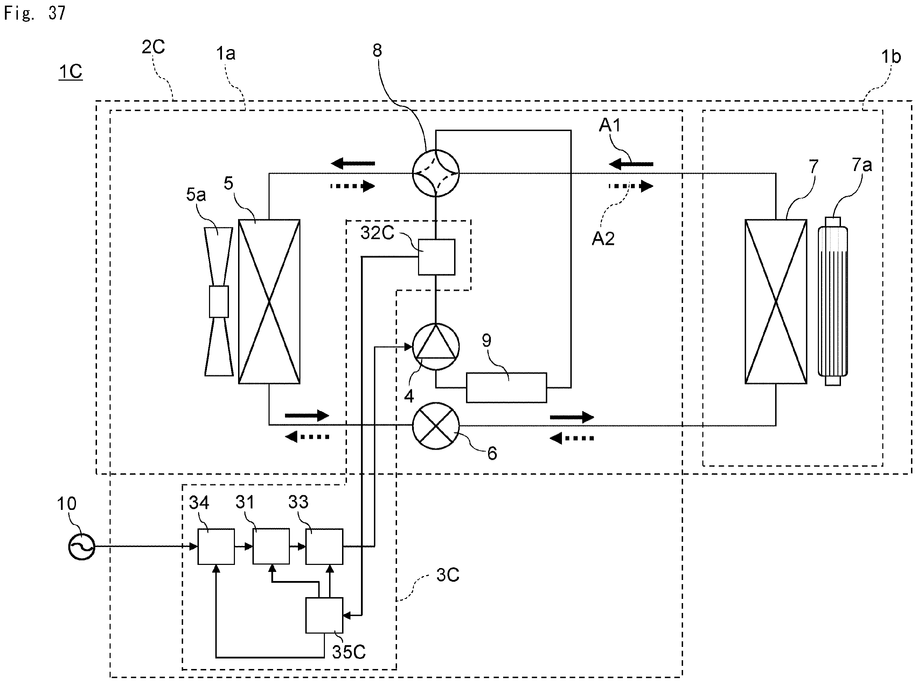

Fig. 37 is a block diagram of a refrigeration cycle device 1C according to Embodiment 6. The refrigeration cycle device 1C constitutes an air conditioner enabling a cooling operation and a heating operation, for example. The refrigeration cycle device 1C includes a refrigeration cycle circuit 2C and a control device 3C.

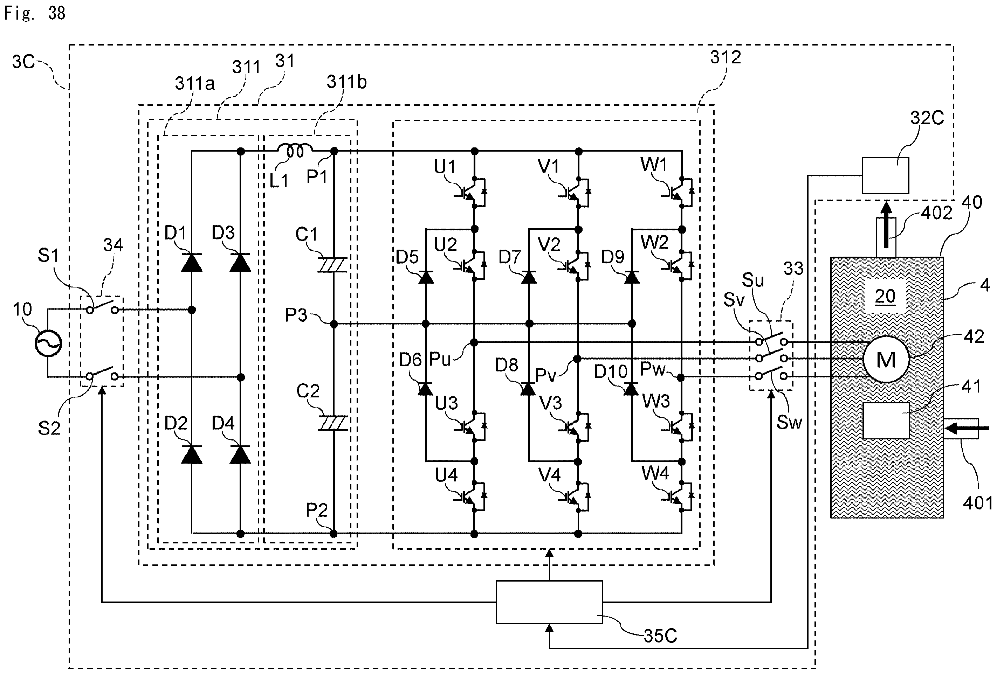

The refrigeration cycle circuit 2C includes the compressor 4, the first heat exchanger 5, the expansion valve 6, the second heat exchanger 7, the four-way valve 8, and the accumulator 9. The refrigeration cycle circuit 2C further includes a phosphor 11C (see Fig. 38).

The control device 3C is configured to control the refrigeration cycle circuit 2C. In particular, the control device 3C is configured to control the compressor 4 and the expansion valve 6 of the refrigeration cycle circuit 2C. Fig. 38 is a schematic view of the compressor 4 and the control device 3C.

The control device 3C includes the drive circuit 31, a light detection circuit 32C, the first protective device 33, the second protective device 34, and a control circuit 35C.

The light detection circuit 32C is used for detecting an abnormality in the refrigeration cycle circuit 2C allowing circulation of the working medium 20. In particular, the light detection circuit 32C is provided in order to detect an abnormality of the refrigeration cycle circuit 2C by utilizing a fluorescent dye. When the working medium 20 has relatively low stability, for example, disproportionation reactions of compounds contained in the working medium 20 may proceed due to radical generation, thereby causing the compounds to change into different compounds. Factors of the disproportionation reaction of the working medium 20 are considered to be heat and radicals. For example, when radicals are generated under high-temperature and high-pressure conditions, it is believed that the disproportionation reaction of the working medium 20 proceeds. Radicals may be generated, for example, by discharge phenomena that occur when some abnormality arises in the compressor 4 or the drive circuit 31. When a discharge phenomenon occurs, products generated by chemical reactions of the working medium 20 may circulate within the refrigeration cycle circuit 2C together with the working medium 20. For example, when the working medium contains ethylene-based fluoroolefins, hydrogen fluoride (HF) is one example of a product (hereinafter also referred to as product (A)) generated by a chemical reaction of the working medium 20. Such a product (A) is an example of a product generated from the working medium 20 by a disproportionation reaction. When discharge phenomena are repeatedly generated, the amount of the product (A) increases. The increase of the product (A) can also become a cause of an abnormality in the refrigeration cycle circuit 2C. The present inventors have found that a fluorescent dye can be used for quantitative evaluation of the product (A). That is, if the fluorescent dye has a property of reacting with the product (A) such that at least one of the fluorescence wavelength or the quantum yield changes, the increase of the product (A) can be observed as a change in the intensity of light having a wavelength corresponding to the fluorescence wavelength of the fluorescent dye. By focusing on the intensity of light having a wavelength corresponding to the fluorescence wavelength of the fluorescent dye, the product (A) can be quantitatively evaluated. Accordingly, cumulative minor damage to the refrigeration cycle circuit 2C can be determined, and early detection of an abnormality in the refrigeration cycle circuit 2C becomes possible.

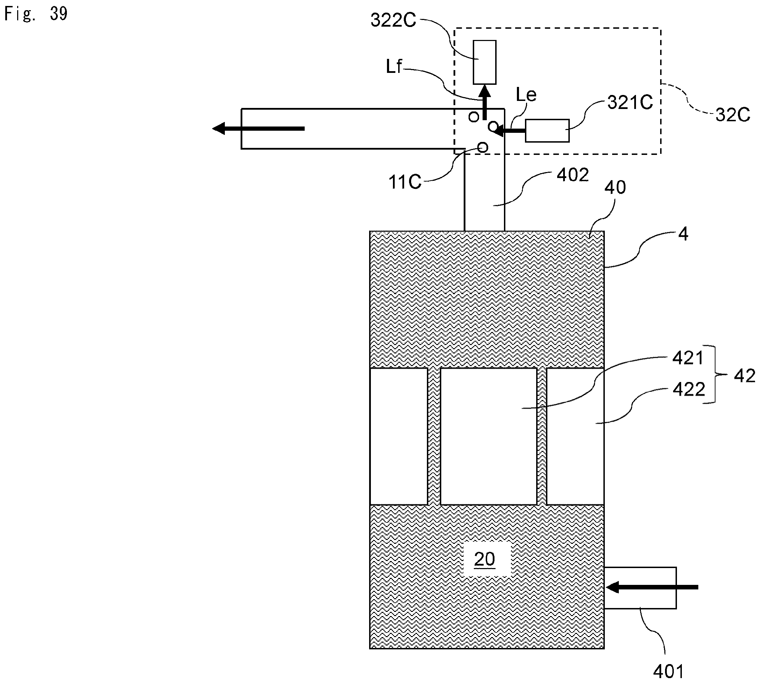

Fig. 39 is a schematic diagram of the light detection circuit 32C. In the present embodiment, the light detection circuit 32C enables evaluation of an abnormality in the refrigeration cycle circuit 2C by means of the phosphor 11C.

The phosphor 11C contains a fluorescent dye and is located inside the refrigeration cycle circuit 2C to be contactable with the working medium 20. In the present embodiment, the phosphor 11C is a refrigerating machine oil in which the fluorescent dye is dissolved. That is, the phosphor 11C is constituted by dissolving the fluorescent dye into the refrigerating machine oil of the compressor 4. The phosphor 11C circulates through the refrigeration cycle circuit 2C together with the working medium 20. Therefore, the probability that the fluorescent dye of the phosphor 11C comes into contact with and reacts with the product (A) can be increased.

The fluorescent dye has a property of reacting with the product (A) generated by chemical reactions of the working medium 20, such that at least one of a fluorescence wavelength or a quantum yield changes. Therefore, depending on the type of fluorescent dye, the reaction between the fluorescent dye and the product (A) may cause either an increase or a decrease in the quantity of light at the fluorescence wavelength.

Examples of the fluorescent dye are described below. The following examples of the fluorescent dye are particularly preferable in cases where the product (A) is a substance (for example, hydrogen fluoride) that generates fluoride ions.

The fluorescent dye may be a triarylfluorosilane compound. The triarylfluorosilane compound is, for example, represented by SiFR¹R²R³ (see Formula (1)). R¹, R², and R³ are each anthracene or a derivative thereof, or R¹ and R² are anthracene or derivatives thereof and R³ is benzene or a derivative thereof.

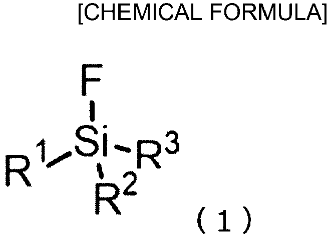

The fluorescent dye may be a compound having a structure in which a donor group and an acceptor group are bonded. The donor group has a donor property in an excited state. The donor group is a chromophore. The acceptor group has a high acceptor property in a free state and has a low acceptor property in a state in which it is bound to the product (A) or ions derived from the product (A). The acceptor group is an acceptor.

The acceptor group may be selected from the group consisting of: a compound (hereinafter referred to as compound (B)) having a structure in which two or more amino groups are bonded to each other via one or two methylene groups; a compound (hereinafter referred to as compound (C)) having a structure in which two or more pyrrole groups or indole groups are bonded to each other via two methylene groups; benzamide; bis(methylidene)hydrazine; and calixarene.

Examples of compound (B) include urea and derivatives thereof, thiourea and derivatives thereof, and polyamine macrocycles.

Examples of compound (C) include 1,2-ethandiyl-bis(pyrrole) and 1,2-ethandiyl-bis(indole).

The donor group may be selected from the group consisting of anthracene, naphthalimide, pyrene, BODIPY, fluorescein, rhodamine, resorufin, coumarin, and cyanine.

For example, some of the above-mentioned fluorescent dyes undergo a change in a fluorescence wavelength as a result of reaction with the product (A). As one example, in the case of a triarylfluorosilane compound, the fluorescence wavelength for an excitation wavelength of 366 nm changes from 416 nm to 396 nm. Accordingly, the presence of the product (A) can be detected by a decrease in the intensity of the light at the fluorescence wavelength of 416 nm or an increase in the intensity of the light at the fluorescence wavelength of 396 nm.

As shown in Fig. 39, the light detection circuit 32C includes a light source device 321C and a light detection device 322C.

The light source device 321C is configured to emit excitation light Le with a wavelength corresponding to an excitation wavelength of the fluorescent dye to the inside of the refrigeration cycle circuit 2C. In the present embodiment, the excitation light Le is directional light (for example, laser light). A wavelength range of the excitation light Le only needs to include the excitation wavelength of the fluorescent dye. However, it is preferable that the wavelength range of the excitation light Le does not include the fluorescence wavelength of the fluorescent dye. The light source device 321C is, for example, a laser diode.

The light detection device 322C is configured to receive light Lf with a wavelength corresponding to the fluorescence wavelength of the fluorescent dye to output an intensity of the received light Lf. In the present embodiment, the light detection device 322C outputs a light detection signal indicating an intensity of the light Lf to the control circuit 35C. A wavelength range in which the light detection device 322C is sensitive only needs to include the fluorescence wavelength of the fluorescent dye. However, when the fluorescence wavelength of the fluorescent dye changes, it is preferable that the wavelength range in which the light detection device 322C is sensitive includes only one of the fluorescence wavelength before the change and the fluorescence wavelength after the change. Furthermore, it is preferable that the wavelength range in which the light detection device 322C is sensitive does not include the excitation wavelength of the fluorescent dye. The light detection device 322C includes, for example, a photodiode and an optical system (such as a lens).

The arrangement of the light source device 321C and the light detection device 322C will be described below.

The light source device 321C emits the excitation light Le to a portion between the discharge pipe 402 of the compressor 4 and the condenser (the first heat exchanger 5 during the cooling operation and the second heat exchanger 7 during the heating operation), of the refrigeration cycle circuit 2C. Particularly, in the present embodiment, the light source device 321C emits the excitation light Le to a portion between the discharge pipe 402 of the compressor 4 and the four-way valve 8. The light source device 321C emits the excitation light Le to a portion which is closer to the discharge pipe 402 of the compressor 4 than the four-way valve 8. In this way, the possibility of the excitation light Le striking the fluorescent element is increased. This configuration enables improvement of the accuracy of abnormality detection in the refrigeration cycle circuit 2C.

The light detection device 322C receives the light Lf from the portion between the discharge pipe 402 of the compressor 4 and the condenser (the first heat exchanger 5 during the cooling operation and the second heat exchanger 7 during the heating operation), of the refrigeration cycle circuit 2C. Particularly, in the present embodiment, the light detection device 322C receives the light Lf from the portion between the discharge pipe 402 of the compressor 4 and the four-way valve 8. The light detection device 322C receives the light Lf from the portion closer to the discharge pipe 402 of the compressor 4 than the four-way valve 8. In this way, the intensity of the light Lf received by the light detection device 322C can be increased. This configuration enables improvement of the accuracy of abnormality detection in the refrigeration cycle circuit 2C.

The control circuit 35C may be implemented by a computer system including at least one processor (microprocessor) and at least one memory. The computer system may also include one or more A/D converters. For example, one or more A/D converters may be used to convert the detection voltage from the light detection circuit 32C from analog format to digital format. The control circuit 35C, similarly to the control circuit 35, controls the drive circuit 31, the first protective device 33, and the second protective device 34.

The control circuit 35C is configured to determine whether an abnormality has occurred in the refrigeration cycle circuit 2C based on the light detection signal from the light detection circuit 32C, and if it is determined that an abnormality has occurred, interrupts or limits the operation of the refrigeration cycle circuit 2C.

In the present embodiment, the control circuit 35C is configured to interrupt or limit the operation of the refrigeration cycle circuit 2C when the intensity of the light Lf indicated by the light detection signal from the light detection circuit 32C satisfies a predetermined condition.

The predetermined condition is set according to the type of the fluorescent dye.

Consider a case where the reaction between the fluorescent dye and the product (A) causes an increase in the amount of the light Lf at the fluorescence wavelength of the fluorescent dye. For example, when the fluorescence wavelength of the fluorescent dye changes due to the reaction, such a case is when the wavelength of the light Lf detected by the light detection device 322C corresponds to the fluorescence wavelength after the change. In this case, the predetermined condition may be that a ratio of an index value of the intensity of the light Lf at a second time point after predetermined time from a first time point, to an index value of the intensity of the light Lf at the first time point is equal to or greater than a predetermined ratio. The index value of the intensity of the light Lf is a value derived directly or indirectly from the intensity of the light Lf, and may be the intensity of the light Lf itself, or a representative value of the intensity of the light Lf within a certain period. The representative value may be selected from an average value, mode value, maximum value, minimum value, median value, etc. The index value of the intensity of the light Lf is also an index value of the amount of the product generated from the working medium 20 by the disproportionation reaction. The predetermined ratio may be determined by evaluation through testing or simulation based on an amount of the product (A) at which there is a high possibility of abnormality occurring in the refrigeration cycle circuit 2C. For example, the predetermined ratio may be 110%. That is, the predetermined condition may be that the ratio of the index value of the intensity of the light Lf at the second time point after predetermined time from the first time point, to the index value of the intensity of the light Lf at the first time point is equal to or larger than 110%. The first time point may be, for example, the start of the operation of the refrigeration cycle circuit 2C, and the second time point may be at any time during the operation of the refrigeration cycle circuit 2C. In this case, the predetermined condition corresponds to an amount of the product generated from the working medium 20 by the disproportionation reaction being equal to or greater than a predetermined amount. The first time point may be any time during the operation of the refrigeration cycle circuit 2C, and the second time point may be a time point after predetermined period from the first time point. In this case, the predetermined condition corresponds to an increase in the amount of the product generated from the working medium 20 by the disproportionation reaction within the predetermined period being equal to or greater than a predetermined amount.

Consider a case where the reaction between the fluorescent dye and the product (A) causes a decrease in the amount of the light Lf at the fluorescence wavelength of the fluorescent dye. For example, when the fluorescence wavelength of the fluorescent dye changes due to the reaction, such a case is when the wavelength of light Lf detected by the light detection device 322C corresponds to the fluorescence wavelength before the change. In this case, a predetermined condition may be that the ratio of the index value of the intensity of the light Lf at the second time point after predetermined time from the first time point, to the index value of the intensity of the light Lf at the first time point is equal to or smaller than a predetermined ratio. The predetermined ratio may be determined by evaluation through testing or simulation based on an amount of the product (A) at which there is a high possibility of abnormality occurring in the refrigeration cycle circuit 2C. For example, the predetermined ratio may be 90%. That is, the predetermined condition may be that the ratio of the index value of the intensity of the light Lf at the second time point after predetermined time from the first time point, to the index value of the intensity of the light Lf at the first time point is not greater than 90%. The first time point may be, for example, the start of the operation of the refrigeration cycle circuit 2C, and the second time point may be at any time during the operation of the refrigeration cycle circuit 2C.

In the control device 3C described above, the light detection circuit 32C receives the light Lf from the inside of the refrigeration cycle circuit 2C to output the intensity of the received light Lf as the second state. When the control circuit 35C detects the sign of the disproportionation reaction based on the second state regarding the working medium 20, it interrupts or limits the operation of the refrigeration cycle circuit 2C. Here, the control circuit 35C determines the index value of the amount of the product generated from the working medium 20 by the disproportionation reaction based on the intensity of the light Lf. The sign of the disproportionation reaction is that the amount of the product or the increase in the amount of the product within a predetermined period is equal to or greater than a predetermined amount.

The present embodiment detects a change in the light Lf from the fluorescent dye which may occur when a discharge phenomenon occurs, by use of the fluorescent dye. Therefore, when a discharge phenomenon does not occur, the light Lf does not change. This reduces the possibility that an abnormality in the refrigeration cycle circuit 2C is erroneously detected when a discharge phenomenon does not occur.

The interrupting or limiting the operation of the refrigeration cycle circuit 2C may include interrupting the operation of the drive circuit 31, increasing the rotational speed of a fan of the condenser, decreasing the rotational speed of a fan of the evaporator, increasing an opening degree of the expansion valve, opening the expansion valve of at least one indoor unit 1b among multiple indoor units 1b which are not in operation (if the refrigeration cycle device 1 has multiple indoor units 1b), or, in the heating operation, switching to the cooling operation with the four-way valve 8 and opening the expansion valve 6.

The control circuit 35C is configured to interrupt or limit the operation of the refrigeration cycle circuit 2C in different ways according to the number of times that the intensity of the light Lf satisfies the predetermined condition. In particular, the control circuit 35C performs a higher-degree process for interrupting or limiting the operation of the refrigeration cycle circuit 2C as the number of times that the intensity of the light Lf satisfies the predetermined condition increases. This enables early detection of an abnormality in the refrigeration cycle circuit 2C. Therefore, the safety of using the working medium 20 can be improved.

The control circuit 35C is configured to interrupt or limit the operation of the refrigeration cycle circuit 2C in different ways according to the time difference between the first time at which the intensity of the light Lf first satisfies the predetermined condition and the second time at which the intensity of the light Lf next satisfies the predetermined condition. In particular, the control circuit 35C performs a higher-degree process for interrupting or limiting the operation of the refrigeration cycle circuit 2C as the time difference becomes shorter. Thus, the control device 3C enables early detection of an abnormality in the refrigeration cycle circuit 2C. Therefore, the safety of using the working medium 20 can be improved.

The process for interrupting or limiting the operation of the refrigeration cycle circuit 2C may include, for example, a first process to a third process. The first process is a process of interrupting outputting the AC output power and after a lapse of a waiting period, restarting outputting the AC output power. The second process is a process of interrupting outputting the AC output power and after a lapse of a waiting period, restarting the operation with a reduced setting value of the amplitude of the AC output power. The third process is a process of interrupting outputting the AC output power and interrupting inputting the input power. Among the first to third processes, the degree of interrupting or limiting the operation of the refrigeration cycle circuit 2C is higher in the order of the third, the second, and the first processes. Even in the first or second processes, the longer the waiting period, the higher the degree of interrupting or limiting the operation of the refrigeration cycle circuit 2C.

The operation of the control circuit 35C may be similar to the operation of the control circuit 35B described with reference to Fig. 31 to Fig. 36. More specifically, the operation of the control circuit 35C may be an operation in which the part concerning the light detection circuit 32B in the description of the operation of the control circuit 35B with reference to Fig. 31 to Fig. 36 is replaced with the part concerning the light detection circuit 32C.

### [1.6.2 ADVANTAGEOUS EFFECTS]

The aforementioned control device 3C is a control device for controlling the refrigeration cycle circuit 2C allowing circulation of the working medium 20 containing the refrigerant component capable of undergoing the disproportionation reaction, and includes: the drive circuit 31 configured to drive the compressor 4 of the refrigeration cycle circuit 2C; and the control circuit 35C configured to interrupt or limit the operation of the refrigeration cycle circuit 2C in response to detecting the sign of the disproportionation reaction based on at least one of the first state regarding the drive circuit 31 for driving the compressor 4 of the refrigeration cycle circuit 2C or the second state regarding the working medium 20. This configuration enables improvement of accuracy of detection of the disproportionation reaction of the working medium 20 and improvement of suppression of the disproportionation reaction.

In the control device 3C, the refrigeration cycle circuit 2C includes the phosphor 11C containing the fluorescent dye. The control device 3C includes the light detection device 322C configured to detect light Lf with a wavelength corresponding to a fluorescence wavelength of the fluorescent dye to output the intensity of the light Lf detected, as the second state. The control circuit 35C is configured to determine the index value of the amount of the product produced from the working medium 20 by the disproportionation reaction, based on the intensity of the light Lf output from the light detection device 322C. The sign of the disproportionation reaction is an amount of the product or an increase in the amount of the product during a predetermined period is equal to or larger than a predetermined amount. This configuration enables improvement of accuracy of detection of the disproportionation reaction of the working medium 20 and improvement of suppression of the disproportionation reaction.

The aforementioned control device 3C seems to perform the following control method. The control method includes interrupting or limiting the operation of the refrigeration cycle circuit 2C in response to detecting the sign of the disproportionation reaction based on at least one of the first state regarding the drive circuit 31 for driving the compressor 4 of the refrigeration cycle circuit 2C or the second state regarding the working medium 20. This configuration enables improvement of accuracy of detection of the disproportionation reaction of the working medium 20 and improvement of suppression of the disproportionation reaction.

The control method includes determining the index value of the amount of the product produced from the working medium 20 by the disproportionation reaction, based on the second state. The sign of the disproportionation reaction is that the amount of the product or an increase in the amount of the product during a predetermined period is equal to or larger than a predetermined amount. This configuration enables improvement of accuracy of detection of the disproportionation reaction of the working medium 20 and improvement of suppression of the disproportionation reaction.

The control method performed by the control device 3C can be realized by a computer system executing a program. This program is a program executed by the computer system included in the control device 3C for controlling the refrigeration cycle circuit 2C allowing circulation of the working medium 20 containing the refrigerant component capable of undergoing the disproportionation reaction and enables the computer system to perform a process of interrupting or limiting the operation of the refrigeration cycle circuit 2C in response to detecting the sign of the disproportionation reaction based on at least one of the first state regarding the drive circuit 31 for driving the compressor 4 of the refrigeration cycle circuit 2C or the second state regarding the working medium 20. This configuration enables improvement of accuracy of detection of the disproportionation reaction of the working medium 20 and improvement of suppression of the disproportionation reaction.

The aforementioned refrigeration cycle device 1C includes the refrigeration cycle circuit 2C allowing circulation of the working medium 20 and the phosphor 11C located inside the refrigeration cycle circuit 2C to be contactable with the working medium 20. The phosphor 11C contains a fluorescent dye with a property of reacting with the product (A) produced by a chemical reaction of the working medium 20 to cause a change in at least one of a fluorescence wavelength or a quantum yield. This configuration enables earlier detection of abnormality in the refrigeration cycle circuit 2C.

In the refrigeration cycle device 1C, the light source device 321C is configured to emit the excitation light Le to a portion between the discharge pipe 402 of the compressor 4 and the condenser (the first heat exchanger 5, the second heat exchanger 7), of the refrigeration cycle circuit. This configuration enables improvement of the detection accuracy of abnormality in the refrigeration cycle circuit 2C.

In the refrigeration cycle device 1C, the fluorescent dye includes a triarylfluorosilane compound. This configuration enables improvement of the detection accuracy of abnormality in the refrigeration cycle circuit 2C.

In the refrigeration cycle device 1C, the fluorescent dye is a compound having a structure in which an acceptor group and a donor group are combined. The acceptor group is selected from the group consisting of: a compound having a structure in which two or more amino groups are connected via one or two methylene groups, a compound having a structure in which two or more pyrrole groups or indole groups are connected via two methylene groups, benzamide, bis(methylidene)hydrazine, and calixarene. The donor group is selected from a group consisting of anthracene, naphthalimide, pyrene, BODIPY, fluorescein, rhodamine, resorufin, coumarin, and cyanine. This configuration enables improvement of the detection accuracy of abnormality in the refrigeration cycle circuit 2C.

In the refrigeration cycle device 1C, the phosphor 11C is a refrigerating machine oil in which the fluorescent dye is dissolved. This configuration can increase the possibility that the fluorescent dye in the phosphor 11C comes into contact with and reacts with the product (A).

The refrigeration cycle device 1C includes: the light source device 321C configured to emit the excitation light Le with a wavelength corresponding to an excitation wavelength of the fluorescent dye, to the inside of the refrigeration cycle circuit 2C; and the light detection device 322C configured to detect light Lf with a wavelength corresponding to the fluorescence wavelength of the fluorescent dye to output an intensity of detected light Lf. This configuration enables earlier detection of abnormality in the refrigeration cycle circuit 2C.

The refrigeration cycle device 1C includes the control device 35C configured to control the operation of the refrigeration cycle circuit 2C The control circuit 35C is configured to interrupt or limit the operation of the refrigeration cycle circuit 2C when the intensity of the light Lf output from the light detection device 322C satisfies a predetermined condition. This configuration enables earlier detection of abnormality in the refrigeration cycle circuit 2C. Furthermore, this configuration makes it possible to suppress disproportionation reactions of the working medium 20.

In the refrigeration cycle device 1C, the reaction between the fluorescent dye and the product (A) causes an increase in amount of light with the fluorescence wavelength. The predetermined condition is that the ratio of the index value of the intensity of the light Lf at the second time point after predetermined time from the first time point, to the index value of the intensity of the light Lf at the first time point is 110% or more. This configuration enables earlier detection of abnormality in the refrigeration cycle circuit 2C.

In the refrigeration cycle device 1C, the reaction between the fluorescent dye and the product (A) causes an increase in amount of light with the fluorescence wavelength. The predetermined condition is that the ratio of the index value of the intensity of the light Lf at the second time point after predetermined time from the first time point, to the index value of the intensity of the light Lf at the first time point is 110% or more. This configuration enables earlier detection of abnormality in the refrigeration cycle circuit 2C.

The aforementioned refrigeration cycle device 1C performs the light detection method for the refrigeration cycle circuit 2C allowing circulation of the working medium 20. This light detection method includes: emitting, to the phosphor 11C which contains the fluorescent dye and is located inside the refrigeration cycle circuit 2C to be contactable with the working medium 20, the excitation light Le with a wavelength corresponding to the excitation wavelength of the fluorescent dye; and detecting light Lf with a wavelength corresponding to the fluorescence wavelength of the fluorescent dye to output the intensity of the detected light. This configuration enables earlier detection of abnormality in the refrigeration cycle circuit 2C.

The aforementioned control device 3C seems to perform the following control method. The control method is a control method performed by the control device 3C for controlling the refrigeration cycle circuit 2C which allows circulation of the working medium 20 and inside which the phosphor 11C containing the fluorescent dye exists. The control device 3C includes the light detection device 322. The control method includes: by the light detection device 322C, detecting light Lf with a wavelength corresponding to a fluorescence wavelength of the fluorescent dye to output the intensity of light detected; and interrupting or limiting the operation of the refrigeration cycle circuit 2C when the intensity of the light Lf output from the light detection device 322C satisfies a predetermined condition. This configuration enables earlier detection of abnormality in the refrigeration cycle circuit 2C. Furthermore, this configuration makes it possible to suppress disproportionation reactions of the working medium 20.

The control method performed by the control device 3C can be realized by a computer system executing a program. This program is a program executed by the computer system included in the control device 3C for controlling the refrigeration cycle circuit 2C which allows circulation of the working medium 20 and inside which the phosphor 11C containing the fluorescent dye exists. The control device 3C includes the light detection device 322. The program includes: by the light detection device 322C, detecting light Lf with a wavelength corresponding to a fluorescence wavelength of the fluorescent dye to output the intensity of light detected; and interrupting or limiting the operation of the refrigeration cycle circuit 2C when the intensity of the light Lf output from the light detection device 322C satisfies a predetermined condition. This configuration enables earlier detection of abnormality in the refrigeration cycle circuit 2C. Furthermore, this configuration makes it possible to suppress disproportionation reactions of the working medium 20.

### [1.7 EMBODIMENT 7]

### [1.7.1 CONFIGURATIONS]

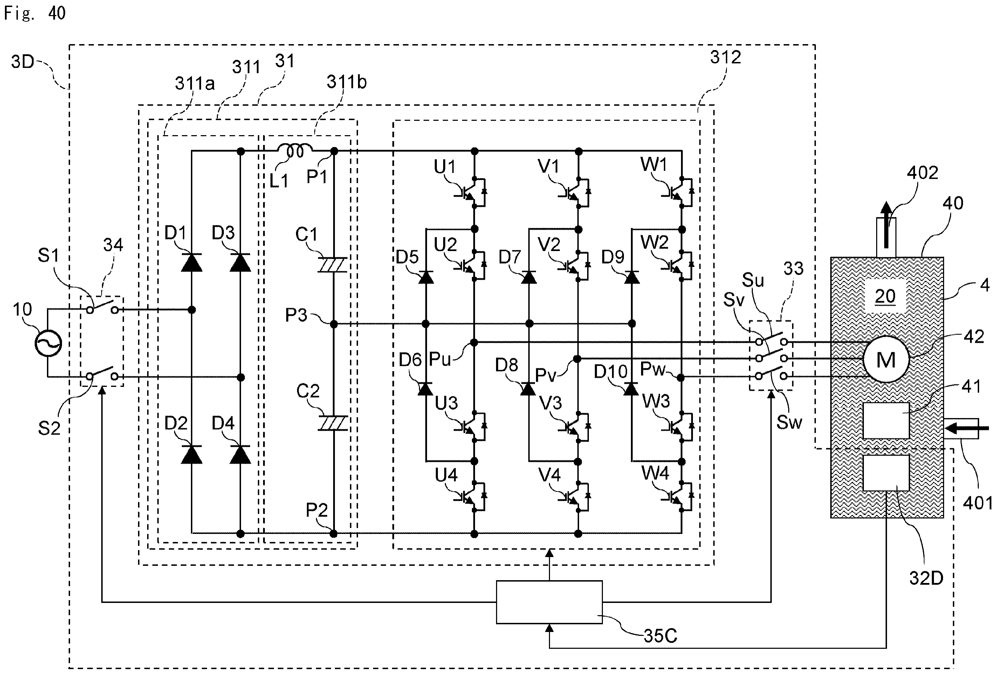

Fig. 40 is a schematic view of the compressor 4 and a control device 3D of a refrigeration cycle device according to Embodiment 7. The refrigeration cycle device according to Embodiment 7 includes the same configuration as the refrigeration cycle device 1C according to Embodiment 6, and therefore, with respect to the same configuration, Fig. 37 and the reference numerals will be employed as appropriate.

The control device 3D includes the drive circuit 31, a light detection circuit 32D, the first protective device 33, the second protective device 34, and the control circuit 35.

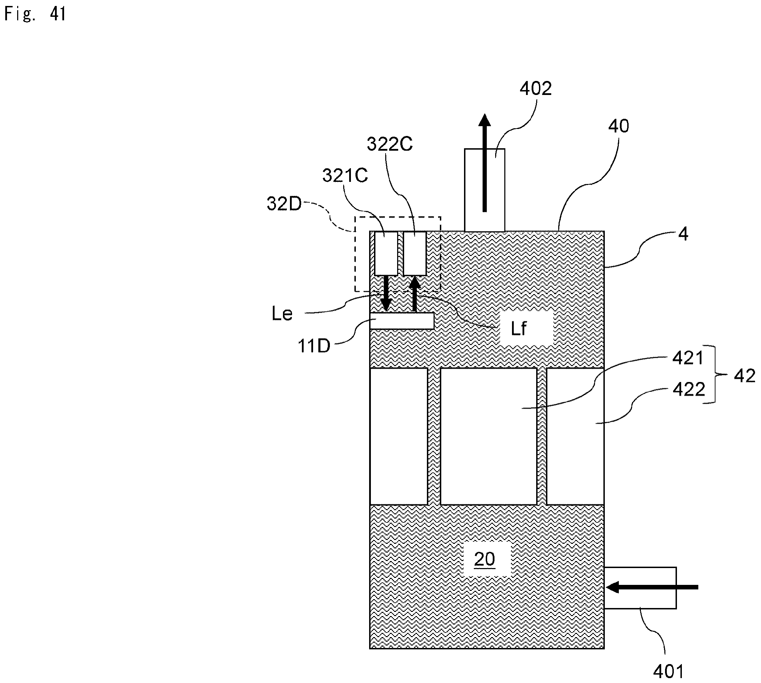

Fig. 37Fig. 41 is a schematic view of the light detection circuit 32D. In the present embodiment, the light detection circuit 32D enables evaluation of an abnormality in the refrigeration cycle circuit 2C by means of the phosphor 11D.

The phosphor 11D contains a fluorescent dye and is located inside the refrigeration cycle circuit 2C to be contactable with the working medium 20. In the present embodiment, the phosphor 11D is a support carrying a fluorescent dye. The support is, for example, a porous material. The porous material may be either inorganic or organic porous material. Examples of inorganic porous material include mesoporous silica. Examples of organic porous material include synthetic resin membranes or paper. Since the porous material can secure a larger surface area, it is possible to increase the likelihood that the fluorescent dye comes into contact with the working medium 20. The phosphor 11D is fixed at a predetermined location of the refrigeration cycle circuit 2C. In the present embodiment, the phosphor 11D is located in the sealed container 40 of the compressor 4. For example, the phosphor 11D is located in a region between the electric motor 42 and the discharge pipe 402. In the phosphor 11D, unlike the phosphor 11C, the fluorescent dye is present at a predetermined position without being dispersed throughout the refrigeration cycle circuit 2C, so although the possibility of contact with the working medium 20 decreases, the fluorescent dye can be reliably irradiated with the excitation light Le.

The light detection circuit 32D includes the light source device 321C and the light detection device 322C. The light source device 321C is configured to emit the excitation light Le to the inside of the compressor 4 of the refrigeration cycle circuit 2C. As a result, the excitation light Le is emitted to the sealed container 40 of the compressor 4, and the excitation light Le strikes the phosphor 11D in the sealed container 40. In the present embodiment, the light source device 321C is located in the sealed container 40 of the compressor 4. For example, the light source device 321C is located in a region between the electric motor 42 and the discharge pipe 402. In this way, the possibility that the fluorescent element is irradiated with the excitation light Le can be increased. This configuration enables improvement of the detection accuracy of abnormality in the refrigeration cycle circuit 2C. The light detection device 322C is configured to receive the light Lf from the inside of the compressor 4 of the refrigeration cycle circuit 2C. In the present embodiment, the light detection device 322C is located in the sealed container 40 of the compressor 4. For example, the light source device 321C is located in a region between the electric motor 42 and the discharge pipe 402. In this way, the intensity of the light Lf received by the light detection device 322 can be increased. This configuration enables improvement of the detection accuracy of abnormality in the refrigeration cycle circuit 2C.

### [1.2.2 ADVANTAGEOUS EFFECTS]

In the aforementioned refrigeration cycle device 1C, the light source device 321C is configured to emit the excitation light Le to the inside of the compressor 4 of the refrigeration cycle circuit 2C. This configuration enables improvement of the detection accuracy of abnormality in the refrigeration cycle circuit 2C.

In the refrigeration cycle device 1C, the phosphor 11D is a support carrying the fluorescent dye. This configuration enables the fluorescent dye to be present at a predetermined position without being dispersed throughout the refrigeration cycle circuit 2C and thus to be reliably irradiated with the excitation light Le.

In the refrigeration cycle device 1C, the support includes the porous material. This configuration can increase the likelihood that the fluorescent dye comes into contact with the working medium 20.

### [1.8 EMBODIMENT 8]

### [1.8.1 CONFIGURATIONS]

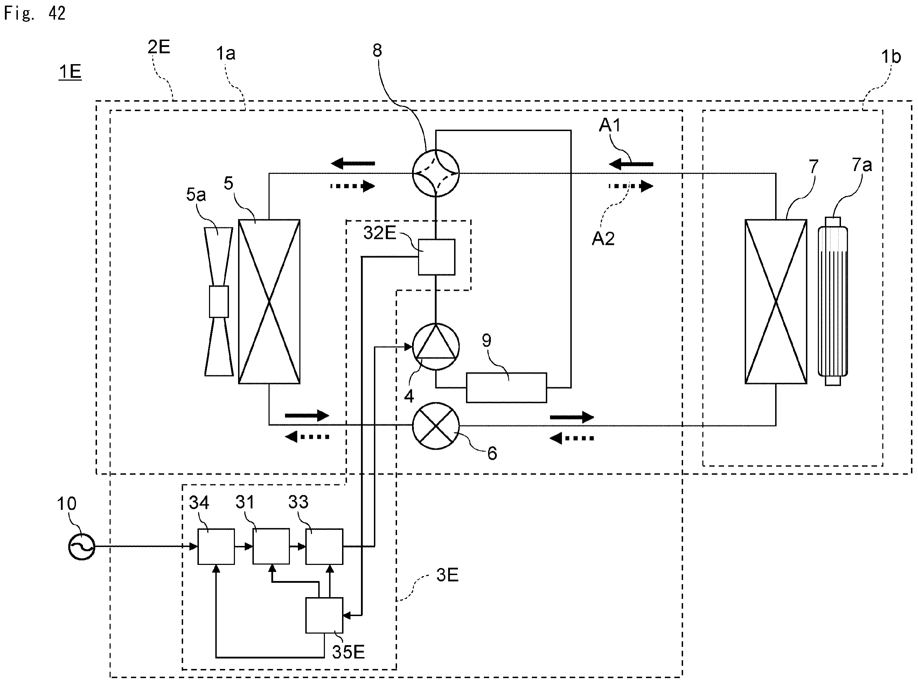

Fig. 42 is a block diagram of a refrigeration cycle device 1E according to Embodiment 8. The refrigeration cycle device 1E constitutes an air conditioner enabling a cooling operation and a heating operation, for example. The refrigeration cycle device 1E includes a refrigeration cycle circuit 2E and a control device 3E.

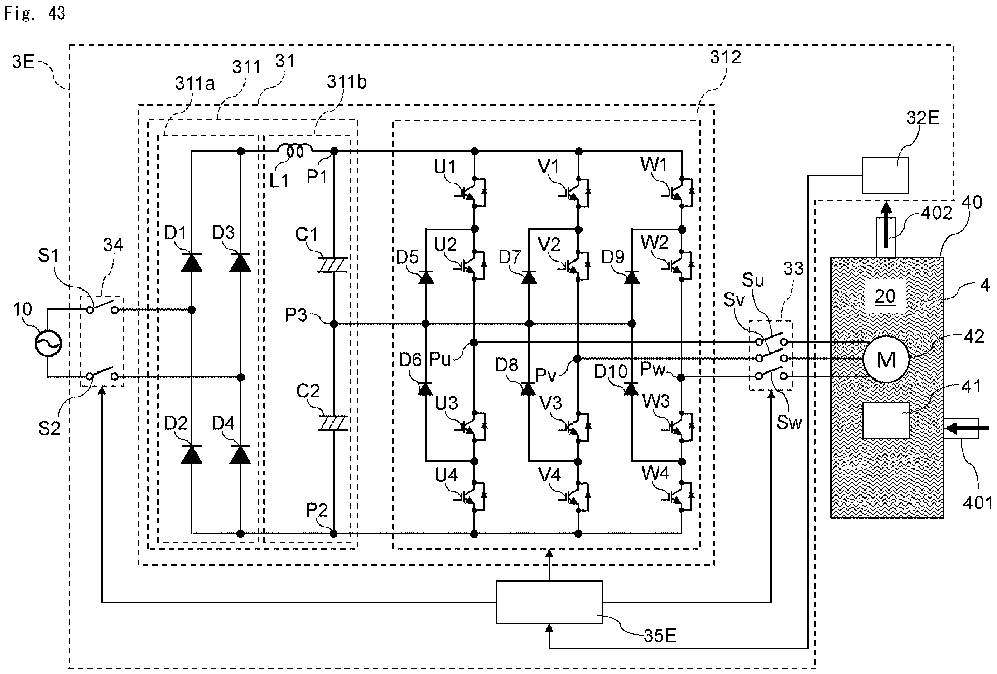

The refrigeration cycle circuit 2E includes the compressor 4, the first heat exchanger 5, the expansion valve 6, the second heat exchanger 7, the four-way valve 8, and the accumulator 9. The refrigeration cycle circuit 2E further includes a light absorber 11E (see Fig. 43).

The control device 3E is configured to control the refrigeration cycle circuit 2E. In particular, the control device 3E is configured to control the compressor 4 and the expansion valve 6 of the refrigeration cycle circuit 2E. Fig. 43 is a schematic view of the compressor 4 and the control device 3E. The refrigeration cycle circuit 2E further includes the light absorber 11E.

The control device 3E includes the drive circuit 31, a light detection circuit 32E, the first protective device 33, the second protective device 34, and the control circuit 35E.

The light detection circuit 32E is used for detecting an abnormality in the refrigeration cycle circuit 2E allowing circulation of the working medium 20. In particular, the light detection circuit 32E is provided to detect an abnormality in the refrigeration cycle circuit 2E by utilizing a dye. When the working medium 20 has relatively low stability, for example, a disproportionation reaction of a compound contained in the working medium 20 may proceed due to radical generation, causing the compound to be transformed into another compound. Factors of the disproportionation reaction of the working medium 20 are believed to be heat and radicals. For example, when radicals are produced under high-temperature and high-pressure conditions, it is considered that the disproportionation reaction of the working medium 20 proceeds. Radicals may be generated, for example, by discharge phenomena that occur when some abnormality arises in the compressor 4 or the drive circuit 31. When a discharge phenomenon occurs, products generated by chemical reactions of the working medium 20 may circulate within the refrigeration cycle circuit 2E together with the working medium 20. For example, when the working medium contains ethylene-based fluoroolefin, a product generated by a chemical reaction of the working medium 20 (hereinafter referred to as product (D)) include tetrafluoroethylene (C₂F₄) or hydrogen fluoride (HF). Such a product (D) is an example of a product generated from the working medium 20 by a disproportionation reaction. When discharge phenomena are repeatedly generated, the amount of the product (D) increases, and an increase in the amount of the product (D) can also become a cause of an abnormality in the refrigeration cycle circuit 2E. The present inventors have found that a dye can be used for the quantitative evaluation of the product (D). That is, if the dye has a property of reacting with the product (D) such that its absorption maximum wavelength changes, the increase of the product (D) can be observed as a change in the intensity of the light having a wavelength band including the absorption wavelength of the dye.

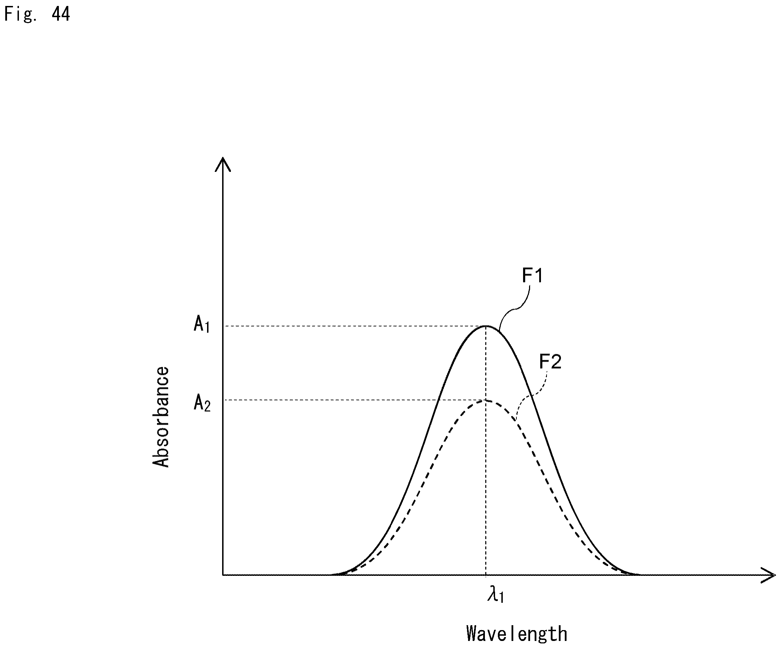

Fig. 44 is a graph of examples of wavelength changes of absorbance of a dye. In Fig. 44, the horizontal axis represents a wavelength and the vertical axis represents absorbance. F1 is a graph showing a wavelength change of absorbance of the dye before reaction with the product (D), and F2 is a graph showing a wavelength change of absorbance of the dye after reaction with the product (D). Fig. 43 shows that the absorbance at the absorption maximum wavelength λ₁ of the dye decreases from A₁ to A₂ due to the reaction with the product (D). Depending on the dye, F1 may show the wavelength change of the absorbance of the dye after reaction with the product (D), and F2 may show the wavelength change of the absorbance of the dye before reaction with product (D). This means that the absorbance at the absorption maximum wavelength λ₁ of the dye increases from A₁ to A₂ due to the reaction with the product (D).

It is desirable that the difference between the absorption maximum wavelength λ₁ of the dye and the absorption maximum wavelength of the dye after reaction with the product (D) be large enough to clearly distinguish between the waveform of the wavelength change of the absorbance of the dye and the waveform of the wavelength change of the absorbance after reaction with the product (D).

By focusing on an intensity of light in a wavelength band including the absorption wavelength of the dye, the product (D) can be quantitatively evaluated. Thus, cumulative minor damage to the refrigeration cycle circuit 2E can be determined, enabling earlier detection of an abnormality in the refrigeration cycle circuit 2E.

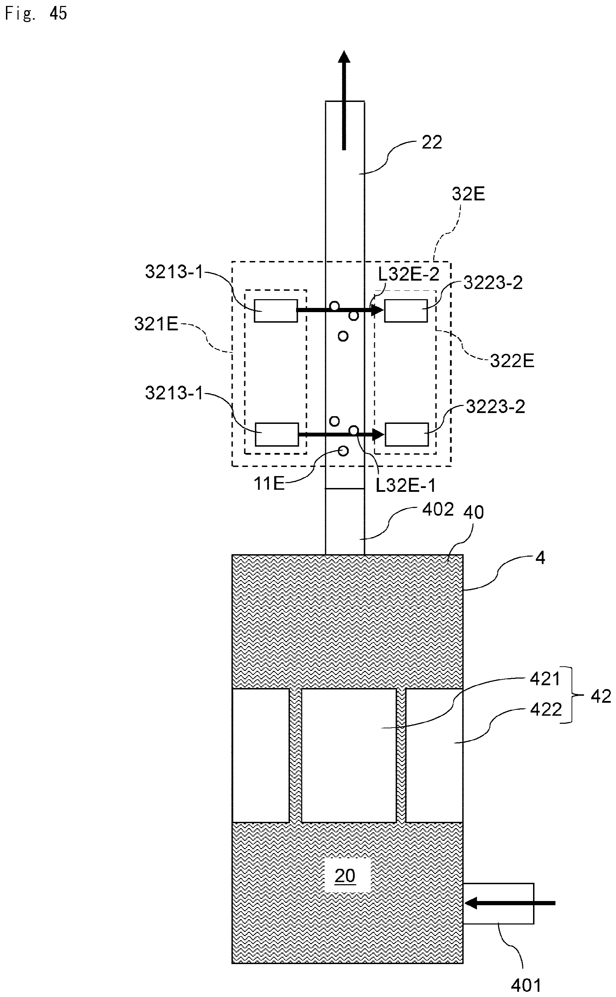

Fig. 45 is a schematic view of the light detection circuit 32E. In the present embodiment, the light detection circuit 32E enables evaluation of abnormality in the refrigeration cycle circuit 2E by means of the light absorber 11E.

The light absorber 11E contains a dye and is located inside the refrigeration cycle circuit 2E to be contactable with the working medium 20. In the present embodiment, the light absorber 11E is a refrigerating machine oil in which the dye is dissolved. That is, the light absorber 11E is constituted by dissolving the dye into the refrigerating machine oil of the compressor 4. The light absorber 11E circulates through the refrigeration cycle circuit 2E together with the working medium 20. Therefore, the probability that the dye of the light absorber 11E comes into contact with and reacts with the product (D) can be increased.

The dye has a property of reacting with the product (D) generated by a chemical reaction of the working medium 20 such that its absorption maximum wavelength changes. Therefore, depending on the type of dye, the reaction between the dye and the product (D) may either increase or decrease the amount of light at the absorption wavelength.

The following is a first example of the dye. The first example of the dye is preferable in cases where the product (D) is tetrafluoroethylene. The first example of the dye may include a nickel complex. The nickel complex can react with tetrafluoroethylene to cause a change in absorbance. Thus, the presence of tetrafluoroethylene as the product (D) can be detected by the change in the intensity of the light at the wavelength where absorbance changes. Examples of the nickel complex include bis(triphenylphosphine)nickel(0) (see Chemical formula (2)); bis(ortho-diphenylphosphanylphenyl)ether nickel(0) (see Chemical formula (3)); 2,2'-bis(ortho-diphenylphosphino)trans-stilbene nickel(0) (see Chemical formula (4)); 2,2'-bis(diphenylphosphino)biphenyl nickel(0) (see Chemical formula (5)); 2,2'-bis(diphenylphosphino)diphenylmethane nickel(0) (see Chemical formula (6)); and 2,2'-bis(diphenylphosphino)diphenylpropane nickel(0) (see Chemical formula (7)).

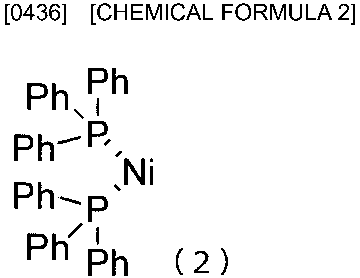

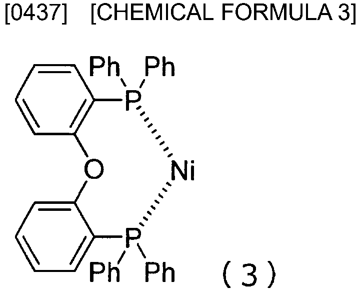

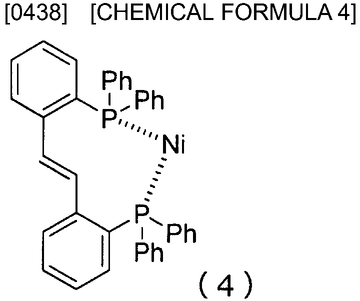

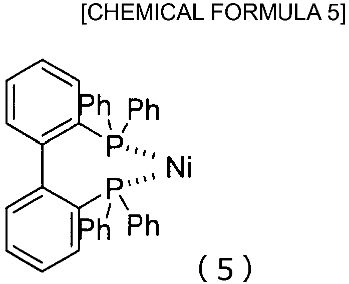

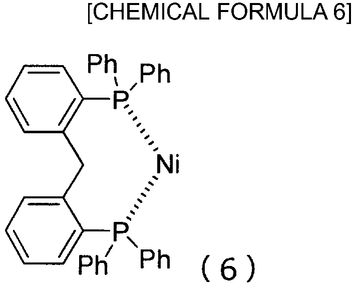

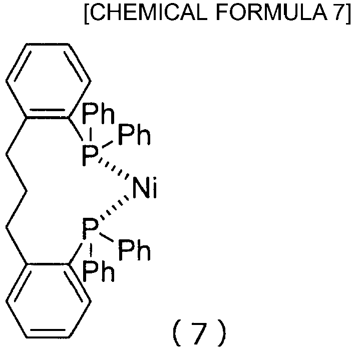

The following is a second example of the dye. The second example of the dye is preferable in cases where the product (D) is hydrogen fluoride. The second example of the dye may include a boron compound having an aromatic substituent. The boron compound having an aromatic substituent can react with hydrogen fluoride and cause a change in absorbance. Thus, the presence of hydrogen fluoride as the product (D) can be detected by monitoring the change in intensity of light at the wavelength where the absorbance changes. An example of a boron compound having an aromatic substituent is diarylnaphthylborane represented by Chemical formula (8). R¹ and R² are each selected from the group consisting of a naphthyl group represented by Chemical formula (9) or a mesityl group represented by Chemical formula (10).

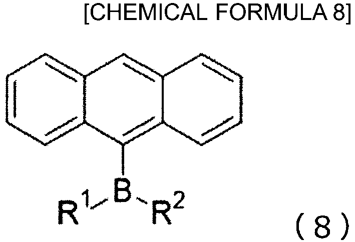

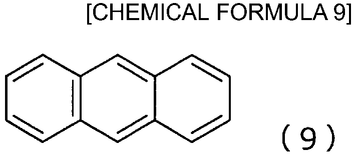

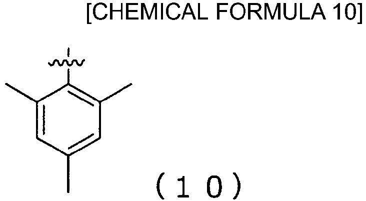

As shown in Fig. 45, the light detection circuit 32E includes a light source device 321E and a light detection device 322E.

The light source device 321E is configured to emit light L32E-1 and L32E-2 with wavelength bands including the absorption wavelength of the dye, to the inside of the refrigeration cycle circuit 2E. In the present embodiment, the light source device 321E includes a first light source 3213-1 and a second light source 3213-2. The first light source 3213-1 and the second light source 3213-2 emit the light L32E-1 and the L32E-2 to the inside of the refrigeration cycle circuit 2E. The wavelength bands of the light L32E-1 and the light L32E-2 differ from each other, meaning that the light L32E-1 and the light L32E-2 correspond to different absorption wavelengths of the dye. Thus, the light source device 321E emits a plurality of rays of light L32E-1 and L32E-2 with different wavelength bands. For example, the light L32E-1 and the light L32E-2 may be directional light (such as laser light). The first light source 3213-1 and the second light source 3213-2 are, for example, laser diodes.

The light detection device 322E is configured to receive the light L32E-1 and L32E-2 from the light source device 321E to output the intensities of the received light L32E-1 and L32E-2. In the present embodiment, the light detection device 322E outputs a light detection signal indicating the intensity of the received light L32E-1 and L32E-2 to the control circuit 35E. The light detection signal output from the light detection device 322E to the control circuit 35E may include one or more light detection signals indicating the intensities of the light L32E-1 and light L32E-2. By using the intensities of the plurality of rays of light L32E-1 and L32E-2 having different wavelength bands in this manner, the influence of colors of substances other than the dye in the light absorber 11E**,** for example, the influence of color tone changes in the refrigerating machine oil, can be reduced.

The light detection device 322E includes a first light detector 3223-1 and a second light detector 3223-2. The first light detector 3223-1 is placed to receive the light L32E-1 emitted from the first light source 3213-1. The second light detector 3223-2 is placed to receive the light L32E-2 emitted from the second light source 3213-2. In the present embodiment, the first light detector 3223-1 is placed to face the first light source 3213-1, and the second light detector 3223-2 is placed to face the second light source 3213-2. Each of the first and second light detectors 3223-1 and 3223-2 includes a light detection element and an optical system. The light detection element includes, for example, a photodiode. The optical system includes, for example, a lens (such as a focusing lens).

The arrangement of the light source device 321E and the light detection device 322E will be described below.

The light source device 321E emits the light L32E-1, L32E-2 to a portion between the discharge pipe 402 of the compressor 4 and the condenser (the first heat exchanger 5 during the cooling operation and the second heat exchanger 7 during the heating operation), of the refrigeration cycle circuit 2E. Particularly, in the present embodiment, the light source device 321E emits the light L32E-1, L32E-2 to a portion 22 between the discharge pipe 402 of the compressor 4 and the four-way valve 8. The light source device 321 emits the light L32E-1, L32E-2 to a portion which is closer to the discharge pipe 402 of the compressor 4 than the four-way valve 8. In this way, the possibility of the light L32E-1, L32E-2 striking the dye is increased. This configuration enables improvement of the accuracy of abnormality detection in the refrigeration cycle circuit 2E.

The light detection device 322E receives the light L32E-1, L32E-2 from the portion between the discharge pipe 402 of the compressor 4 and the condenser (the first heat exchanger 5 during the cooling operation and the second heat exchanger 7 during the heating operation), of the refrigeration cycle circuit 2E. Particularly, in the present embodiment, the light detection device 322E receives the light L32E-1, L32E-2 from the portion 22 between the discharge pipe 402 of the compressor 4 and the four-way valve 8. The light detection device 322E receives the light L32E-1, L32E-2 from the portion closer to the discharge pipe 402 of the compressor 4 than the four-way valve 8. In this way, the intensity of the light L32E-1, L32E-2 received by the light detection device 322E can be increased. This configuration enables improvement of the accuracy of abnormality detection in the refrigeration cycle circuit 2E.

The control circuit 35E may be implemented by a computer system including at least one processor (microprocessor) and at least one memory. The computer system may also include one or more A/D converters. For example, one or more A/D converters may be used to convert the detection voltage from the light detection circuit 32E from analog format to digital format. The control circuit 35E, similarly to the control circuit 35, controls the drive circuit 31, the first protective device 33, and the second protective device 34.

The control circuit 35E is configured to determine whether an abnormality has occurred in the refrigeration cycle circuit 2E based on the light detection signal from the light detection circuit 32E, and if it is determined that an abnormality has occurred, interrupts or limits the operation of the refrigeration cycle circuit 2E.

**In** the present embodiment, the control circuit 35E is configured to interrupt or limit the operation of the refrigeration cycle circuit 2E when the intensity of the light L32E indicated by the light detection signal from the light detection circuit 32E satisfies a predetermined condition. In the present embodiment, the light detection signal from the light detection circuit 32E includes intensities of a plurality of rays of light L32E-1, L32E-2 which have different wavelength bands. The control circuit 35E interrupts or limits the operation of the refrigeration cycle circuit 2E when at least one of the intensities of the plurality of rays of light L32E-1, L32E-2 satisfies a predetermined condition.

The predetermined condition is set according to the type of the dye.

Consider a case where the wavelength band of the light L32E-1 and L32E-2 from the light source device 321E include absorption wavelengths at which the absorbance of the dye decreases due to a reaction between the dye and the product (D). For example, this applies to cases where the absorbance at the absorption maximum wavelength of the dye decreases as a result of the reaction. In this case, the predetermined condition may be that a ratio of an index value of the intensity of the light L32E at a second time point after predetermined time from a first time point, to an index value of the intensity of the light L32E at the first time point is equal to or greater than a predetermined ratio. The index value of the intensity of the light L32E-1, L32E-2 is a value derived directly or indirectly from the intensity of the light L32E-1, L32E-2, and may be the intensity of the light L32E-1, L32E-2 itself, or a representative value of the intensity of the light L32E-1, L32E-2 within a certain period. The representative value may be selected from an average value, mode value, maximum value, minimum value, median value, etc. The index value of the intensity of the light L32E-1, L32E-2 is also an index value of the amount of the product generated from the working medium 20 by the disproportionation reaction. The predetermined ratio may be determined by evaluation through testing or simulation based on an amount of the product (D) at which there is a high possibility of abnormality occurring in the refrigeration cycle circuit 2E. For example, the predetermined ratio may be 110%. That is, the predetermined condition may be that the ratio of the index value of the intensity of the light L32E-1, L32E-2 at the second time point after predetermined time from the first time point, to the index value of the intensity of the light L32E-1, L32E-2 at the first time point is equal to or larger than 110%. The first time point may be, for example, the start of the operation of the refrigeration cycle circuit 2E or any time during the operation of the refrigeration cycle circuit 2E. The predetermined time is not particularly limited, but is preferably set so as to allow observation of changes in the absorbance of the dye resulting from the generation of product (D). When the first time point may be, for example, the start of the operation of the refrigeration cycle circuit 2E, the predetermined condition corresponds to an amount of the product generated from the working medium 20 by the disproportionation reaction being equal to or greater than a predetermined amount. When the first time point is any time during the operation of the refrigeration cycle circuit 2E, the predetermined condition corresponds to an increase in the amount of the product generated from the working medium 20 by the disproportionation reaction within the predetermined period being equal to or greater than a predetermined amount.

Consider a case where the wavelength band of the light L32E-1 and L32E-2 from the light source device 321E include absorption wavelengths at which the absorbance of the dye increases due to a reaction between the dye and the product (D). For example, this applies to cases where the absorbance at the absorption maximum wavelength of the dye increases as a result of the reaction. In this case, a predetermined condition may be that the ratio of the index value of the intensity of the light L32E at the second time point after predetermined time from the first time point, to the index value of the intensity of the light L32E at the first time point is equal to or smaller than a predetermined ratio. The predetermined ratio may be determined by evaluation through testing or simulation based on an amount of the product (D) at which there is a high possibility of abnormality occurring in the refrigeration cycle circuit 2E. For example, the predetermined ratio may be 90%. That is, the predetermined condition may be that the ratio of the index value of the intensity of the light L32E at the second time point after predetermined time from the first time point, to the index value of the intensity of the light L32E at the first time point is not greater than 90%.

**In** the control device 3E described above, the light detection circuit 32E receives the light L32E from the inside of the refrigeration cycle circuit 2E to output the intensity of the received light L32E as the second state. When the control circuit 35E detects the sign of the disproportionation reaction based on the second state regarding the working medium 20, it interrupts or limits the operation of the refrigeration cycle circuit 2E. Here, the control circuit 35E determines the index value of the amount of the product generated from the working medium 20 by the disproportionation reaction based on the intensity of the light L32E. The sign of the disproportionation reaction is that the amount of the product or the increase in the amount of the product within a predetermined period is equal to or greater than a predetermined amount.

**In** the present embodiment, the dye is used to detect a change in the absorbance of the dye that may occur when a discharge phenomenon arises. Therefore, by using absorbance variability with respect to the absorption wavelength as a probe, it is possible to evaluate the accumulation of products originating from the discharge phenomenon while reducing the influence of emission-suppressing substances such as metals.

The interrupting or limiting the operation of the refrigeration cycle circuit 2E may include interrupting the operation of the drive circuit 31, increasing the rotational speed of a fan of the condenser, decreasing the rotational speed of a fan of the evaporator, increasing an opening degree of the expansion valve, opening the expansion valve of at least one indoor unit 1b among multiple indoor units 1b which are not in operation (if the refrigeration cycle device 1 has multiple indoor units 1b), or, in the heating operation, switching to the cooling operation with the four-way valve 8 and opening the expansion valve 6.

The control circuit 35E is configured to interrupt or limit the operation of the refrigeration cycle circuit 2E in different ways according to the number of times that the intensity of the light L32E satisfies the predetermined condition. In particular, the control circuit 35E performs a higher-degree process for interrupting or limiting the operation of the refrigeration cycle circuit 2E as the number of times that the intensity of the light L32E satisfies the predetermined condition increases. This enables early detection of an abnormality in the refrigeration cycle circuit 2E. Therefore, the safety of using the working medium 20 can be improved.

The control circuit 35E is configured to interrupt or limit the operation of the refrigeration cycle circuit 2E in different ways according to the time difference between the first time at which the intensity of the light L32E first satisfies the predetermined condition and the second time at which the intensity of the light L32E next satisfies the predetermined condition. **In** particular, the control circuit 35E performs a higher-degree process for interrupting or limiting the operation of the refrigeration cycle circuit 2E as the time difference becomes shorter. Thus, the control device 3E enables early detection of an abnormality in the refrigeration cycle circuit 2E. Therefore, the safety of using the working medium 20 can be improved.

The process for interrupting or limiting the operation of the refrigeration cycle circuit 2E may include, for example, a first process to a third process. The first process is a process of interrupting outputting the AC output power and after a lapse of a waiting period, restarting outputting the AC output power. The second process is a process of interrupting outputting the AC output power and after a lapse of a waiting period, restarting the operation with a reduced setting value of the amplitude of the AC output power. The third process is a process of interrupting outputting the AC output power and interrupting inputting the input power. Among the first to third processes, the degree of interrupting or limiting the operation of the refrigeration cycle circuit 2E is higher in the order of the third, the second, and the first processes. Even in the first or second processes, the longer the waiting period, the higher the degree of interrupting or limiting the operation of the refrigeration cycle circuit 2E.

The operation of the control circuit 35E may be similar to the operation of the control circuit 35B described with reference to Fig. 31 to Fig. 36. More specifically, the operation of the control circuit 35E may be an operation in which the part concerning the light detection circuit 32B in the description of the operation of the control circuit 35B with reference to Fig. 31 to Fig. 36 is replaced with the part concerning the light detection circuit 32E.

### [1.8.2 ADVANTAGEOUS EFFECTS]

The aforementioned control device 3E is a control device for controlling the refrigeration cycle circuit 2E allowing circulation of the working medium 20 containing the refrigerant component capable of undergoing the disproportionation reaction, and includes: the drive circuit 31 configured to drive the compressor 4 of the refrigeration cycle circuit 2E; and the control circuit 35E configured to interrupt or limit the operation of the refrigeration cycle circuit 2E in response to detecting the sign of the disproportionation reaction based on at least one of the first state regarding the drive circuit 31 for driving the compressor 4 of the refrigeration cycle circuit 2E or the second state regarding the working medium 20. This configuration enables improvement of accuracy of detection of the disproportionation reaction of the working medium 20 and improvement of suppression of the disproportionation reaction.

In the control device 3E, the refrigeration cycle circuit 2E includes the light absorber 11E containing the dye. The control device 3E includes the light detection device 322E configured to receive light L32E with the wavelength band containing the absorption wavelength of the dye to output the intensity of the light L32E received, as the second state. The control circuit 35E is configured to determine the index value of the amount of the product produced from the working medium 20 by the disproportionation reaction, based on the intensity of the light L32E output from the light detection device 322E. The sign of the disproportionation reaction is that the amount of the product or the increase in the amount of the product during the predetermined period is equal to or larger than the predetermined amount. This configuration enables improvement of accuracy of detection of the disproportionation reaction of the working medium 20 and improvement of suppression of the disproportionation reaction.

The aforementioned control device 3E seems to perform the following control method. The control method includes interrupting or limiting the operation of the refrigeration cycle circuit 2E in response to detecting the sign of the disproportionation reaction based on at least one of the first state regarding the drive circuit 31 for driving the compressor 4 of the refrigeration cycle circuit 2E or the second state regarding the working medium 20. This configuration enables improvement of accuracy of detection of the disproportionation reaction of the working medium 20 and improvement of suppression of the disproportionation reaction.

The control method includes determining the index value of the amount of the product produced from the working medium 20 by the disproportionation reaction, based on the second state. The sign of the disproportionation reaction is that the amount of the product or an increase in the amount of the product during a predetermined period is equal to or larger than a predetermined amount. This configuration enables improvement of accuracy of detection of the disproportionation reaction of the working medium 20 and improvement of suppression of the disproportionation reaction.

The control method performed by the control device 3E can be realized by a computer system executing a program. This program is a program executed by the computer system included in the control device 3E for controlling the refrigeration cycle circuit 2E allowing circulation of the working medium 20 containing the refrigerant component capable of undergoing the disproportionation reaction and enables the computer system to perform a process of interrupting or limiting the operation of the refrigeration cycle circuit 2E in response to detecting the sign of the disproportionation reaction based on at least one of the first state regarding the drive circuit 31 for driving the compressor 4 of the refrigeration cycle circuit 2E or the second state regarding the working medium 20. This configuration enables improvement of accuracy of detection of the disproportionation reaction of the working medium 20 and improvement of suppression of the disproportionation reaction.

The aforementioned refrigeration cycle device 1E includes the refrigeration cycle circuit 2E allowing circulation of the working medium 20 and the light absorber 11E located inside the refrigeration cycle circuit 2E to be contactable with the working medium 20. The light absorber 11E contains a dye with a property of reacting with the product (D) produced by a chemical reaction of the working medium 20 to cause a change in an absorbance. This configuration enables earlier detection of abnormality in the refrigeration cycle circuit 2E.

In the refrigeration cycle device 1E, the dye includes a nickel complex. This configuration enables improvement of the detection accuracy of abnormality in the refrigeration cycle circuit 2E.

In the refrigeration cycle device 1E, the dye includes a boron compound having an aromatic substituent. This configuration enables improvement of the detection accuracy of abnormality in the refrigeration cycle circuit 2E.

In the refrigeration cycle device 1E, the light absorber 11E is a refrigerating machine oil in which the dye is dissolved. This configuration can increase the possibility that the fluorescent dye in the light absorber 11E comes into contact with and reacts with the product (D).

The refrigeration cycle device 1E includes the light source device 321E configured to emit light L32E with the wavelength band containing the absorption wavelength of the dye to the inside of the refrigeration cycle circuit 2E and the light detection device 322E configured to receive the light L32E to output an intensity of the light L32E received. This configuration enables earlier detection of abnormality in the refrigeration cycle circuit 2E.

In the refrigeration cycle device 1E, the wavelength band contains the absorption maximum wavelength of the dye. This configuration enables improvement of the detection accuracy of abnormality in the refrigeration cycle circuit 2E.

In the refrigeration cycle device 1E, the light source device 321E is configured to emit a plurality of rays of the light L32E-1, L32E-2 with different wavelength bands and the light detection device 322E is configured to receive the plurality of rays of the light L32E-1, L32E-2 to output intensities of the plurality of rays of the light L32E-1, L32E-2 received. This configuration uses the intensities of the plurality of rays of light L32E-1 and L32E-2 having different wavelength bands, and therefore makes it possible to reduce influence of colors of substances other than the dye in the light absorber 11E, for example, the influence of color tone changes in the refrigerating machine oil.

In the refrigeration cycle device 1E, the light source device 321E is configured to emit the light L32E-1, L32E-2 to the portion 22 between the discharge pipe 402 of the compressor 4 and the condenser (the first heat exchanger 5, the second heat exchanger 7), of the refrigeration cycle circuit. This configuration enables improvement of the detection accuracy of abnormality in the refrigeration cycle circuit 2E.

The refrigeration cycle device 1E includes the control circuit 35E configured to control the operation of the refrigeration cycle circuit 2E. The control circuit 35E is configured to interrupt or limit the operation of the refrigeration cycle circuit 2E when the intensity of the light L32E-1, L32E-2 output from the light detection device 322E satisfies a predetermined condition. This configuration enables earlier detection of abnormality in the refrigeration cycle circuit 2E. Furthermore, this configuration makes it possible to suppress disproportionation reactions of the working medium 20.

**In** the refrigeration cycle device **1E,** the wavelength band contains an absorption wavelength at which a reaction between the dye and the product (D) causes a decrease in the absorbance of the dye. The predetermined condition is that a ratio of an index value of the intensity of the light L32E-1, L32E-2 at a second time point after predetermined time from a first time point, to an index value of the intensity of the light L32E-1, L32E-2 at the first time point is 110% or more. This configuration enables earlier detection of abnormality in the refrigeration cycle circuit 2E.

**In** the refrigeration cycle device **1E,** the wavelength band contains an absorption wavelength at which a reaction between the dye and the product (D) causes an increase in the absorbance of the dye. The predetermined condition is that a ratio of an index value of the intensity of the light L32E-1, L32E-2 at a second time point after predetermined time from a first time point, to an index value of the intensity of the light L32E-1, L32E-2 at the first time point is 90% or less. This configuration enables earlier detection of abnormality in the refrigeration cycle circuit 2E.

The aforementioned refrigeration cycle device 1E performs the light detection method for the refrigeration cycle circuit 2E allowing circulation of the working medium 20. This light detection method includes: emitting, to the light absorber 11E which contains the dye and is located inside the refrigeration cycle circuit 2E to be contactable with the working medium 20, the light L32E with the wavelength band containing the absorption wavelength of the dye; and receiving the light L32E to output the intensity of the light L32E received. The dye has a property of reacting with the product (D) produced by a chemical reaction of the working medium 20 to cause a change in an absorbance. This configuration enables earlier detection of abnormality in the refrigeration cycle circuit 2E.

The aforementioned control device 3E seems to perform the following control method. The control method is a control method performed by the control device 3E for controlling the refrigeration cycle circuit 2E which allows circulation of the working medium 20. The refrigeration cycle circuit 2E includes the light absorber 11E containing the dye, and the control device 3E includes the light detection device 322E. The control method includes: receiving, by the light detection device 322E, the light L32E with the wavelength band containing the absorption wavelength of the dye to output the intensity of the light L32E received; and interrupting or limiting the operation of the refrigeration cycle circuit 2E when the intensity of the light L32E output from the light detection device 322E satisfies a predetermined condition. This configuration enables earlier detection of abnormality in the refrigeration cycle circuit 2E. Furthermore, this configuration makes it possible to suppress disproportionation reactions of the working medium 20.

The control method performed by the control device 3E can be realized by a computer system executing a program. This program is a program performed by a computer system included in a control device for controlling the refrigeration cycle circuit 2E allowing circulation of the working medium 20. The refrigeration cycle circuit 2E includes the light absorber 11E containing the dye, and the control device 3E includes the light detection device 322E. The program includes: receiving, by the light detection device 322E, the light L32E with the wavelength band containing the absorption wavelength of the dye to output the intensity of the light L32E received; and interrupting or limiting the operation of the refrigeration cycle circuit 2E when the intensity of the light L32E output from the light detection device 322E satisfies a predetermined condition. This configuration enables earlier detection of abnormality in the refrigeration cycle circuit 2E. Furthermore, this configuration makes it possible to suppress disproportionation reactions of the working medium 20.

### [1.9 EMBODIMENT 9]

### [1.9.1 CONFIGURATIONS]

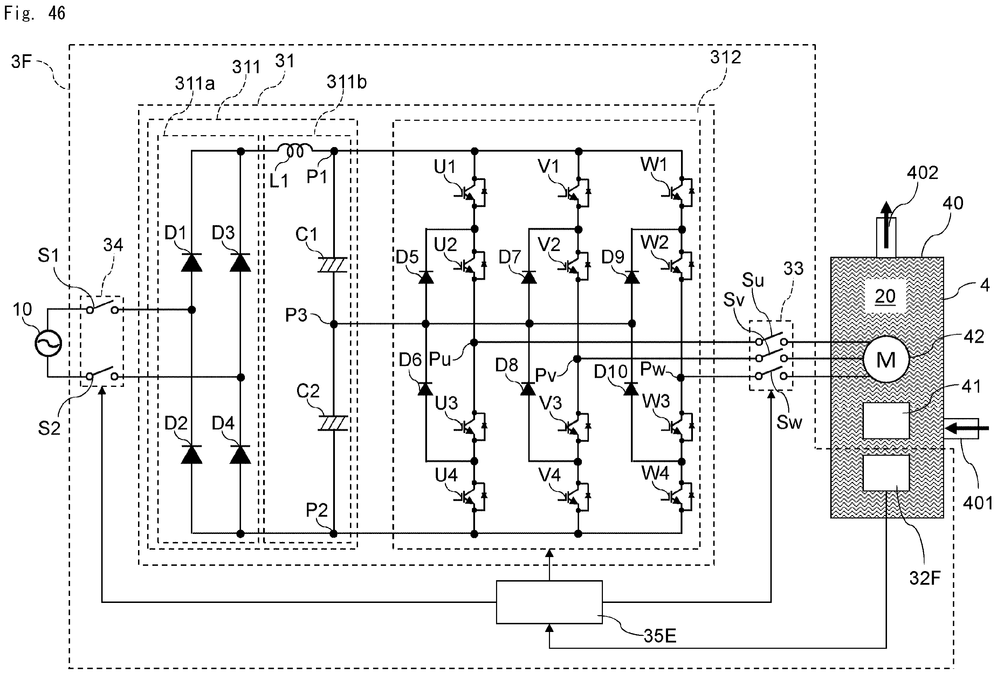

Fig. 46 is a schematic view of the compressor 4 and a control device 3F of a refrigeration cycle device according to Embodiment 9. The refrigeration cycle device according to Embodiment 9 includes the same configuration as the refrigeration cycle device 1E according to Embodiment 8, and therefore, with respect to the same configuration, Fig. 42 and the reference numerals will be employed as appropriate.

The control device 3F includes the drive circuit 31, a light detection circuit 32F, the first protective device 33, the second protective device 34, and the control circuit 35E.

Fig. 46 is a schematic view of the light detection circuit 32F. In the present embodiment, the light detection circuit 32F enables evaluation of an abnormality in the refrigeration cycle circuit 2E by means of the light absorber 11F.

The light absorber 11F contains the dye and is located inside the refrigeration cycle circuit 2E to be contactable with the working medium 20. In the present embodiment, the light absorber 11F is a support carrying the dye. The support is, for example, a porous material. The porous material may be either inorganic or organic porous material. Examples of inorganic porous material include mesoporous silica. Examples of organic porous material include synthetic resin membranes or paper. Since the porous material can secure a larger surface area, it is possible to increase the likelihood that the dye comes into contact with the working medium 20. It is preferable that the porous material has a property of transmitting light L32 without blocking it. The light absorber 11F is fixed at a predetermined location of the refrigeration cycle circuit 2E. In the present embodiment, the light absorber 11F is located in the sealed container 40 of the compressor 4. For example, the light absorber 11F is located in a region between the electric motor 42 and the discharge pipe 402. In the light absorber 11F, unlike the light absorber 11E, the dye is present at a predetermined position without being dispersed throughout the refrigeration cycle circuit 2E, so although the possibility of contact with the working medium 20 decreases, the dye can be reliably irradiated with the light L32.

The light detection circuit 32F includes the light source device 321F and the light detection device 322F. The light source device 321F is configured to emit the light L32E to the inside of the compressor 4 of the refrigeration cycle circuit 2E. As a result, the light L32E is emitted to the sealed container 40 of the compressor 4, and the light L32E strikes the light absorber 11F in the sealed container 40. In the present embodiment, the light source device 321F is located in the sealed container 40 of the compressor 4. For example, the light source device 321F is located in a region between the electric motor 42 and the discharge pipe 402. In this way, the possibility that the dye is irradiated with the light L32E can be increased. This configuration enables improvement of the detection accuracy of abnormality in the refrigeration cycle circuit 2E. The light detection device 322E is configured to receive the light L32E from the inside of the compressor 4 of the refrigeration cycle circuit 2E. In the present embodiment, the light detection device 322E is located in the sealed container 40 of the compressor 4. For example, the light source device 321F is located in a region between the electric motor 42 and the discharge pipe 402. The light detection device 322E may be located based on a relation between the compression mechanism 41 and the electric motor 42 of the compressor. In detail, the light detection device 322E may be located to allow the electric motor 42 to be positioned between the light detection device 322E and the compression mechanism 41 of the compressor 4. In this way, the intensity of the light L32E received by the light detection device 322E can be increased. This configuration enables improvement of the detection accuracy of abnormality in the refrigeration cycle circuit 2E.

### [1.9.2 ADVANTAGEOUS EFFECTS]

In the aforementioned refrigeration cycle device, the light source device 321F is configured to emit the light L32E to the inside of the compressor 4 of the refrigeration cycle circuit 2E. This configuration enables improvement of the detection accuracy of abnormality in the refrigeration cycle circuit 2E.

In the refrigeration cycle device, the light absorber 11F is a support carrying the dye. This configuration enables the dye to be present at a predetermined position without being dispersed throughout the refrigeration cycle circuit 2E and thus to be reliably irradiated with the excitation light L32E.

In the refrigeration cycle device, the support includes the porous material. This configuration can increase the likelihood that the dye comes into contact with the working medium 20.

### [1.10 EMBODIMENT 10]

### [1.10.1 CONFIGURATIONS]

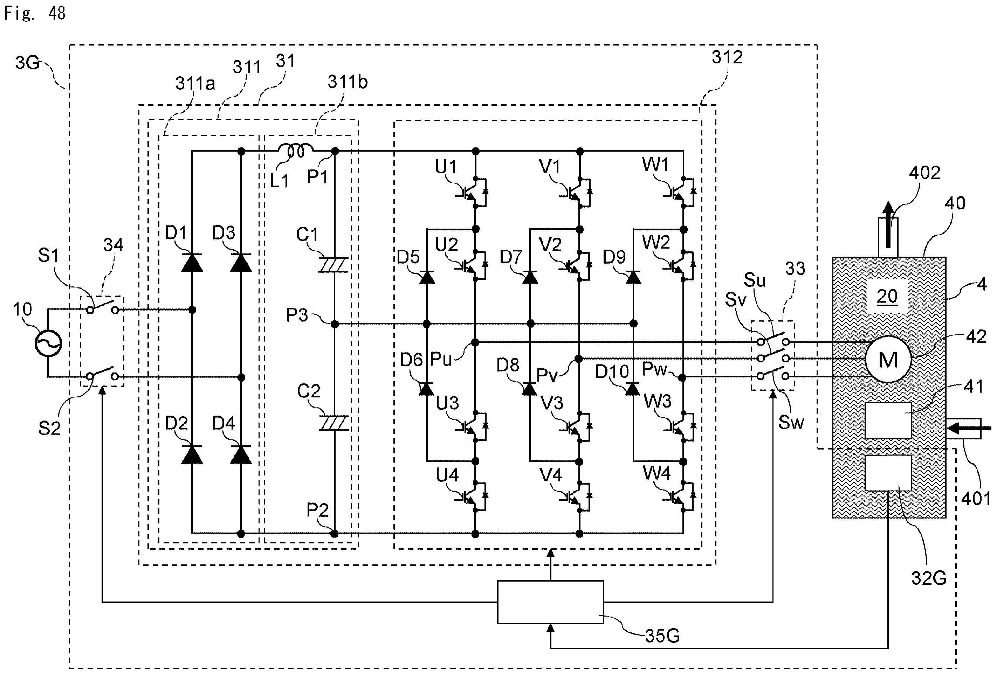

Fig. 48 is a schematic view of the compressor 4 and a control device 3G of a refrigeration cycle device according to Embodiment 10. The refrigeration cycle device according to Embodiment 10 includes the same configuration as the refrigeration cycle device 1 according to Embodiment 1, and therefore, with respect to the same configuration, Fig. 1 and the reference numerals will be employed as appropriate.

The control device 3G includes the drive circuit 31, a temperature detection device 32G, the first protective device 33, the second protective device 34, and the control circuit 35G.

The temperature detection device 32G is configured to detect a temperature [K] of a working medium at a portion of the refrigeration cycle circuit 2. In the present embodiment, the second state is the temperature [K] of the working medium 20 at the portion of the refrigeration cycle circuit 2. Here, the portion of the refrigeration cycle circuit 2 refers to the inside of the compressor 4. For example, the temperature detection device 32G detects a temperature within the sealed container 40 and outputs a temperature signal indicating the temperature to the control circuit 35G. That is, the temperature detection device 32G is configured to detect the temperature of the working medium 20 within the sealed container 40 of the compressor 4, which is a portion of the refrigeration cycle circuit 2, to output the detected temperature as the second state. The temperature detection device 32G may have a well-known configuration such as a thermocouple. It should be noted that the portion of the refrigeration cycle circuit 2 is not limited to the inside of the compressor 4, but may be the suction pipe 401 or the discharge pipe 402 of the sealed container 40, or any portion of a piping path of the refrigeration cycle circuit 2.

The control circuit 35G may be implemented by a computer system including at least one processor (microprocessor) and at least one memory. The computer system may also include one or more A/D converters. For example, one or more A/D converters may be used to convert the detection voltage from the temperature detection device 32G from analog format to digital format. The control circuit 35G, similarly to the control circuit 35, controls the drive circuit 31, the first protective device 33, and the second protective device 34.

The control circuit 35G further performs a process to suppress a disproportionation reaction of the working medium 20 circulating in the refrigeration cycle circuit 2, based on the temperature indicated by the temperature signal output from the temperature detection device 32G. Factors contributing to the disproportionation reaction of the working medium 20 are considered to be heat and radicals. For example, it is believed that the disproportionation reaction of the working medium 20 proceeds when radicals are generated under high temperature and high pressure conditions. Furthermore, when the temperature of the working medium 20 is extremely high, it is highly likely that radicals have been produced. From this perspective, when the control circuit 35G detects a sign of the disproportionation reaction based on the second state (in the present embodiment, the temperature [K] of the working medium 20 at the portion of the refrigeration cycle circuit 2) regarding the working medium 20, it interrupts or limits the operation of the refrigeration cycle circuit 2 (the drive circuit 31).

**In** the present embodiment, the sign of the disproportionation reaction is that the temperature [K] of the working medium 20 at the portion of the refrigeration cycle circuit 2 is equal to or higher than a threshold temperature [K].

The threshold temperature [K] can be determined based on a temperature during rated operation. In the present embodiment, the threshold temperature [K] is set to be at least 10 times higher than the maximum value [K] within the temperature range during the rated operation. As one example, when the average temperature during the rated operation is 353 K and the maximum value within the temperature range during the rated operation is 393 K, the threshold temperature can be set to 3930 K or higher.

The threshold temperature [K] may be determined based on an absolute standard. For example, the threshold temperature [K] may be 2000. In this case, the sign of the disproportionation reaction is that the temperature [K] of the working medium at the portion of the refrigeration cycle circuit becomes 2000 K or higher.

### [1.10.2 ADVANTAGEOUS EFFECTS]

In the aforementioned refrigeration cycle device, the second state is a temperature [K] of the working medium 20 at a portion of the refrigeration cycle circuit 2. The sign of the disproportionation reaction is that the temperature [K] of the working medium 20 at the portion of the refrigeration cycle circuit 2 becomes at least ten times higher than the maximum value [K] within the temperature range during the rated operation. This configuration enables improvement of accuracy of detection of the disproportionation reaction of the working medium 20 and improvement of suppression of the disproportionation reaction.

In the aforementioned refrigeration cycle device, the second state is a temperature [K] of the working medium 20 at a portion of the refrigeration cycle circuit 2. The sign of the disproportionation reaction is that the temperature [K] of the working medium 20 at the portion of the refrigeration cycle circuit 2 becomes equal to or larger than 2000 K. This configuration enables improvement of accuracy of detection of the disproportionation reaction of the working medium 20 and improvement of suppression of the disproportionation reaction.

### [2. VARIATIONS]

Embodiments of the present disclosure are not limited to the embodiments described above. The above embodiments may be variously modified in accordance with design and other factors, provided that the objects of the present disclosure can be achieved. Hereinafter, variations of the above embodiments will be enumerated. The variations described below may be applied in appropriate combinations.

It is noted that, in the following description, reference will be made to the reference signs used in Embodiment 1, even though the following variations may be applicable to any of Embodiments 1 to 9. This is merely for the purpose of simplifying the description and is not intended to exclude application to Embodiments 2 to 10.

In one variation, in the control circuit 35, the interruption of operation of the drive circuit 31 may include at least one of interrupting outputting the AC output power, interrupting outputting the DC output power, or interrupting inputting the input power. The limiting of the operation of the drive circuit 31 may include at least one of decreasing the setting value of the amplitude of the AC output power, or decreasing the setting value of the frequency of the AC output power.

**In** one variation, the control circuit 35 may perform the interrupting or decelerating the electric motor 42 stepwise. As one example, the control circuit 35 may reduce an effective value of the AC output power supplied to the electric motor 42 stepwise by decreasing at least one of the amplitude or the frequency of the AC output power stepwise

**In** one variation, the operation of the control circuit 35 is not necessarily limited to the operation represented by the flowcharts shown in Fig. 4 to Fig. 9. The flowcharts shown in Fig. 4 to Fig. 9 are merely examples. For instance, in the operation of the control circuit 35, the processes of steps S19 to S23, namely, the processes to interrupt outputting the AC output power and interrupt inputting the input power, are not essential. **In** the operation of the control circuit 35, the processes of steps S24 to S28, namely, the processes to interrupt outputting the AC output power and, after the lapse of the waiting period, operate by lowering the setting value of the amplitude of the AC output power, are not essential. Likewise, in the operation of the control circuit 35, the processes of steps S29 to S34, the processes of steps S35 to S41, or the processes of steps S42 to S51, are not essential.

The control circuit 35 need not necessarily interrupt or limit the operation of the drive circuit 31 in different ways depending on the time difference between the first time when the detected voltage first falls below the second voltage and the second time when the detected voltage falls below the second voltage again, or depending on the number of times that the detected voltage falls below the second voltage.

**In** one variation, the operation of the control circuit 35A is not necessarily limited to the operation represented by the flowcharts shown in Fig. 13 to Fig. 26. The flowcharts shown in Fig. 13 to Fig. 26 are merely examples. For example, the threshold value for the first light is not limited to the first to third threshold values, and may be only a single threshold value or two or more threshold values. The same applies to the threshold value for the second light.

**In** one variation, the operation of the control circuit 35B is not necessarily limited to the operation represented by the flowcharts shown in Fig. 31 to Fig. 36. The flowcharts shown in Fig. 31 to Fig. 36 are merely examples. For example, in the operation of the control circuit 35B, the processes of steps S219 to S223, namely, the processes to interrupt outputting the AC output power and interrupt inputting the input power, are not essential. **In** the operation of the control circuit 35B, the processes of steps S224 to S228, namely, the processes to interrupt outputting the AC output power and, after the lapse of the waiting period, operate by lowering the setting value of the amplitude of the AC output power, are not essential. Likewise, in the operation of the control circuit 35B, the processes of steps S229 to S234, the processes of steps S235 to S241, or the processes of steps S242 to S251, are not essential. The same applies to the control circuit 35C and 35E.

The control circuit 35B need not necessarily interrupt or limit the operation of the refrigeration cycle circuit 2B in different ways depending on the time difference between the first time when the intensity of the light L32B first satisfies the predetermined condition and the second time when the intensity of the light L32B subsequently satisfies the predetermined condition, or depending on the number of times that the intensity of the light L32B satisfies the predetermined condition. The same applies to the control circuits 35C and 35E.

**In** one variation, the light detection device 32A is not limited to a configuration including a plurality of light detectors 321A and 322A, and may include a single light detector. The arrangement of the plurality of light detectors 321A and 322A is not particularly limited, and they may be arranged in any position inside the sealed container 40, as long as they can detect light that may contribute to occurrence of a disproportionation reaction. The plurality of light detectors 321A and 322A need not necessarily all be located at positions where light can be detected, and it suffices if light can be detected by at least one of the plurality of light detectors 321A and 322A.

**In** one variation, the light detection circuit 32B may be configured to emit the light L32B to the working medium 20 at different positions of the refrigeration cycle circuit 2B. This makes it possible to improve the accuracy in detecting an abnormality in the refrigeration cycle circuit 2. The light detection circuit 32B is not necessarily required to be disposed inside the sealed container 40. For example, a window may be provided in the refrigeration cycle circuit 2B to allow radiation of light and detection of light intensity, in which case the light detection circuit 32B itself may be disposed outside the refrigeration cycle circuit 2B.

In one variation, the light source device 321B need not necessarily include the first light source 3211-1 and the second light source 3211-2, but may be configured such that light from a single light source is divided by a beam splitter, an optical fiber, or the like, and radiated. The number of light sources 3211 of the light source device 321B is not limited to two, and may be one or three or more.

In one variation, the light source device 321B may emit a plurality of rays of light L32B having different wavelength bands. The light detection device 322B may receive the plurality of rays of lights L32B and output the intensities of the received plurality of rays of lights L32B respectively. In this case, the light detection signal output from the light detection device 322B to the control circuit 35B may include one or more light detection signals indicating the intensities of the plurality of rays of lights having different wavelength bands. By using the intensities of a plurality of rays of lights having different wavelength bands, the influence of substances other than insoluble components, for example, an influence of a color change of a refrigerating machine oil, can be reduced.

In one variation, the number of light detectors 3220 of the light detection device 322B is not limited to two, but may be one or three or more. The first light detector 3220-1 need not necessarily be disposed so as to face the first light source 3211-1, but may simply be located on the optical path of the light L32B-1 from the first light source 3211-1. For example, the optical path of the light L32B-1 may be bent by a mirror or the like, and in such case, the first light detector 3220-1 need not necessarily face the first light source 3211-1. The same applies to the second light detector 3220-2.

In one variation, the position of the bubble removing mechanism 21 is not limited to the position shown in Fig. 27. Since the bubble removing mechanism 21 is intended to reduce an influence on the light detection circuit 32B caused by bubbles B, it suffices if the bubble removing mechanism 21 is disposed on an upstream side in the refrigeration cycle circuit 2B from the portion irradiated by the light source device 321B with the light L32B. For example, the bubble removing mechanism 21 may be disposed inside the compressor 4. In particular, the bubble removing mechanism 21 may be disposed inside the sealed container 40 of the compressor 4 or in the suction pipe 401.

In one variation, the light detection circuit 32C may be configured to emit the excitation light Le to a plurality of positions of the refrigeration cycle circuit 2C. This makes it possible to improve the accuracy in detecting an abnormality of the refrigeration cycle circuit 2C. The light detection circuit 32C is not necessarily required to be disposed inside the sealed container 40. For example, a window may be provided in the refrigeration cycle circuit 2C to allow radiation of light and detection of light intensity, in which case the light detection circuit 32C itself may be disposed outside the refrigeration cycle circuit 2C.

**In** one variation, the light detection circuit 32E may be configured to radiate the light L32E to the working medium 20 at different positions of the refrigeration cycle circuit 2E. This makes it possible to improve the accuracy in detecting an abnormality in the refrigeration cycle circuit 2E. The light detection circuit 32E is not necessarily required to be disposed inside the sealed container 40. For example, a window may be provided in the refrigeration cycle circuit 2E to allow radiation of light and detection of light intensity, in which case the light detection circuit 32E itself may be disposed outside the refrigeration cycle circuit 2E.

**In** one variation, the light source device 321E does not necessarily need to include the first light source 3213-1 and the second light source 3213-2; it may be configured to split and emit light from a single light source using a beam splitter, optical fiber, or the like. The number of light sources 3213 in the light source device 321E may be one instead of two, or may be three or more.

**In** one variation, the number of light detectors 3223 in the light detection device 322E may be one instead of two, or may be three or more. The first light detector 3223-1 does not necessarily need to be arranged to face the first light source 3213-1, as long as it is located on the optical path of light L32E-1 from the first light source 3213-1. For example, the optical path of light L32E-1 may be bent by a mirror or the like. **In** this case, the first light detector 3223-1 does not necessarily need to face the first light source 3213-1. The same applies to the second light detector 3223-2.

**In** one variation, the light source device 321B does not necessarily need to be included in the control device 3E. An external light source outside the refrigeration cycle device 1B may be used as the light source device 321B. The same applies to the light source devices 321C and 321E.

**In** one variation, the first protective device 33 is not limited to a circuit configuration including the switches Su, Sv, and Sw, and may include a circuit configuration that adjusts the magnitude of the AC output power, such as the voltage, output from the drive circuit 31 to the electric motor 42. The first protective device 33 may be disposed within the drive circuit 31.

In one variation, the second protective device 34 is not limited to a circuit configuration including the switches S1 and S2, and may include a circuit configuration that adjusts the magnitude of the input power, such as the voltage, input from the power supply 10 to the drive circuit 31. The second protective device 34 may be disposed within the drive circuit 31.

In one variation, the control device 3 does not necessarily need to include both the first protective device 33 and the second protective device 34; it may include either the first protective device 33 or the second protective device 34. If the drive circuit 31 has a function to adjust the AC output power, the first protective device 33 and the second protective device 34 may be omitted. For example, the control circuit 35 may interrupt outputting the AC output power to the electric motor 42 by turning on the semiconductor switching elements V1 to V4 of the inverter circuit 312 and turning off the remaining semiconductor switching elements U1 to U4 and W1 to W4. In this case, the first protective device 33 may be omitted.

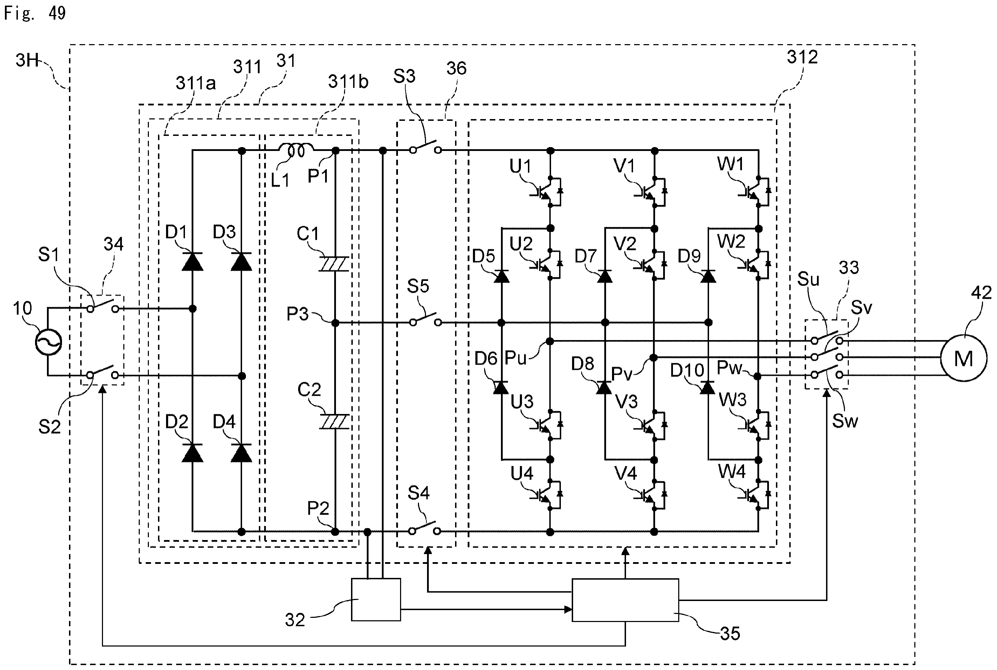

Fig. 49 shows a control device 3H according to one variation. In Fig. 49, the control device 3H includes a third protective device 36. The third protective device 36 is provided to interrupt outputting the DC output power. The third protective device 36 includes switches S3, S4, and S5 interposed between the converter circuit 311 and the inverter circuit 312 of the drive circuit 31. The switch S3 is commonly connected between the first output point P1 and the semiconductor switching elements U1, V1, and W1. The switch S4 is commonly connected between the second output point P2 and the semiconductor switching elements U4, V4, and W4. The switch S5 is commonly connected between the third output point P3 and the connection point between the diodes D5 and D6, the connection point between the diodes D7 and D8, as well as the connection point between the diodes D9 and D10. The switches S3, S4, and S5 may be any controllable switches, such as semiconductor switches or electromagnetic relays. In the ON state where the switches S3, S4, and S5 are closed, the third protective device 36 enables outputting the DC output power from the converter circuit 311 to the inverter circuit 312. In the OFF state where the switches S3, S4, and S5 are open, the third protective device 36 interrupts outputting the DC output power from the converter circuit 311 to the inverter circuit 312.

When interrupting outputting power to the compressor 4, interrupting inputting the input power, interrupting outputting the DC output power, and interrupting outputting the AC output power, in this order, provides higher safety. Therefore, after the operation of the first protective device 33, the third protective device 36 may be operated before operating the second protective device 34. When the third protective device 36 is present, the second protective device 34 may be omitted.

In one variation, the third protective device 36 is not limited to a circuit configuration including the switches S3, S4, and S5, and may include a circuit configuration for adjusting the magnitude of the DC output power, such as the voltage, output from the converter circuit 311 to the inverter circuit 312.

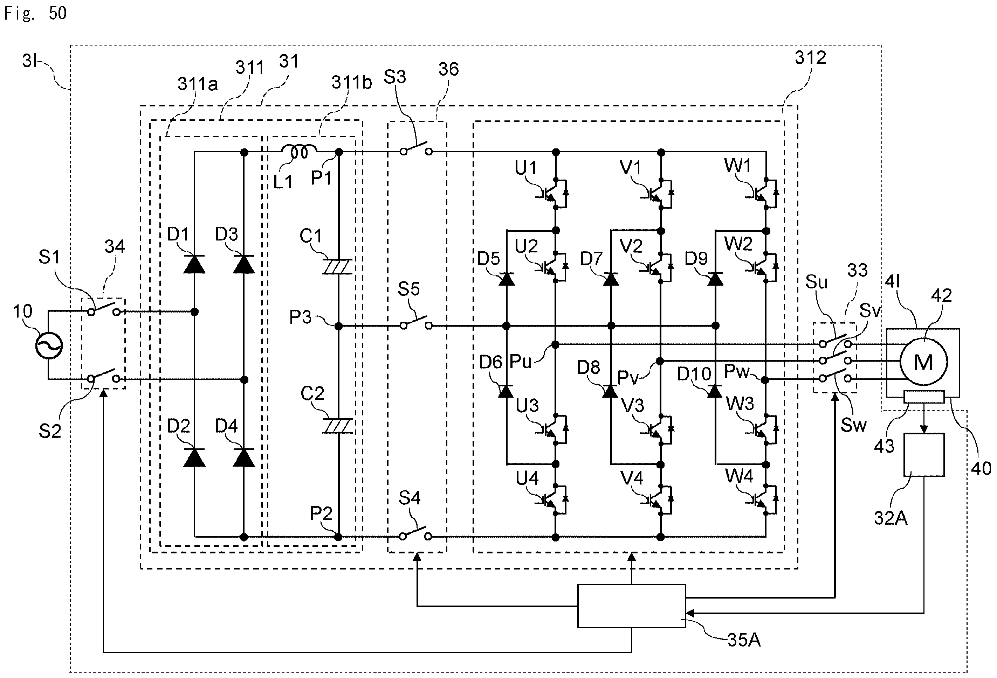

Fig. 50 is a schematic view of a compressor 4I and a control device 3I of a refrigeration cycle device according to one variation.

In Fig. 50, the control device 3I, like the control device 3A of Embodiment 2, includes the drive circuit 31, the light detection device 32A, the first protective device 33, the second protective device 34, and the control circuit 35A. In addition, the control device 3I includes a third protective device 36.

In Fig. 49, the compressor 4I includes a light guide 43. The light guide 43 is provided to guide light from the inside of the sealed container 40 to the outside of the sealed container 40. The light detection device 32A is disposed outside the sealed container 40, rather than inside the sealed container 40, and detects light guided from the inside of the sealed container 40 by the light guide 43.

The light guide 43 may be a window section such as a sight glass provided to the sealed container 40. In this case, the light detection device 32A is placed to face the light guide 43 and detects light extracted from the inside of the sealed container 40 through the light guide 43. Since the light detection device 32A can be placed outside the sealed container 40, this enhances lifespan compared to being exposed to the working medium 20 inside the sealed container 40. On the other hand, since the distance between the light source inside the sealed container 40 and the light guide 43 increases, detection sensitivity tends to decrease.

The light guide 43 may include an optical fiber. An input end of the optical fiber is disposed inside the sealed container 40, and an output end is disposed outside the sealed container 40. The light guide 43 may include a plurality of optical fibers, and the input ends of the plurality of optical fibers may be disposed at both ends in the direction of the rotational axis A11 of the electric motor 42. This allows improvement in the detection accuracy of the disproportionation reaction. The output ends of the plurality of optical fibers may be gathered together, thereby collecting light detected at the input ends of the plurality of optical fibers and outputting it to the light detection device 32A. In this case, since the light detection device 32A can be disposed outside the sealed container 40, lifespan can be increased compared to being exposed to the working medium 20 inside the sealed container 40. Further, as in Embodiment 1, it is not necessary to use multiple light detectors 321Aand 322A, so the number of light detectors can be reduced. On the other hand, depending on the arrangement of the optical fibers, there is a possibility that the flow of the working medium 20 inside the sealed container 40 may be obstructed.

In one variation, the power supply 10 may be any of various AC power sources, particularly commercial power supplies. The voltage and frequency of commercial power supplies differ depending on the country or the like, but the drive circuit 31 may be configured to drive the electric motor 42 using any of various commercial power supplies.

In one variation, the drive circuit 31 may be configured to supply the AC output power corresponding to the type or the like of the electric motor 42. The AC output power may not only be three-phase AC power, but also single-phase AC power.

In one variation, the converter circuit 311 may have a plurality of third output points. The plurality of third output points may output mutually different voltages. The inverter circuit 312 may have a plurality of groups of semiconductor switching elements respectively connected between the plurality of third output points and the electric motor 42. If the total number of the first output point P1, the second output point P2, and the plurality of third output points P3 is n, the drive circuit 31 can provide (2 × n - 1) voltage levels. By increasing n, the voltage waveform applied to the electric motor 42 by the drive circuit 31 can be made closer to a sine wave.

In one variation, the circuit configuration of the inverter circuit 312 is not limited to the circuit configuration shown in Fig. 2. The circuit configuration of the inverter circuit 312 in Fig. 2 is a so-called NPC (Neutral-Point-Clamped) type, but it may also be an ANPC (Advanced-NPC) type. The inverter circuit 312 may include a plurality of groups of semiconductor switching elements respectively connected between the plurality of output points with different voltages and the electric motor. The plurality of semiconductor switching elements constituting the plurality of semiconductor switching element groups may include semiconductor switching elements commonly included in two or more semiconductor switching element groups.

**In** one variation, the refrigeration cycle device is not limited to an air conditioner in which one indoor unit is connected to one outdoor unit (so-called room air conditioner (RAC)). The refrigeration cycle device may be an air conditioner in which a plurality of indoor units are connected to one or more outdoor units (so-called package air conditioner (PAC), a variable refrigerant flow system (VRF)), or may be a refrigeration or refrigerating device such as a refrigerator or freezer, and is not limited to air conditioners.

**In** one variation, abnormality notifications such as first to seventh abnormality notifications may be issued directly or indirectly. Direct issuing means that the air conditioner outputs directly using the outdoor unit 1a, indoor unit 1b, or remote controller or the like. For example, abnormality notifications may be output using light from a light source device (LEDs, red lamps, warning display lamps, etc.) provided in the outdoor unit 1a, indoor unit 1b, or remote controller of the air conditioner; sound from a sound generation device (speakers, buzzers, alarms, sounders, alarm devices, etc.); or visual displays (message displays, backlight blinking, etc.) from a display device (displays, display panels, etc.). Indirect issuing means outputting and/or saving externally via a communications network such as the Internet or a server. Examples of indirect issuing include push notifications (notifications to mobile phones or smartphones), notifications to voice assistants (Alexa Echo, Google Home, etc.), automatic notifications to the manufacturer or maintenance company, message delivery to monitoring equipment of a management company, notifications to a service center, reports to fire trucks or security companies, and recording in an abnormality history of memory devices.

**In** one variation, when performing diagnosis of abnormalities of the refrigeration cycle circuit 2, the control device 3 may obtain various index values (state values). For example, the index values used in diagnosis of abnormalities of the refrigeration cycle circuit 2 may include suction pressure/evaporation saturation temperature, discharge pressure/condensation saturation temperature, suction gas refrigerant temperature, discharge gas refrigerant temperature, condenser outlet refrigerant temperature, evaporator inlet refrigerant temperature, evaporator outlet refrigerant temperature, load-side supply air temperature, receiver liquid level height, pre-discharge sign detection count, discharge plasma detection count, leakage current detection count, cumulative discharge reaction product amount, warning issue count, operation limitation count, and operation interruption count. **In** particular, it is preferable to adopt as diagnostic items whether the pre-discharge sign count has increased compared to the previous time, whether the plasma detection count has increased compared to the previous time, whether the leakage current detection count has increased compared to the previous time, whether the cumulative product amount has increased compared to the previous time, and whether the cumulative product amount exceeds a predetermined value. The diagnosis results by the control device 3 are preferably stored for a predetermined period (for example, 1 to 3 years or longer) in an internal memory of the control device 3 or an external server or the like. Similarly, the history of abnormality notifications by the control device 3 is preferably stored for a predetermined period (for example, 1 to 3 years or longer) in an internal memory of the control device 3 or an external server or the like.

### [3. ASPECTS]

As apparent from the above embodiments 1 to 10 and variations, the present disclosure includes the following aspects.

### [Aspect 1]

A control method for a refrigeration cycle circuit allowing circulation of a working medium containing a refrigerant component capable of undergoing a disproportionation reaction, comprising interrupting or limiting an operation of the refrigeration cycle circuit in response to detecting a sign of the disproportionation reaction based on at least one of a first state regarding a drive circuit for driving a compressor of the refrigeration cycle circuit or a second state regarding the working medium.

### [Aspect 2]

The control method of aspect 1, wherein:
the second state is a temperature [K] of the working medium at a portion of the refrigeration cycle circuit; and
the sign of the disproportionation reaction is that the temperature [K] of the working medium at the portion of the refrigeration cycle circuit becomes at least ten times higher than a maximum value [K] within a temperature range during a rated operation.

### [Aspect 3]

The control method of aspect 1, wherein:
the second state is a temperature [K] of the working medium at a portion of the refrigeration cycle circuit; and
the sign of the disproportionation reaction is that the temperature [K] of the working medium at the portion of the refrigeration cycle circuit becomes equal to or larger than 2000 K.

### [Aspect 4]

The control method of aspect 1, comprising determining a number of light emissions from the working medium at the compressor based on the second state,
wherein the sign of the disproportionation reaction is that the number of light emissions from the working medium is equal to or larger than a predetermined number of times.

### [Aspect 5]

The control method of aspect 1, comprising determining an index value of an amount of a product produced from the working medium by the disproportionation reaction, based on the second state,
wherein the sign of the disproportionation reaction is that the amount of the product or an increase in the amount of the product during a predetermined period is equal to or larger than a predetermined amount.

### [Aspect 6]

The control method of aspect 5, wherein:
the product includes at least one of an intermediate product or a final product;
the intermediate product is a thermodynamically unstable chemical species; and
the final product is a thermodynamically stable chemical species.

### [Aspect 7]

The control method of aspect 1, further comprising determining a number of discharge occurrences in the compressor, based on the first state,
wherein the sign of the disproportionation reaction is that the number of the discharge occurrences is equal to or larger than a predetermined number of times.

### [Aspect 8]

A control device for controlling a refrigeration cycle circuit allowing circulation of a working medium containing a refrigerant component capable of undergoing a disproportionation reaction, comprising:
a drive circuit configured to drive a compressor of the refrigeration cycle circuit; and
a control circuit configured to interrupt or limit an operation of the refrigeration cycle circuit in response to detecting a sign of the disproportionation reaction based on at least one of a first state regarding a drive circuit for driving the compressor of the refrigeration cycle circuit or a second state regarding the working medium.

### [Aspect 9]

The control device of aspect 8, wherein:
the drive circuit includes a converter circuit configured to output DC output power so that a voltage of the DC output power is equal to a first voltage, based on input power from a power supply, and an inverter circuit configured to output AC output power to the compressor of the refrigeration cycle circuit, based on the DC output power;
the control device comprises a voltage detector configured to detect the DC output power to output a detection voltage indicative of the voltage of the DC output power, as the first state;
the control circuit is configured to determine a number of discharge occurrences in the compressor by a number of times that the detection voltage falls below a second voltage equal to or smaller than the first voltage; and
the sign of the disproportionation reaction is that a number of the discharge occurrences is equal to or larger than a predetermined number of times.

### [Aspect 10]

The control device of aspect 8, wherein:
the control device includes a light detection device configured to detect light inside a sealed container of the compressor of the refrigeration cycle circuit to output an intensity of the light as the second state;
the control circuit is configured to determine a number of light emissions from the working medium at the compressor based on a number times the intensity of the light exceeds a threshold value of the light; and
the sign of the disproportionation reaction is that the number of the light emissions from the working medium is equal to or larger than a predetermined number of times.

### [Aspect 11]

The control device of aspect 8, wherein:
the control device comprises a light detection device configured to receive light by way of an inside of the refrigeration cycle circuit to output an intensity of the light received, as the second state;
the control circuit is configured to determine an index value of an amount of a product produced from the working medium by the disproportionation reaction, based on the intensity of the light; and
the sign of the disproportionation reaction is that an amount of the product or an increase in the amount of the product during a predetermined period is equal to or larger than a predetermined amount.

### [Aspect 12]

The control device of aspect 8, wherein:
the refrigeration cycle circuit includes a phosphor containing a fluorescent dye;
the control device comprises a light detection device configured to detect light with a wavelength corresponding to a fluorescence wavelength of the fluorescent dye to output the intensity of the light detected, as the second state;
the control circuit is configured to determine an index value of an amount of a product produced from the working medium by the disproportionation reaction, based on the intensity of the light output from the light detection device; and
the sign of the disproportionation reaction is an amount of the product or an increase in the amount of the product during a predetermined period is equal to or larger than a predetermined amount.

### [Aspect 13]

The control device of aspect 8, wherein:
the refrigeration cycle circuit includes a light absorber containing a dye;
the control device comprises a light detection device configured to receive light with a wavelength band containing an absorption wavelength of the dye to output an intensity of the light received, as the second state;
the control circuit is configured to determine an index value of an amount of a product produced from the working medium by the disproportionation reaction, based on the intensity of the light output from the light detection device; and
the sign of the disproportionation reaction is that an amount of the product or an increase in the amount of the product during a predetermined period is equal to or larger than a predetermined amount.

### [Aspect 14]

A refrigeration cycle device comprising:
the control device of any one of aspects 8 to 13; and
the refrigeration cycle circuit.

### [Aspect 15]

The refrigeration cycle device of aspect 14, wherein the refrigerant component contains ethylene-based fluoroorefin.

### [Aspect 16]

The refrigeration cycle device of aspect 15, wherein the ethylene-based fluoroolefin contains ethylene-based fluoroolefin likely to undergo a disproportionation reaction.

### [Aspect 17]

The refrigeration cycle device of aspect 15 or 16, wherein the ethylene-based fluoroolefin is 1,1,2-trifluoroethylene, trans-1,2-difluoroethylene, cis-1,2-difluoroethylene, 1,1-difluoroethylene, tetrafluoroethylene, or monofluoroethylene.

### [Aspect 18]

The refrigeration cycle device of any one of aspects 15 to 17, wherein the working medium contains difluoromethane as the refrigerant component.

### [Aspect 19]

The refrigeration cycle device of any one of aspects 15 to 18, wherein the working medium further contains a saturated hydrocarbon.

### [Aspect 20]

The refrigeration cycle device of any one of aspects 15 to 19, wherein the working medium contains a haloalkane with 1 or 2 carbon atoms as a disproportionation inhibitor for suppressing a disproportionation reaction of the ethylene-based fluoroolefin.

### [Aspect 21]

The refrigeration cycle device of aspect 19, wherein the saturated hydrocarbon contains n-propane.

### [Aspect 22]

A program executable by a computer system included in a control device for controlling a refrigeration cycle circuit allowing circulation of a working medium containing a refrigerant component capable of undergoing a disproportionation reaction, the program enabling the computer system to perform a process of interrupting or limiting an operation of the refrigeration cycle circuit in response to detecting a sign of the disproportionation reaction based on at least one of a first state regarding a drive circuit for driving a compressor of the refrigeration cycle circuit or a second state regarding the working medium.

Aspects 2 to 7, 9 to 13, and 15 to 21 are optional and are not essential. Aspects 2 to 7, 9 to 13, and 15 to 21 can be combined with aspect 22 appropriately.

As apparent from above embodiment 1 and variations, the present disclosure includes the following aspects.

### [Aspect 31]

A control device for controlling a compressor of a refrigeration cycle circuit allowing circulation of a working medium,
the working medium containing ethylene-based fluoroolefin as a refrigerant component, and
the control device comprising
   a drive circuit includes a converter circuit configured to output DC output power so that a voltage of the DC output power is equal to a first voltage, based on input power from a power supply, and an inverter circuit configured to output AC output power to the electric motor of the refrigeration cycle circuit, based on the DC output power,
   a voltage detector configured to detect the DC output power to output a detection voltage indicative of the voltage of the DC output power, and
   a control circuit configured to interrupt or limit an operation of the drive circuit when the detection voltage falls below a second voltage equal to or smaller than the first voltage.

### [Aspect 32]

The control device of aspect 31, wherein interrupting the operation of the drive circuit includes at least one of interrupting outputting the AC output power, interrupting outputting the DC output power, or interrupting inputting the input power.

### [Aspect 33]

The control device of aspect 31 or 32, wherein limiting the operation of the drive circuit includes at least one of decreasing a setting value of an amplitude of the AC output power, or, decreasing a setting value of a frequency of the AC output power.

### [Aspect 34]

The control device of any one of aspects 31 to 33, wherein the control circuit is configured to interrupt or limit the operation of the drive circuit in a different way depending on a time difference between first time when the detection voltage falls below the second voltage and second time when the detection voltage falls below the second voltage.

### [Aspect 35]

The control device of any one of aspects 31 to 34, wherein the control circuit is configured to interrupt or limit the operation of the drive circuit in a different way depending on a number of times that the detection voltage falls below the second voltage.

### [Aspect 36]

The control device of any one of aspects 31 to 35, wherein the control circuit is configured to
interrupt outputting the AC output power when the detection voltage falls below the second voltage, and
restart outputting the AC output power after first waiting period has elapsed after interruption of outputting the AC output power.

### [Aspect 37]

The control device of aspect 36, wherein the control circuit is configured to
interrupt outputting the AC output power when the detection volage falls below the second voltage before predetermined time elapses after the restart of outputting the AC output power after the first waiting period has elapsed, and
restart outputting the AC output power when second waiting period longer than the first waiting period has elapsed after interruption of outputting the AC output power.

### [Aspect 38]

The control device of aspects 37, wherein the control circuit is configured to
interrupt outputting the AC output power and decrease at least one of a setting value of an amplitude or a setting value of a frequency of the AC output power when the detection volage falls below the second voltage before predetermined time elapses after the restart of outputting the AC output power after the second waiting period has elapsed, and
restart outputting the AC output power while keeping decreasing at least one of the setting value of the amplitude or the setting value of the frequency of the AC output power, when third waiting period longer than the second waiting period has elapsed after interruption of outputting the AC output power.

### [Aspect 39]

The control device of aspect 38, wherein the control circuit is configured to
end decreasing at least one of the setting value of the amplitude or the setting value of the frequency of the AC output power when the detection voltage does not fall below the second voltage during monitoring period after the restart of outputting the AC output power after the third waiting period has elapsed, and
interrupt outputting the AC output power and interrupt at least one of outputting the DC output power or inputting the input power when the detection voltage falls below the second voltage before the monitoring period elapses after the restart of outputting the AC output power after the third waiting period has elapsed.

### [Aspect 40]

The control device of aspect 36, wherein the control circuit is configured to
interrupt outputting the AC output power and decrease at least one of a setting value of an amplitude or a setting value of a frequency of the AC output power when the detection volage falls below the second voltage before predetermined time elapses after the restart of outputting the AC output power after the first waiting period has elapsed, and
restart outputting the AC output power while keeping decreasing at least one of the setting value of the amplitude or the setting value of the frequency of the AC output power, when fourth waiting period has elapsed after interruption of outputting the AC output power.

### [Aspect 41]

The control device of aspect 40, wherein the control circuit is configured to
end decreasing at least one of the setting value of the amplitude or the setting value of the frequency of the AC output power when the detection voltage does not fall below the second voltage during monitoring period after the restart of outputting the AC output power after the fourth waiting period has elapsed, and
interrupt outputting the AC output power and interrupt at least one of outputting the DC output power or inputting the input power when the detection voltage falls below the second voltage before the monitoring period elapses after the restart of outputting the AC output power after the fourth waiting period has elapsed.

### [Aspect 42]

The control device of aspect 36, wherein the control circuit is configured to interrupt outputting the AC output power and interrupt at least one of outputting the DC output power or inputting the input power when the detection voltage falls below the second voltage before predetermined time elapses after the restart of outputting the AC output power after the first waiting period has elapsed.

### [Aspect 43]

The control device of any one of aspects 31 to 42, wherein

The second voltage is between 0.3 times and 0.8 times the rated voltage, inclusive.

### [Aspect 44]

The control device of any one of aspects 31 to 43, wherein:
the compressor includes
   a sealed container constituting a fluidic pathway for the working medium,
   a compression mechanism positioned inside the sealed container to compress the working medium, and
   an electric motor positioned inside the sealed container to operate the compression mechanism; and
the inverter circuit is configured to output the AC output power to the electric motor.

### [Aspect 45]

A refrigeration cycle device comprising:
the control device of any one of aspects 31 to 34; and
the refrigeration cycle circuit.

### [Aspect 46]

A control method performed by a control device for controlling a compressor of a refrigeration cycle circuit allowing circulation of a working medium,
the working medium containing ethylene-based fluoroolefin as a refrigerant component,
the control device including a drive circuit includes a converter circuit configured to output DC output power so that a voltage of the DC output power is equal to a first voltage, based on input power from a power supply, and an inverter circuit configured to output AC output power to the electric motor of the refrigeration cycle circuit, based on the DC output power, and
the control method including interrupting or limiting an operation of the drive circuit when a voltage of the DC output power falls below a second voltage equal to or smaller than the first voltage.

### [Aspect 47]

A program executed by a computer system included in a control device for controlling a compressor of a refrigeration cycle circuit allowing circulation of a working medium,
the working medium containing ethylene-based fluoroolefin as a refrigerant component,
the control device including a drive circuit includes a converter circuit configured to output DC output power so that a voltage of the DC output power is equal to a first voltage, based on input power from a power supply, and an inverter circuit configured to output AC output power to the electric motor of the refrigeration cycle circuit, based on the DC output power, and
the program enabling the computer system to interrupt or limit an operation of the drive circuit when a voltage of the DC output power falls below a second voltage equal to or smaller than the first voltage.

Aspects 32 to 44 are optional and not essential. Aspects 32 to 44 can be combined with aspect 46 or 47 appropriately. Aspects 16 to 21 can be combined with aspects 4 to 47 appropriately.

As apparent from above embodiments 2o 4 and variations, the present disclosure includes the following aspects.

### [Aspect 51]

A control device for controlling a compressor of a refrigeration cycle circuit allowing circulation of a working medium,
the working medium containing ethylene-based fluoroolefin as a refrigerant component,
the compressor including
   a sealed container constituting a fluidic pathway for the working medium,
   a compression mechanism positioned inside the sealed container to compress the working medium, and
   an electric motor positioned inside the sealed container to operate the compression mechanism, and
the control device comprising
   a drive circuit configured to drive the electric motor,
   a light detection device configured to detect light inside the sealed container to output an intensity of the light, and
   a control circuit configured to interrupt or limit an operation of the drive circuit when the intensity of the light exceeds a threshold value for the light.

### [Aspect 52]

The control device of aspect 51, wherein:
the light detection device includes a plurality of light detectors configured to detect light inside the sealed container; and
the plurality of light detectors are located on at least one of a first end or a second end of the electric motor in a direction of its rotational axis inside the sealed container.

### [Aspect 53]

The control device of aspect 51, wherein:
the compressor includes a light guide for guiding light inside the sealed container toward an outside of the sealed container; and
the light detection device is located outside the sealed container to detect light guided by the light guide from an inside of the sealed container.

### [Aspect 54]

The control device of any one of aspects 51 to 53, wherein the light detection device includes at least one of a PN-type photodiode, a PIN-type photodiode, or avalanche photodiode.

### [Aspect 55]

The control device of any one of aspects 51 to 54, wherein the light has a wavelength that is longer than 600 nm and is equal to or shorter than 2000 nm.

### [Aspect 56]

The control device of any one of aspects 51 to 54, wherein a wavelength of the light falls within a wavelength region of near infrared.

### [Aspect 57]

The control device of any one of aspects 51 to 54, wherein a wavelength of the light falls within a wavelength region of a reaction fireball generated inside the sealed container.

### [Aspect 58]

The control device of any one of aspects 51 to 54, wherein the light has a wavelength between 200 nm and 600 nm, inclusive.

### [Aspect 59]

The control device of any one of aspects 51 to 54, wherein a wavelength of the light is included in wavelength region including near ultraviolet and visible light.

### [Aspect 60]

The control device of aspect 51, wherein a wavelength of the light falls within a wavelength region of plasma generated inside the sealed container.

### [Aspect 61]

The control device of any one of aspects 51 to 60, wherein the threshold value for the light is equal to or larger than three times the intensity of the light obtained from the light detection device during a rated operation of the electric motor.

### [Aspect 62]

The control device of any one of aspects 51 to 61, wherein:
the drive circuit includes
   a converter circuit configured to output DC output power based on input power from a power supply, and
   an inverter circuit configured to output AC output power to the electric motor based on the DC output power;
interrupting the operation of the drive circuit includes at least one of interrupting outputting the AC output power, interrupting outputting the DC output power, or, interrupting inputting the input power; and
limiting the operation of the drive circuit includes at least one of decreasing a setting value of amplitude of the AC output power, or, decreasing a setting value of a frequency of the AC output power.

### [Aspect 63]

The control device of aspect 62, wherein
the control circuit is configured to
limit the operation of the drive circuit when the intensity of the light exceeds the threshold value for the light
interrupt the operation of the drive circuit when the intensity of the light exceeds a determination value lower than the threshold value for the light before a monitoring period elapses after limit of the operation of the drive circuit;
cancel limiting the operation of the drive circuit when the intensity of the light does not exceed the determination value until the monitoring period elapses after limit of the operation of the drive circuit.

### [Aspect 64]

The control device of any one of aspects 51 to 63, wherein:
the light includes first light with a wavelength that is longer than 600 nm but is not longer than 2000 nm and second light with a wavelength between 200 nm and 600 nm, inclusive; and
the control circuit is configured to interrupt or limit the operation of the drive circuit in different ways depending on whether an intensity of the first light exceeds a threshold value for the first light or an intensity of the second light exceeds a threshold value for the second light.

### [Aspect 65]

The control device of any one of aspects 51 to 63, wherein:
the light includes first light with a wavelength that is longer than 600 nm but is not longer than 2000 nm and second light with a wavelength between 200 nm and 600 nm, inclusive;
a threshold value for the first light includes a first threshold value, a second threshold value smaller than the first threshold value, and a third threshold value that is smaller than the second threshold value but is larger than a detection lower limit of the first light;
a threshold value for the second light includes a fourth threshold value, and a fifth threshold value that is smaller than the fourth threshold value but is larger than a detection lower limit of the second light; and
the control circuit is configured to
   interrupt the operation of the drive circuit when an intensity of the first light exceeds the first threshold value,
   interrupt the operation of the drive circuit when the intensity of the first light exceeds the second threshold value and when an intensity of the second light exceeds the fifth threshold value,
   interrupt the operation of the drive circuit when the intensity of the first light exceeds the third threshold value and when an intensity of the second light exceeds the fourth threshold value,
   limit the operation of the drive circuit when the intensity of the first light exceeds the third threshold value and when the intensity of the second light exceeds the fifth threshold value,
   limit the operation of the drive circuit when the intensity of the first light does not exceed the third threshold value and when the intensity of the second light exceeds the fifth threshold value.

### [Aspect 66]

A refrigeration cycle device comprising:
the control device of any one of aspects 51 to 65; and
the refrigeration cycle circuit.

### [Aspect 67]

A control method performed by a control device for controlling a compressor of a refrigeration cycle circuit allowing circulation of a working medium,
the working medium containing ethylene-based fluoroolefin as a refrigerant component,
the compressor including
   a sealed container constituting a fluidic pathway for the working medium,
   a compression mechanism positioned inside the sealed container to compress the working medium, and
   an electric motor positioned inside the sealed container to operate the compression mechanism,
the control device including a drive circuit configured to drive the electric motor, and
the control method comprising interrupting or limiting an operation of the drive circuit when an intensity of light inside the sealed container exceeds a threshold value for the light.

### [Aspect 68]

A program executed by a computer system included in a control device for controlling a compressor of a refrigeration cycle circuit allowing circulation of a working medium,
the working medium containing ethylene-based fluoroolefin as a refrigerant component,
the compressor including
   a sealed container constituting a fluidic pathway for the working medium,
   a compression mechanism positioned inside the sealed container to compress the working medium, and
   an electric motor positioned inside the sealed container to operate the compression mechanism,
the control device including a drive circuit configured to drive the electric motor, and
the program enabling the computer system to interrupt or limit an operation of the drive circuit when an intensity of light inside the sealed container exceeds a threshold value for the light.

Aspects 52 to 65 are optional and not essential. Aspects 52 to 65 can be combined with aspect 67 or 68 appropriately. Aspects 16 to 21 can be combined with aspects 66 to 68 appropriately.

As apparent from above embodiment 5 and variations, the present disclosure includes the following aspects.

### [Aspect 71]

A refrigeration cycle device comprising:
a refrigeration cycle circuit allowing circulation of a working medium;
a light source device configured to emit light to an inside of the refrigeration cycle circuit; and
a light detection device configured to receive the light to output an intensity of the light received.

### [Aspect 72]

The refrigeration cycle device of aspect 71, wherein:
the light source device is configured to emit light to the working medium; and
the light detection device is configured to receive light passing through the working medium.

### [Aspect 73]

The refrigeration cycle device of aspect 72, wherein the light source device is configured to emit the light to the working medium present in a compressor of the refrigeration cycle circuit.

[Aspect 74] The refrigeration cycle device of aspect 73, wherein:
the compressor includes a suction pipe for the working medium, a discharge pipe for the working medium, and an electric motor located between the suction pipe and the discharge pipe; and
the light source device is configured to emit the light to part of the working medium present in a region between the electric motor and the suction pipe.

### [Aspect 75]

The refrigeration cycle device of any one of aspects 71 to 74, wherein:
the light detection device includes a first light detector and a second light detector; and
a light receiving region of the first light detector is larger than a light receiving region of the second light detector.

### [Aspect 76]

The refrigeration cycle device of any one of aspects 71 to 75, further comprising a bubble removing mechanism which is located closer to an upstream side than a part of the refrigeration cycle circuit irradiated by the light source device with the light to remove or break up bubbles within the working medium.

### [Aspect 77]

The refrigeration cycle device of any one of aspects 71 to 76, wherein:
the light source device is configured to emit a plurality of rays of the light with different wavelength bands;
the light detection device is configured to receive the plurality of rays of the light to output intensities of the plurality of rays of the light received.

### [Aspect 78]

The refrigeration cycle device of any one of aspects 71 to 77, further comprising a control circuit configured to control an operation of the refrigeration cycle circuit,
the control circuit being configured to interrupt or limit the operation of the refrigeration cycle circuit when the intensity of the light output from the light detection device satisfies a predetermined condition.

### [Aspect 79]

The refrigeration cycle device of aspect 78, wherein the control circuit is configured to make a rotational speed of a compressor of the refrigeration cycle circuit during at least a portion of a time period when the light detection device receives the light, smaller than a maximum value of the rotational speed during a time period when the light detection device does not receive the light.

### [Aspect 80]

The refrigeration cycle device of aspect 78 or 79, wherein the predetermined condition is that an index value of the intensity of the light is not greater than 95% of an index value of the intensity of the light at an initial rated operation state.

### [Aspect 81]

The refrigeration cycle device of aspect 78 or 79, wherein the predetermined condition is that a ratio of an index value of the intensity of the light at a second time point after predetermined time from a first time point, to an index value of the intensity of the light at the first time point is 95% or less.

### [Aspect 82]

A light detection circuit for a refrigeration cycle circuit allowing circulation of a working medium, comprising:
a light source device configured to emit light to an inside of the refrigeration cycle circuit; and
a light detection device configured to receive the light to output an intensity of the light received.

### [Aspect 83]

A control device comprising:
the light detection circuit of aspect 82; and
a control circuit configured to control an operation of the refrigeration cycle circuit,
the control circuit being configured to interrupt or limit the operation of the refrigeration cycle circuit when the intensity of the light output from the light detection device of the light detection circuit satisfies a predetermined condition.

### [Aspect 84]

A control method performed by a control device for controlling a refrigeration cycle circuit allowing circulation of a working medium, comprising:
receiving, by a light detection device, light emitted to an inside of the refrigeration cycle circuit to output an intensity of the light received; and
interrupting or limiting an operation of the refrigeration cycle circuit when the intensity of the light output from the light detection device satisfies a predetermined condition.

### [Aspect 85]

The control method of aspect 84, wherein:
the light detection device includes a first light detector and a second light detector;
a light receiving region of the first light detector is larger than a light receiving region of the second light detector; and
the control method comprises
   correcting an index value of the intensity of the light output from the light detection device based on a difference between an intensity of the light output from the first light detector and an intensity of the light output from the second light detector, and
   interrupting or limiting the operation of the refrigeration cycle circuit when the corrected index value of the intensity of the light satisfies the predetermined condition.

### [Aspect 86]

A program executed by a computer system included in a control device for controlling a refrigeration cycle circuit allowing circulation of a working medium, comprising:
receiving, by a light detection device, light emitted to an inside of the refrigeration cycle circuit to output an intensity of the light received; and
interrupting or limiting an operation of the refrigeration cycle circuit when the intensity of the light output from the light detection device satisfies a predetermined condition.

### [Aspect 87]

The program of aspect 86, wherein:
the light detection device includes a first light detector and a second light detector;
a light receiving region of the first light detector is larger than a light receiving region of the second light detector; and
the program comprises
   correcting an index value of the intensity of the light output from the light detection device based on a difference between an intensity of the light output from the first light detector and an intensity of the light output from the second light detector, and
   interrupting or limiting the operation of the refrigeration cycle circuit when the corrected index value of the intensity of the light satisfies the predetermined condition.

Aspects 72 to 81 are optional and not essential. Aspects 72 to 81 can be combined with aspect 84 or 86 appropriately. Aspects 16 to 21 can be combined with aspects 71 to 83 appropriately.

As apparent from above embodiments 6 and 7 and variations, the present disclosure includes the following aspects.

### [Aspect 91]

A refrigeration cycle device comprising:
a refrigeration cycle circuit allowing circulation of a working medium; and
a phosphor located inside the refrigeration cycle circuit to be contactable with the working medium,
the phosphor containing a fluorescent dye with a property of reacting with a product produced by a chemical reaction of the working medium to cause a change in at least one of a fluorescence wavelength or a quantum yield.

### [Aspect 92]

The refrigeration cycle device of aspect 91, wherein the fluorescent dye includes a triarylfluorosilane compound.

### [Aspect 93]

The refrigeration cycle device of aspect 91, wherein:
the fluorescent dye is a compound having a structure in which an acceptor group and a donor group are combined;
the acceptor group is selected from the group consisting of: a compound having a structure in which two or more amino groups are connected via one or two methylene groups, a compound having a structure in which two or more pyrrole groups or indole groups are connected via two methylene groups, benzamide, bis(methylidene)hydrazine, and calixarene; and
the donor group is selected from a group consisting of anthracene, naphthalimide, pyrene, BODIPY, fluorescein, rhodamine, resorufin, coumarin, and cyanine.

### [Aspect 94]

The refrigeration cycle device of any one of aspects 91 to 93, wherein the phosphor is a refrigerating machine oil in which the fluorescent dye is dissolved.

### [Aspect 95]

The refrigeration cycle device of any one of aspects 91 to 93, wherein the phosphor is a support carrying the fluorescent dye.

### [Aspect 96]

The refrigeration cycle device of aspect 95, wherein the support includes a porous material.

### [Aspect 97]

The refrigeration cycle device of any one of aspects 91 to 96, further comprising:
a light source device configured to emit excitation light with a wavelength corresponding to an excitation wavelength of the fluorescent dye, to an inside of the refrigeration cycle circuit; and
a light detection device configured to detect light with a wavelength corresponding to the fluorescence wavelength of the fluorescent dye to output an intensity of detected light.

### [Aspect 98]

The refrigeration cycle device of aspect 97, wherein the light source device is configured to emit the excitation light to an inside of a compressor or a portion between a discharge pipe and a condenser of the refrigeration cycle circuit.

### [Aspect 99]

The refrigeration cycle device of aspect 97 or 98, further comprising a control device configured to control an operation of the refrigeration cycle circuit,
the control circuit being configured to interrupt or limit the operation of the refrigeration cycle circuit when the intensity of the light output from the light detection device satisfies a predetermined condition.

### [Aspect 100]

The refrigeration cycle device of aspect 99, wherein:
a reaction between the fluorescent dye and the product causes an increase in amount of light with the fluorescence wavelength; and
the predetermined condition is that a ratio of an index value of the intensity of the light at a second time point after predetermined time from a first time point, to an index value of the intensity of the light at the first time point is **110%** or more.

### [Aspect 101]

The refrigeration cycle device of aspect 99, wherein:
a reaction between the fluorescent dye and the product causes a decrease in amount of light with the fluorescence wavelength; and
the predetermined condition is that a ratio of an index value of the intensity of the light at a second time point after predetermined time from a first time point, to an index value of the intensity of the light at the first time point is 90% or less.

### [Aspect 102]

A light detection method for a refrigeration cycle circuit allowing circulation of a working medium, comprising:
emitting, to a phosphor which contains a fluorescent dye and is located inside the refrigeration cycle circuit to be contactable with the working medium, an excitation light with a wavelength corresponding to an excitation wavelength of the fluorescent dye; and
detecting light with a wavelength corresponding to the fluorescence wavelength of the fluorescent dye to output an intensity of detected light.

### [Aspect 103]

A control method performed by a control device for controlling a refrigeration cycle circuit which allows circulation of a working medium and inside which a phosphor containing a fluorescent dye exists,
the control device including a light detection device,
the control method comprising:
   by the light detection device, detecting light with a wavelength corresponding to a fluorescence wavelength of the fluorescent dye to output an intensity of light detected; and
   interrupting or limiting an operation of the refrigeration cycle circuit when the intensity of the light output from the light detection device satisfies a predetermined condition.

### [Aspect 104]

A program executed by a computer system included in a control device for controlling a refrigeration cycle circuit which allows circulation of a working medium and inside which a phosphor containing a fluorescent dye exists,
the control device including a light detection device,
the program comprising:
   by the light detection device, detecting light with a wavelength corresponding to a fluorescence wavelength of the fluorescent dye to output an intensity of light detected; and
   interrupting or limiting an operation of the refrigeration cycle circuit when the intensity of the light output from the light detection device satisfies a predetermined condition.

Aspects 92 to 101 are optional and not essential. Aspects 92 to 101 can be combined with aspects 102 to 104 appropriately. Aspects 16 to 21 can be combined with aspects 91 to 101 appropriately.

As apparent from above embodiments 8 and 9 and variations, the present disclosure includes the following aspects.

### [Aspect 111]

A refrigeration cycle device comprising:
a refrigeration cycle circuit allowing circulation of a working medium; and
a light absorber located inside the refrigeration cycle circuit to be contactable with the working medium,
the light absorber containing a dye with a property of reacting with a product produced by a chemical reaction of the working medium to cause a change in an absorbance.

### [Aspect 112]

The refrigeration cycle device of aspect 111, wherein the dye includes a nickel complex.

### [Aspect 113]

The refrigeration cycle device of aspect 111, wherein the dye includes a boron compound having an aromatic substituent.

### [Aspect 114]

The refrigeration cycle device of any one of aspects 111 to 113, wherein the light absorber is a refrigerating machine oil in which the dye is dissolved.

### [Aspect 115]

The refrigeration cycle device of any one of aspects 111 to 113, wherein the light absorber is a support carrying the dye.

### [Aspect 116]

The refrigeration cycle device of aspect 115, wherein the support includes a porous material.

### [Aspect 117]

The refrigeration cycle device of any one of aspects 111 to 116, further comprising:
a light source device configured to emit light with a wavelength band containing an absorption wavelength of the dye to an inside of the refrigeration cycle circuit; and
a light detection device configured to receive the light to output an intensity of the light received.

### [Aspect 118]

The refrigeration cycle device of aspect 117, wherein the wavelength band contains an absorption maximum wavelength of the dye.

### [Aspect 119]

The refrigeration cycle device of aspect 117 or 118, wherein:
the light source device is configured to emit a plurality of rays of the light with different wavelength bands; and
the light detection device is configured to receive the plurality of rays of the light to output intensities of the plurality of rays of the light received.

### [Aspect 120]

The refrigeration cycle device of any one of aspects 117 to 119, wherein the light source device is configured to emit the light to at least one of an inside of a compressor or a portion between a discharge pipe and a condenser of the refrigeration cycle circuit.

### [Aspect 121]

The refrigeration cycle device of any one of aspects 117 to 120, comprising a control circuit configured to control an operation of the refrigeration cycle circuit,
the control circuit being configured to interrupt or limit the operation of the refrigeration cycle circuit when the intensity of the light output from the light detection device of the light detection circuit satisfies a predetermined condition.

### [Aspect 122]

The refrigeration cycle device of aspect 121, wherein:
the wavelength band contains an absorption wavelength at which a reaction between the dye and the product causes a decrease in the absorbance of the dye; and
the predetermined condition is that a ratio of an index value of the intensity of the light at a second time point after predetermined time from a first time point, to an index value of the intensity of the light at the first time point is 110% or more.

### [Aspect 123]

The refrigeration cycle device of aspect 121, wherein:
the wavelength band contains an absorption wavelength at which a reaction between the dye and the product causes an increase in the absorbance of the dye; and
the predetermined condition is that a ratio of an index value of the intensity of the light at a second time point after predetermined time from a first time point, to an index value of the intensity of the light at the first time point is 90% or less.

### [Aspect 124]

A light detection method for a refrigeration cycle circuit allowing circulation of a working medium, comprising:
emitting, by a light source device, to a light absorber which contains a dye and is located inside the refrigeration cycle circuit to be contactable with the working medium, light with a wavelength band containing an absorption wavelength of the dye, and
receiving, by a light detection device, the light to output an intensity of the light received,
the dye having a property of reacting with a product produced by a chemical reaction of the working medium to cause a change in an absorbance.

### [Aspect 125]

A control method performed by a control device for controlling a refrigeration cycle circuit allowing circulation of a working medium, comprising:
emitting, to a light absorber which contains a dye and is located inside the refrigeration cycle circuit to be contactable with the working medium, light with a wavelength band containing an absorption wavelength of the dye;
receiving light with the wavelength band containing the absorption wavelength of the dye to output an intensity of the light received; and
interrupting or limiting an operation of the refrigeration cycle circuit when the intensity of the light output from the light detection device satisfies a predetermined condition.

### [Aspect 126]

A program performed by a computer system included in a control device for controlling a refrigeration cycle circuit allowing circulation of a working medium, comprising:
emitting, to a light absorber which contains a dye and is located inside the refrigeration cycle circuit to be contactable with the working medium, light with a wavelength band containing an absorption wavelength of the dye;
receiving light with the wavelength band containing the absorption wavelength of the dye to output an intensity of the light received; and
interrupting or limiting an operation of the refrigeration cycle circuit when the intensity of the light output from the light detection device satisfies a predetermined condition.

Aspects 112 to 123 are optional and not essential. Aspects 112 to 123 can be combined with aspect 124 or 126 appropriately. Aspects 16 to 21 can be combined with aspects 111 to 123 appropriately.

### INDUSTRIAL APPLICABILITY

The present disclosure can be applied to control methods, control devices, refrigerator cycle devices, and programs. In particular, the present disclosure is applicable to a control method for a refrigeration cycle circuit allowing circulation of a refrigerant component capable of undergoing a disproportionation reaction, a control device of the refrigeration cycle circuit, a refrigeration cycle device including the refrigeration cycle circuit and the control device, and a program (computer program) used in the control device.

### REFERENCE SIGNS LIST

1, 1A, 1B, 1C, 1E Refrigeration Cycle Device
2, 2A, 2B, 2C, 2E Refrigeration Cycle Circuit
3, 3A, 3B, 3C, 3D, 3E, 3F, 3G, 3H, 31 Control Device
4 Compressor
10 Power Supply
20 Working Medium
31 Drive Circuit
32 Voltage Detector
32A Light Detection Device
322B, 322C, 322E Light Detection Device
35, 35A, 35B, 35C, 35E, 35G Control Circuit
311 Converter Circuit
312 Inverter Circuit

## Claims

1. A control method for a refrigeration cycle circuit allowing circulation of a working medium containing a refrigerant component capable of undergoing a disproportionation reaction, comprising interrupting or limiting an operation of the refrigeration cycle circuit in response to detecting a sign of the disproportionation reaction based on at least one of a first state regarding a drive circuit for driving a compressor of the refrigeration cycle circuit or a second state regarding the working medium.

2. The control method of claim 1, wherein:
the second state is a temperature [K] of the working medium at a portion of the refrigeration cycle circuit; and
the sign of the disproportionation reaction is that the temperature [K] of the working medium at the portion of the refrigeration cycle circuit becomes at least ten times higher than a maximum value [K] within a temperature range during a rated operation.

3. The control method of claim 1, wherein:
the second state is a temperature [K] of the working medium at a portion of the refrigeration cycle circuit; and
the sign of the disproportionation reaction is that the temperature [K] of the working medium at the portion of the refrigeration cycle circuit becomes equal to or larger than 2000 K.

4. The control method of claim 1, comprising determining a number of light emissions from the working medium at the compressor based on the second state,
wherein the sign of the disproportionation reaction is that the number of light emissions from the working medium is equal to or larger than a predetermined number of times.

5. The control method of claim 1, comprising determining an index value of an amount of a product produced from the working medium by the disproportionation reaction, based on the second state,
wherein the sign of the disproportionation reaction is that the amount of the product or an increase in the amount of the product during a predetermined period is equal to or larger than a predetermined amount.

6. The control method of claim 5, wherein:
the product includes at least one of an intermediate product or a final product;
the intermediate product is a thermodynamically unstable chemical species; and
the final product is a thermodynamically stable chemical species.

7. The control method of claim 1, further comprising determining a number of discharge occurrences in the compressor, based on the first state,
wherein the sign of the disproportionation reaction is that the number of the discharge occurrences is equal to or larger than a predetermined number of times.

8. A control device for controlling a refrigeration cycle circuit allowing circulation of a working medium containing a refrigerant component capable of undergoing a disproportionation reaction, comprising:
a drive circuit configured to drive a compressor of the refrigeration cycle circuit; and
a control circuit configured to interrupt or limit an operation of the refrigeration cycle circuit in response to detecting a sign of the disproportionation reaction based on at least one of a first state regarding a drive circuit for driving the compressor of the refrigeration cycle circuit or a second state regarding the working medium.

9. The control device of claim 8, wherein:
the drive circuit includes a converter circuit configured to output DC output power so that a voltage of the DC output power is equal to a first voltage, based on input power from a power supply, and an inverter circuit configured to output AC output power to the compressor of the refrigeration cycle circuit, based on the DC output power;
the control device comprises a voltage detector configured to detect the DC output power to output a detection voltage indicative of the voltage of the DC output power, as the first state;
the control circuit is configured to determine a number of discharge occurrences in the compressor by a number of times that the detection voltage falls below a second voltage equal to or smaller than the first voltage; and
the sign of the disproportionation reaction is that a number of the discharge occurrences is equal to or larger than a predetermined number of times.

10. The control device of claim 8, wherein:
the control device includes a light detection device configured to detect light inside a sealed container of the compressor of the refrigeration cycle circuit to output an intensity of the light as the second state;
the control circuit is configured to determine a number of light emissions from the working medium at the compressor based on a number times the intensity of the light exceeds a threshold value of the light; and
the sign of the disproportionation reaction is that the number of the light emissions from the working medium is equal to or larger than a predetermined number of times.

11. The control device of claim 8, wherein:
the control device comprises a light detection device configured to receive light by way of an inside of the refrigeration cycle circuit to output an intensity of the light received, as the second state;
the control circuit is configured to determine an index value of an amount of a product produced from the working medium by the disproportionation reaction, based on the intensity of the light; and
the sign of the disproportionation reaction is that an amount of the product or an increase in the amount of the product during a predetermined period is equal to or larger than a predetermined amount.

12. The control device of claim 8, wherein:
the refrigeration cycle circuit includes a phosphor containing a fluorescent dye;
the control device comprises a light detection device configured to detect light with a wavelength corresponding to a fluorescence wavelength of the fluorescent dye to output the intensity of the light detected, as the second state;
the control circuit is configured to determine an index value of an amount of a product produced from the working medium by the disproportionation reaction, based on the intensity of the light output from the light detection device; and
the sign of the disproportionation reaction is an amount of the product or an increase in the amount of the product during a predetermined period is equal to or larger than a predetermined amount.

13. The control device of claim 8, wherein:
the refrigeration cycle circuit includes a light absorber containing a dye;
the control device comprises a light detection device configured to receive light with a wavelength band containing an absorption wavelength of the dye to output an intensity of the light received, as the second state;
the control circuit is configured to determine an index value of an amount of a product produced from the working medium by the disproportionation reaction, based on the intensity of the light output from the light detection device; and
the sign of the disproportionation reaction is that an amount of the product or an increase in the amount of the product during a predetermined period is equal to or larger than a predetermined amount.

14. A refrigeration cycle device comprising:
the control device of any one of claims 8 to 13; and
the refrigeration cycle circuit.

15. The refrigeration cycle device of claim 14, wherein the refrigerant component contains ethylene-based fluoroolefin.

16. The refrigeration cycle device of claim 15, wherein the ethylene-based fluoroolefin contains ethylene-based fluoroolefin likely to undergo a disproportionation reaction.

17. The refrigeration cycle device of claim 15, wherein the ethylene-based fluoroolefin is 1,1,2-trifluoroethylene, trans-1,2-difluoroethylene, cis-1,2-difluoroethylene, 1,1-difluoroethylene, tetrafluoroethylene, or monofluoroethylene.

18. The refrigeration cycle device of claim 15, wherein the working medium contains difluoromethane as the refrigerant component.

19. The refrigeration cycle device of claim 15, wherein the working medium further contains a saturated hydrocarbon.

20. The refrigeration cycle device of claim 15, wherein the working medium contains a haloalkane with 1 or 2 carbon atoms as a disproportionation inhibitor for suppressing a disproportionation reaction of the ethylene-based fluoroolefin.

21. The refrigeration cycle device of claim 19, wherein the saturated hydrocarbon contains n-propane.

22. A program executable by a computer system included in a control device for controlling a refrigeration cycle circuit allowing circulation of a working medium containing a refrigerant component capable of undergoing a disproportionation reaction, the program enabling the computer system to perform a process of interrupting or limiting an operation of the refrigeration cycle circuit in response to detecting a sign of the disproportionation reaction based on at least one of a first state regarding a drive circuit for driving a compressor of the refrigeration cycle circuit or a second state regarding the working medium.
